(19) Europäisches Patentamt
European Patent Office
Office européen des brevets

(11) EP 4 400 524 A1

(12) # EUROPEAN PATENT APPLICATION
published in accordance with Art. 153(4) EPC

(43) Date of publication:
**17.07.2024 Bulletin 2024/29**

(21) Application number: **22881093.3**

(22) Date of filing: **13.10.2022**

(51) International Patent Classification (IPC):
***C08G 18/16*** (2006.01) ***B29C 59/02*** (2006.01)
***B32B 27/18*** (2006.01) ***C08G 18/38*** (2006.01)
***C08G 75/08*** (2006.01) ***C08L 75/04*** (2006.01)
***C08L 83/12*** (2006.01) ***C09D 175/04*** (2006.01)
***C09J 175/04*** (2006.01) ***G02B 1/04*** (2006.01)
***G02B 1/10*** (2015.01) ***G02B 3/10*** (2006.01)
***G02C 7/00*** (2006.01) ***G02C 7/06*** (2006.01)

(52) Cooperative Patent Classification (CPC):
**B29C 59/02; B32B 27/18; C08G 18/16; C08G 18/38; C08G 75/08; C08L 75/04; C08L 83/12; C09D 175/04; C09J 175/04; G02B 1/04; G02B 1/10; G02B 3/10; G02C 7/00; G02C 7/06**

(86) International application number:
**PCT/JP2022/038275**

(87) International publication number:
**WO 2023/063398 (20.04.2023 Gazette 2023/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.10.2021 JP 2021169814**
**05.08.2022 JP 2022125863**

(71) Applicant: **Mitsui Chemicals, Inc.**
**Tokyo 104-0028 (JP)**

(72) Inventors:
- **RIBEIRO, Nigel**
**Omuta-shi, Fukuoka 836-8610 (JP)**
- **OIKI, Motoharu**
**Tokyo 104-0028 (JP)**

(74) Representative: **Hoffmann Eitle**
**Patent- und Rechtsanwälte PartmbB**
**Arabellastraße 30**
**81925 München (DE)**

(54) **PHOTOCURABLE COMPOSITION, CURED ARTICLE, LAMINATED BODY, METHOD FOR PRODUCING CURED ARTICLE, AND METHOD FOR PRODUCING LENS**

(57) A photocurable composition including a base generator, a polyiso(thio)cyanate compound, and a polythiol compound, in which the base generator includes at least one selected from the group consisting of compounds represented by Formula (1) to Formula (4) In Formulae (1), (3) and (4), each of $R_1$ to $R_4$ independently represents a substituent. In Formula (2), each of $R_1$ to $R_7$ independently represents an alkyl group having from 1 to 8 carbon atoms or a cycloalkyl group having from 3 to 8 carbon atoms, and $R_8$ to $R_{11}$ respectively have the same meanings as in $R_5$ to $R_8$ in Formula (1). In Formula (3), n represents an integer from 1 to 3.

EP 4 400 524 A1

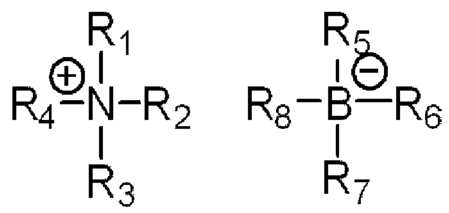

(1)

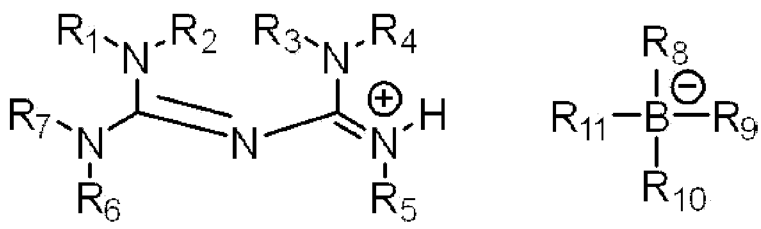

(2)

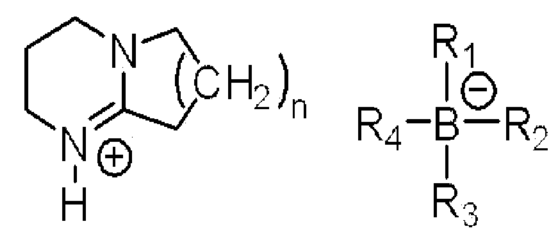

(3)

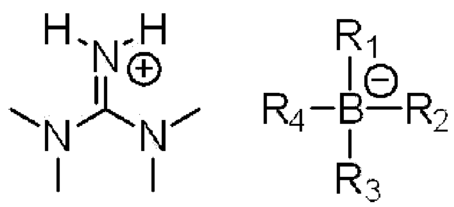

(4)

## Description

### TECHNICAL FIELD

The present disclosure relates to a photocurable composition, a cured product, a laminated body, a method of producing a cured product, and a method of producing a lens.

### BACKGROUND ART

Conventionally, photocurable compositions exhibiting curability have been known, and have been used in various applications. For example, photocurable compositions may be used for optical articles.

Examples of photocurable compositions known include thermosetting compositions to be cured mainly by heat and photocurable compositions to be cured mainly by light.

For example, Patent Document 1 describes a photocurable composition including (A) an episulfide compound and (B) a photo-base generator containing an organoboron compound represented by the following Formula (1).

Patent Document 2 describes an article including a substrate in which the substrate includes glass or ceramic and includes an element M2 and the element M2 is Si or a transition metal, a primer layer on the substrate, in which the primer layer includes an element M1 and an element X, the primer layer is chemically bonded to the substrate by a first chemical bond, the first chemical bond includes the element M1, the element M2, and oxygen, and the first chemical bond has a form of M1-O-M2, and a sulfur-containing coating on the primer layer, in which the coating is chemically bonded to the primer layer by a second chemical bond, the second chemical bond contains the sulfur and the element X, the second chemical bond has a specified form, and the element X is O or S.

Patent Document 3 describes a method of producing an optical element having a refractive index of 1.59 or more.

Patent Document 4 describes a photocurable composition including a component (A): an epoxy compound, a component (B): an acrylate compound, a component (C): an isocyanate compound, a component (D): a photo-base generator, and a component (E): a compound having a thiol group, wherein the component (A) has two or more epoxy groups in one molecule, the component (B) has two or more acryloyl groups in one molecule, the component (C) has two or more isocyanate groups in one molecule, the component (E) has two or more thiol groups in one molecule, and the ratio between the total mass of the component (A), the component (B), the component (C), and the component (D), and the mass of the component (E) satisfies (component (A) + component (B) + component (C) + component (D)): component (E) = 74:26 to 20:80.

For example, Patent Document 5 describes a photocurable composition including (A) an episulfide compound having a thiirane ring and (B) a photo-base generator represented by a specified structure formula.

For example, Patent Document 6 describes a polymerizable composition including a polymerization-reactive compound (A) and a polyether-modified silicone compound (d) including a polyether-modified silicone compound (b1) represented by a specified structure formula and a polyether-modified silicone compound (b2) represented by a specified structure formula, wherein the polymerization-reactive compound (A) is one or two or more selected from a polyiso(thio)cyanate compound, a poly(thio) epoxy compound, a polyoxetanyl compound, a polythietanyl compound, an alkyne compound, a poly(thi)ol compound, a polyamine compound, an acid anhydride, or a polycarboxylic acid compound.

Patent Document 1: International Publication WO 2014-208656
Patent Document 2: Japanese National-Phase Publication (JP-A) No. 2017-528394
Patent Document 3: WO 2020-070253
Patent Document 4: WO 2020-095575
Patent Document 5: WO 2005-014696
Patent Document 6: WO 2018-164194

### SUMMARY OF INVENTION

#### Technical Problem

The present inventors have focused on an application in the optical field, as an application of a photocurable composition.

A resin obtained by curing a photocurable composition may be used in the optical field. Examples of the resin include a thiourethane resin.

While thermosetting compositions have been conventionally generally used in the optical field, photocurable compositions excellent in photocurability have also been demanded to be applied in the optical field.

An object to be achieved by a first embodiment of the disclosure is to provide a photocurable composition which

is excellent in photocurability and which allows for formation of a thiourethane resin, as well as a cured product, a laminated body, a method of producing a cured product, and a method of producing a lens.

An object to be achieved by a second embodiment of the disclosure is to provide a photocurable composition which can allow for formation of a thiourethane resin excellent in transparency and releasability and which is excellent in photocurability, as well as a cured product, a laminated body, a method of producing a cured product, and a method of producing a lens.

Solution to Problem

The disclosure includes the following aspects.

The disclosure includes a first embodiment and a second embodiment.

The first embodiment corresponds to <1> and modes according to <1>, and the second embodiment corresponds to <6> and modes according to <6>.

<1> A photocurable composition, comprising:

a base generator (a);
a polyiso(thio)cyanate compound (b); and
a polythiol compound (c), wherein:

the base generator (a) comprises at least one selected from the group consisting of compounds represented by the following Formulae (1) to (4), and
the polyiso(thio)cyanate compound (b) comprises at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate:

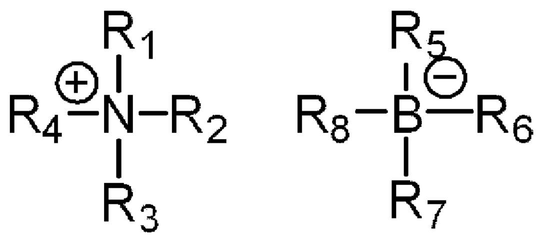

(1)

wherein, in Formula (1), each of $R_1$ to $R_4$ independently represents an alkyl group having from 1 to 8 carbon atoms, each of $R_5$ to $R_8$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group:

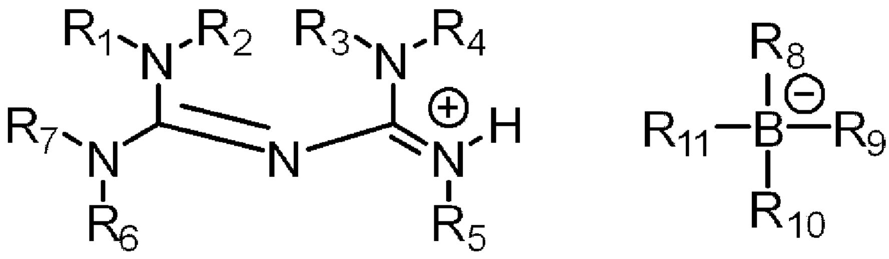

(2)

wherein, in Formula (2), each of $R_1$ to $R_7$ independently represents an alkyl group having from 1 to 8 carbon atoms or a cycloalkyl group having from 3 to 8 carbon atoms, each of $R_8$ to Rn independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group:

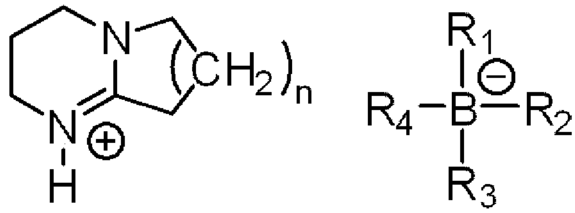

(3)

wherein, in Formula (3), n represents an integer from 1 to 3, each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group, and:

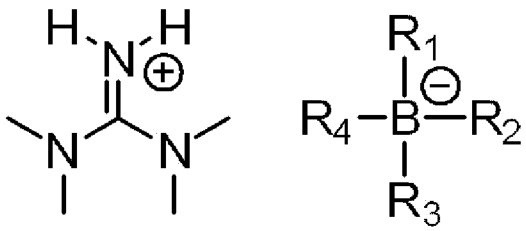

(4)

wherein, in Formula (4), each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

<2> The photocurable composition according to <1>, further comprising an episulfide compound (f) represented by the following Formula (5):

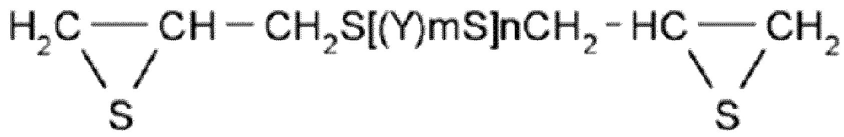

(5)

wherein, in Formula (5), Y represents a linear divalent hydrocarbon group having from 1 to 4 carbon atoms, a branched divalent hydrocarbon group having from 2 to 4 carbon atoms, a cyclic divalent hydrocarbon group having from 3 to 6 carbon atoms, a 1,4-dithiane group, an arylene group, or an aralkylene group, m represents an integer from 0 to 2, and n represents an integer from 0 to 3.

<3> The photocurable composition according to <2>, wherein a refractive index of a sodium D-line at 20°C, of each of the polythiol compound (c) and the episulfide compound (f), is from 1.60 to 1.80.

<4> The photocurable composition according to <2> or <3>, wherein the episulfide compound (f) comprises at least one selected from the group consisting of bis(2,3-epithiopropyl)sulfide, bis(2,3-epithiopropyl)disulfide, and 2,5-bis(2,3-epithiopropylthiom ethyl)-1,4-dithiane.

<5> The photocurable composition according to any one of <1> to <4>, further comprising an ultraviolet absorbent (e) which is at least one selected from the group consisting of compounds represented by the following Formulae (e-1) to (e-4):

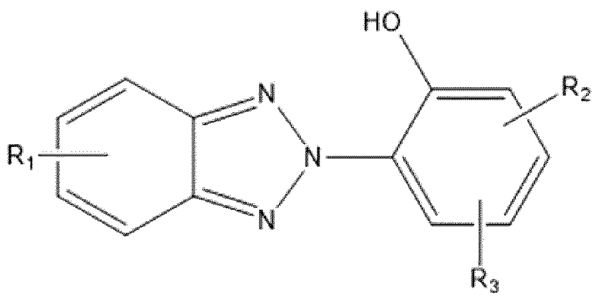

(e - 1)

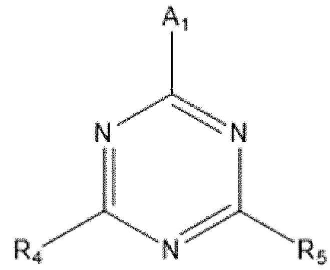

(e - 2)

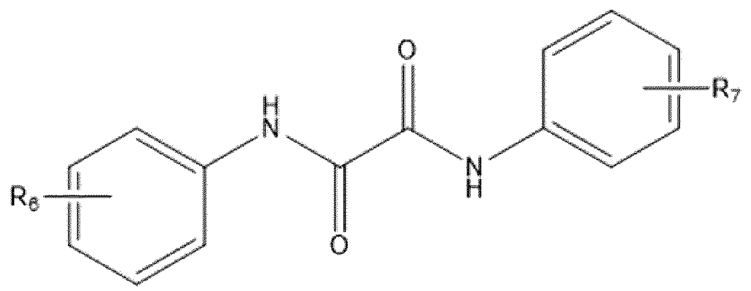

(e - 3)

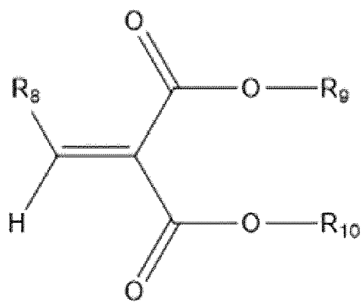

(e - 4)

wherein, in Formula (e-1), $R_1$ represents a hydrogen atom or a chlorine atom, and each of $R_2$ and $R_3$ independently represents a substituted or unsubstituted, linear or branched alkyl group having from 1 to 12 carbon atoms, or an aromatic group or heteroaromatic group having from 4 to 12 carbon atoms,

wherein, in Formula (e-2), $A_1$ represents a structure represented by the following Formula (e-2a), and each of $R_4$ and $R_5$ independently represents a structure represented by the following Formula (e-2b),

wherein, in Formula (e-3), each of $R_6$ and $R_7$ independently represents a linear or branched alkyl group having from 1 to 6 carbon atoms, or a linear or branched alkoxy group having from 1 to 6 carbon atoms,
wherein, in Formula (e-4), $R_8$ represents an optionally substituted aromatic group having from 6 to 20 carbon atoms, or an optionally substituted alicyclic group having from 5 to 20 carbon atoms, and
each of $R_9$ and $R_{10}$ independently represents a linear or branched alkyl group having from 1 to 6 carbon atoms:

A1= 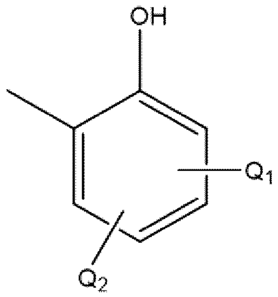

R4, R5 = 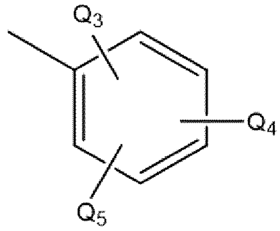

(e − 2 a) (e − 2 b)

wherein, in Formula (e-2a), each of $Q_1$ and $Q_2$ independently represents a linear or branched alkyl group having from 1 to 12 carbon atoms, a linear or branched alkoxy group having from 1 to 18 carbon atoms, halogen, or an aromatic group or heteroaromatic group having from 4 to 12 carbon atoms, and
wherein, in Formula (e-2b), each of $Q_3$, $Q_4$ and $Q_5$ independently represents a linear or branched alkyl group having from 1 to 12 carbon atoms, a linear or branched alkoxy group having from 1 to 18 carbon atoms, halogen, or an aromatic group or heteroaromatic group having from 4 to 12 carbon atoms.

<6> A photocurable composition, comprising:

a base generator (a);
a polyiso(thio)cyanate compound (b);
a polythiol compound (c); and
a polyether-modified silicone compound (d).

<7> The photocurable composition according to <6>, wherein the polyether-modified silicone compound (d) comprises at least one selected from the group consisting of a polyether-modified silicone compound (d1) represented by the following Formula (1) and a polyether-modified silicone compound (d2) represented by the following Formula (2):

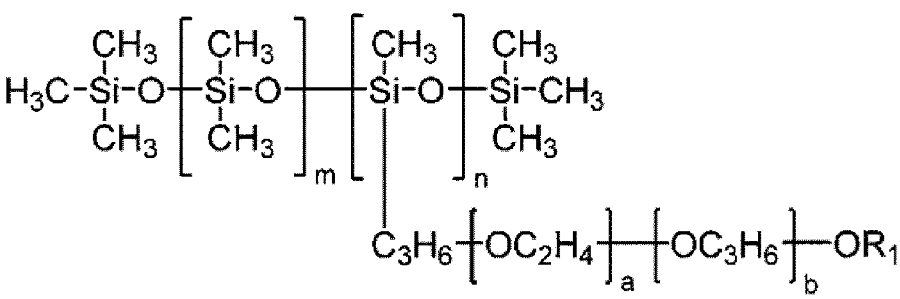

(1)

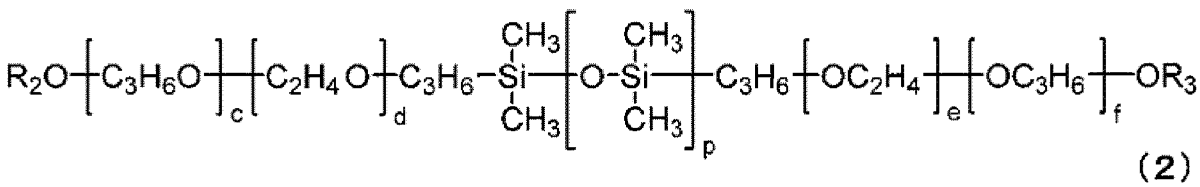

(2)

wherein, in Formula (1), each of m and n independently represents an integer of 1 or more, each of a and b independently represents an integer of 0 or more, barring a case in which both a and b represent 0, and $R_1$ represents a linear or branched alkyl group having from 1 to 6 carbon atoms, a linear or branched alkenyl group having from 2 to 10 carbon atoms, an acryloyl group, a methacryloyl group, or a hydrogen atom, and wherein, in Formula (2), p represents an integer of 1 or more, each of c, d, e, and f independently represents an integer of 0 or more, barring a case in which all of c, d, e and f represent 0, and each of $R_2$ and $R_3$ independently represents a linear or branched alkyl group having from 1 to 6 carbon atoms, a linear or branched alkenyl group having from 2 to 10 carbon atoms, an acryloyl group, a methacryloyl group, or a hydrogen atom.

<8> The photocurable composition according to <6> or <7>, wherein the base generator (a) comprises at least one selected from the group consisting of compounds represented by the following Formulae (a1) to (a4):

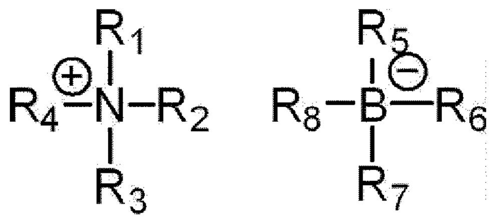

(a1)

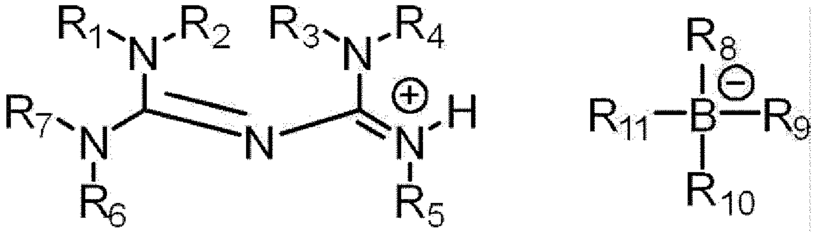

(a2)

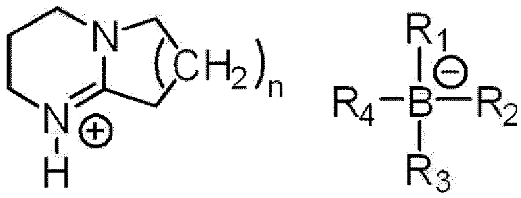

(a3)

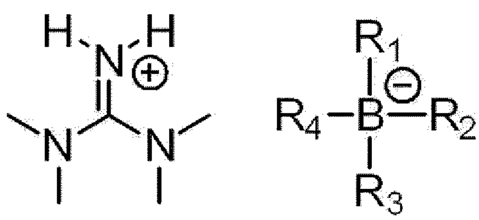

(a4)

wherein, in Formula (a1), each of $R_1$ to $R_4$ independently represents an alkyl group having from 1 to 8 carbon

atoms, each of $R_5$ to $R_8$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group,

wherein, in Formula (a2), each of $R_1$ to $R_7$ independently represents an alkyl group having from 1 to 8 carbon atoms or a cycloalkyl group having from 3 to 8 carbon atoms, each of $R_5$ to Rn independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group,

wherein, in Formula (a3), n represents an integer from 1 to 3, each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group, and

wherein, in Formula (a4), each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

<9> The photocurable composition according to any one of <6> to <8>, further comprising an ultraviolet absorbent (e) which is at least one selected from the group consisting of compounds represented by the following Formulae (e-1) to (e-4):

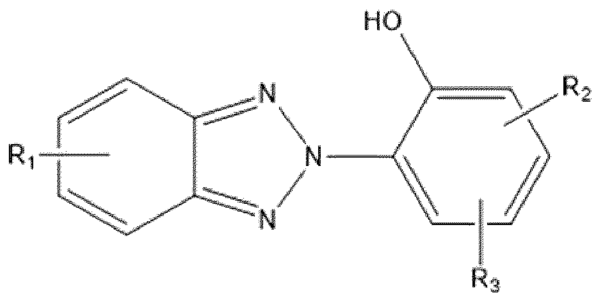

(e-1)

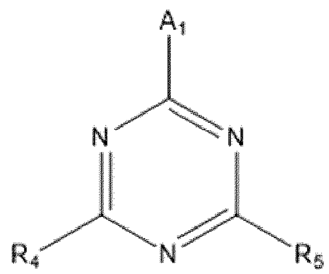

(e-2)

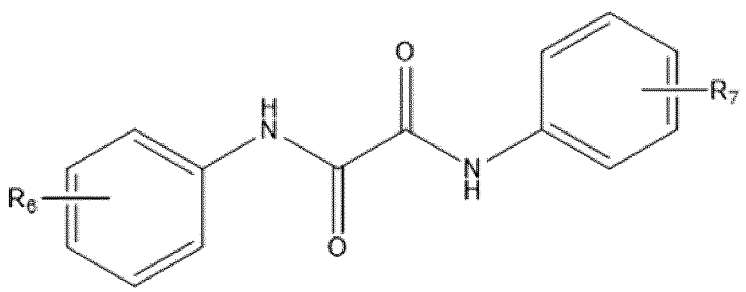

(e-3)

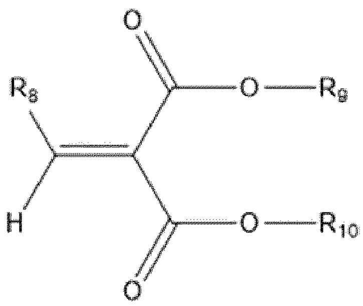

(e-4)

wherein, in Formula (e-1), $R_1$ represents a hydrogen atom or a chlorine atom, and each of $R_2$ and $R_3$ independently represents a substituted or unsubstituted, linear or branched alkyl group having from 1 to 12 carbon atoms, or an aromatic group or heteroaromatic group having from 4 to 12 carbon atoms,

wherein, in Formula (e-2), $A_1$ represents a structure represented by the following Formula (e-2a), and each of

$R_4$ and $R_5$ independently represents a structure represented by the following Formula (e-2b), wherein, in Formula (e-3), each of $R_6$ and $R_7$ independently represents a linear or branched alkyl group having from 1 to 6 carbon atoms, or a linear or branched alkoxy group having from 1 to 6 carbon atoms, wherein, in Formula (e-4), $R_8$ represents an optionally substituted aromatic group having from 6 to 20 carbon atoms, or an optionally substituted alicyclic group having from 5 to 20 carbon atoms, and each of $R_9$ and $R_{10}$ independently represents a linear or branched alkyl group having from 1 to 6 carbon atoms:

A1=

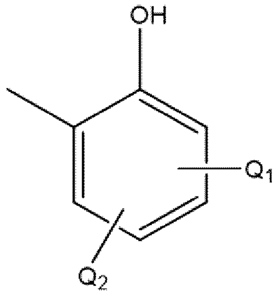

R4, R5 =

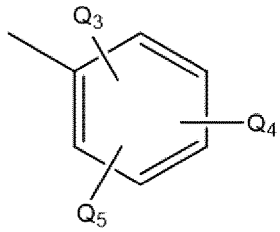

(e − 2 a) (e − 2 b)

wherein, in Formula (e-2a), each of $Q_1$ and $Q_2$ independently represents a linear or branched alkyl group having from 1 to 12 carbon atoms, a linear or branched alkoxy group having from 1 to 18 carbon atoms, halogen, or an aromatic group or heteroaromatic group having from 4 to 12 carbon atoms, and wherein, in Formula (e-2b), each of $Q_3$, $Q_4$ and $Q_5$ independently represents a linear or branched alkyl group having from 1 to 12 carbon atoms, a linear or branched alkoxy group having from 1 to 18 carbon atoms, halogen, or an aromatic group or heteroaromatic group having from 4 to 12 carbon atoms.

<10> The photocurable composition according to any one of <6> to <9>, wherein the polyiso(thio)cyanate compound (b) comprises at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

<11> The photocurable composition according to any one of <1> to <10>, wherein the polythiol compound (c) comprises at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, and tris(mercaptomethylthio)methane.

<12> The photocurable composition according to any one of <1> to <11>, further comprising a photo-sensitizer.

<13> The photocurable composition according to any one of <1> to <11>, further comprising a metal catalyst.

<14> A cured product of the photocurable composition according to any one of <1> to <13>.

<15> A laminated body, comprising the cured product according to <14>.

<16> The laminated body according to <15>, wherein the cured product is an adhesion layer.

<17> The laminated body according to <15>, wherein the cured product is a coating layer.

<18> A method of producing a cured product, the method comprising a step of curing the photocurable composition according to any one of <1> to <13>, by irradiation with ultraviolet light or visible light.

<19> The method of producing a cured product according to <18>, further comprising a step of curing the photocurable composition by placing the photocurable composition in a room temperature or heating environment after the irradiation.

<20> A method of producing a lens having a laminated body structure, the method comprising a step of contacting the photocurable composition according to any one of <1> to <13> with a lens substrate and then curing the photocurable composition.

<21> A method of producing a lens having a laminated body structure, the method comprising an in-mold molding step of producing a molded article using a mold, and the mold comprising, on a surface, a cured product of the

photocurable composition according to any one of <1> to <13>.

Advantageous Effects of Invention

According to the first embodiment of the disclosure, there can be provided a photocurable composition which is excellent in photocurability and which allows for formation of a thiourethane resin, as well as a cured product, a laminated body, a method of producing a cured product, and a method of producing a lens.

According to the second embodiment of the disclosure, there can be provided a photocurable composition which can allow for formation of a thiourethane resin excellent in transparency and releasability and which is excellent in photocurability, as well as a cured product, a laminated body, a method of producing a cured product, and a method of producing a lens.

DESCRIPTION OF EMBODIMENTS

Hereinafter, the content of the disclosure is described in detail. While the description of constituent requirements described below may be made based on typified embodiments of the disclosure, the disclosure is not intended to be limited to such embodiments.

A numerical value range indicated with "(from) ... to" in the first embodiment represents a range including numerical values described before and after "to", respectively as a minimum value and a maximum value.

The term "step" in the first embodiment encompasses not only an independent step, but also any step as long as an object of such any step is achieved even in a case in which such any step cannot be clearly distinguished from other steps.

The content of each component in a composition in the first embodiment means the total amount of a plurality of substances in a case in which such a plurality of substances is present in such each component in the composition, unless particularly noted.

[First Embodiment]

«Photocurable Composition»

A photocurable composition of the first embodiment includes a base generator (a), a polyiso(thio)cyanate compound (b), and a polythiol compound (c), in which the base generator (a) includes at least one selected from the group consisting of compounds represented by the following Formula (1) to the following Formula (4), and

the polyiso(thio)cyanate compound (b) includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

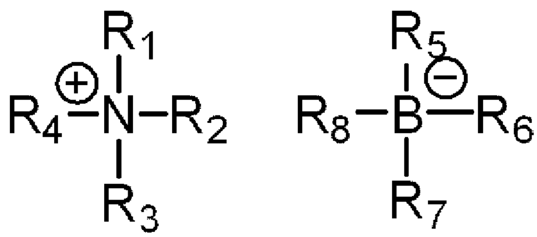

(1)

In Formula (1), each of $R_1$ to $R_4$ independently represents an alkyl group having from 1 to 8 carbon atoms, each of $R_5$ to $R_8$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

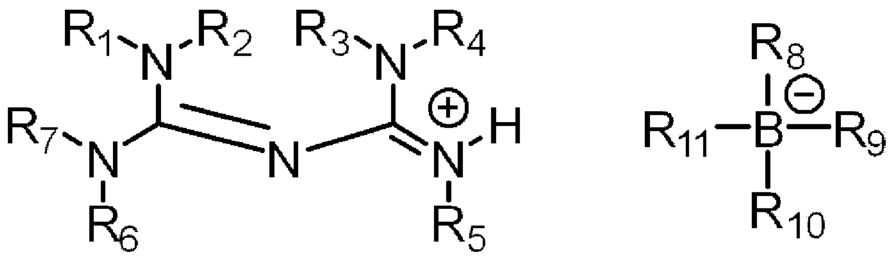

(2)

In Formula (2), each of $R_1$ to $R_7$ independently represents an alkyl group having from 1 to 8 carbon atoms or a cycloalkyl group having from 3 to 8 carbon atoms, each of $R_5$ to Rn independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

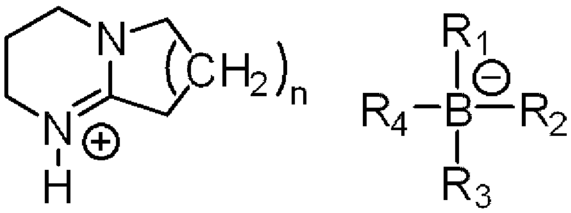

(3)

In Formula (3), n represents an integer from 1 to 3, each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

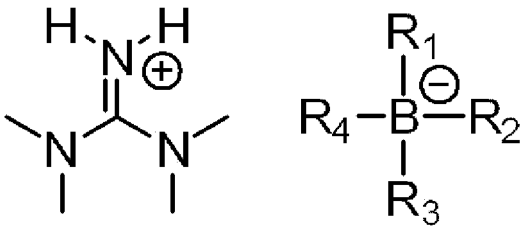

(4)

In Formula (4), each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

A thiourethane resin may be used in the optical field, and can be produced by polymerization reaction of a polyiso(thio)cyanate compound and a polythiol compound. The photocurable composition of the first embodiment includes a base generator. The base generator can be irradiated with light to generate a base, thereby allowing polymerization reaction to progress.

The inventors have led the configuration of the photocurable composition of the first embodiment from the viewpoint of obtaining a photocurable composition which is excellent in photocurability and which can allow for formation of a thiourethane resin.

In other words, the photocurable composition of the first embodiment is excellent in photocurability and can

allow for formation of a thiourethane resin because the photocurable composition includes a base generator (a), a polyiso(thio)cyanate compound (b), and a polythiol compound (c), and the base generator (a) includes at least one selected from the group consisting of compounds represented by Formula (1) to Formula (4).

The inventors have also found a problem about a conventional photocurable composition, in which the problem is that components such as a base generator and a photo-sensitizer are not sufficiently dissolved in some cases.

On the contrary, the photocurable composition of the first embodiment is also excellent in solubilities of a photo-base generator and a photo-sensitizer.

A cured product obtained from the photocurable composition of the first embodiment can exhibit a high refractive index. Thus, the photocurable composition of the first embodiment can be suitably used in the optical field.

A cured product obtained from the photocurable composition of the first embodiment can exhibit high close adhesiveness and adhesiveness. Thus, for example, layers in a laminated body including a cured product obtained from the photocurable composition of the first embodiment can adhere by the cured product without use of any primer layer.

<Base Generator (a)>

The base generator in the first embodiment means a compound which generates a free base by at least one of optical energy or thermal energy, such as electromagnetic wave.

The photocurable composition of the first embodiment includes a base generator (a), in which the base generator (a) includes at least one selected from the group consisting of compounds represented by the following Formula (1) to the following Formula (4).

The photocurable composition of the first embodiment includes the base generator (a), and thus can allow for an enhancement in photocurability of a polyiso(thio)cyanate compound and a polythiol compound.

Moreover, thermal curability can also be, if necessary, enhanced in a case in which thermal curing is performed.

Hereinafter, the compound represented by Formula (1) is described.

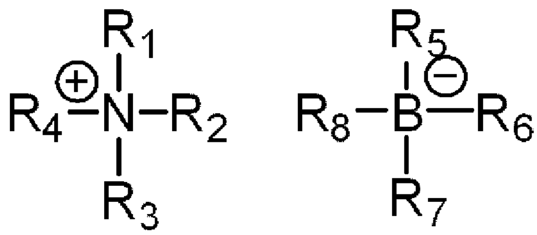

(1)

In Formula (1), each of $R_1$ to $R_4$ independently represents an alkyl group having from 1 to 8 carbon atoms, each of $R_5$ to $R_8$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

In Formula (1), $R_1$ to $R_4$ are preferably the same.

Each of $R_1$ to $R_4$ preferably represents an alkyl group having from 2 to 5 carbon atoms, more preferably represents a linear alkyl group, still more preferably represent a n-butyl group.

In Formula (1), $R_8$ preferably represents an alkyl group having from 2 to 5 carbon atoms, more preferably represents a linear alkyl group, still more preferably represent a n-butyl group.

$R_5$ to $R_7$ are preferably the same.

Each of $R_5$ to $R_7$ preferably represents a phenyl group, a butylphenyl group, or a naphthyl group, more preferably represents a phenyl group, a 4-tert-butylphenyl group, a 1-naphthyl group, or a 4-methyl-1-naphthyl group.

In a case in which each of $R_5$ to $R_7$ includes an aromatic ring, the aromatic ring is optionally substituted with an alkyl group, an aryl group, or the like.

The compound represented by Formula (1) is preferably at least one selected from the group consisting of tetra(n-butyl)ammonium=n-butyltriphenylborate, tetra(n-butyl)ammonium=n-butyl tri(4-tert-butylphenyl)borate, tetra(n-butyl)ammonium=n-butyl tri(1-naphthyl)borate, and tetra(n-butyl)ammonium=n-butyl tri(4-methyl-1-naphthyl)borate. The "=" in the compound name means an ionic bond.

In particular, the compound represented by Formula (1) is more preferably at least one selected from the group

consisting of tetra(n-butyl)ammonium=n-butyltriphenylborate and tetra(n-butyl)ammonium=n-butyl tri(1-naphthyl)borate, from the viewpoint of solubility, polymerizability, and the pot life balance of the composition.

Specific examples of the compound represented by Formula (1) include the following compounds, but not limited to the following compounds.

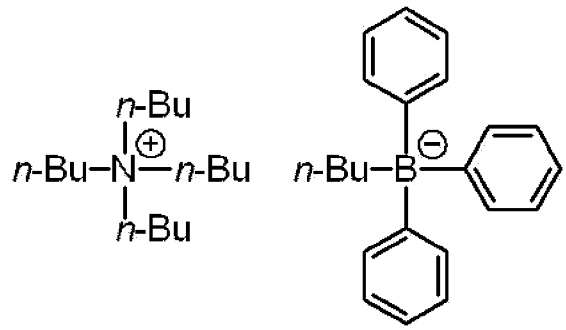

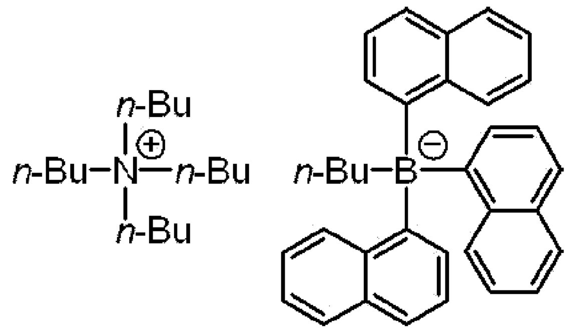

Hereinafter, the compound represented by Formula (2) is described.

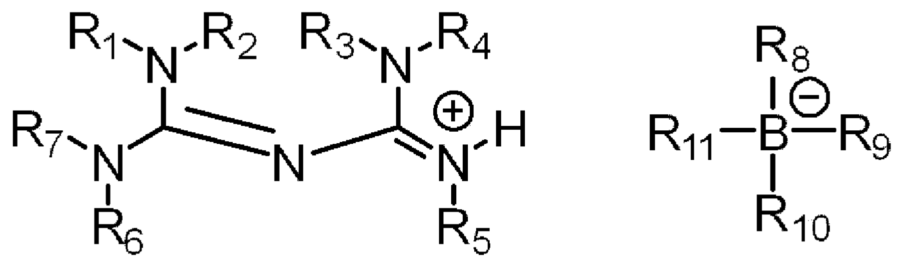

(2)

In Formula (2), each of $R_1$ to $R_7$ independently represents an alkyl group having from 1 to 8 carbon atoms or a cycloalkyl group having from 3 to 8 carbon atoms, each of $R_5$ to $R_{11}$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

In Formula (2), each of $R_4$ and $R_5$ preferably represents a cycloalkyl group having from 3 to 8 carbon atoms, more preferably represents a cycloalkyl group having from 4 to 7 carbon atoms.

The cycloalkyl group is preferably a cyclohexyl group.

Each of $R_1$ to $R_3$, $R_6$, and $R_7$ preferably represents an alkyl group having from 1 to 8 carbon atoms, more preferably represents an alkyl group having from 1 to 5 carbon atoms, still more preferably represents a methyl group.

Each of $R_1$ to $R_3$, $R_6$, and $R_7$ preferably represents a linear alkyl group.

In Formula (2), $R_{11}$ preferably represents an alkyl group having from 2 to 5 carbon atoms, more preferably represents a linear alkyl group, still more preferably represent a n-butyl group.

$R_8$ to $R_{10}$ are preferably the same.

Each of $R_8$ to $R_{10}$ preferably represents a phenyl group, a butylphenyl group, or a naphthyl group, more preferably represents a phenyl group, a 4-tert-butylphenyl group, a 1-naphthyl group, or a 4-methyl-1-naphthyl group.

In a case in which each of $R_8$ to $R_{10}$ includes an aromatic ring, the aromatic ring is optionally substituted with an alkyl group, an aryl group, or the like.

In Formula (2), $R_8$ to $R_{11}$ are also preferably the same.

In a case in which $R_8$ to $R_{11}$ are the same, each of $R_5$ to $R_{11}$ preferably represents a phenyl group, a butylphenyl group, or a naphthyl group, more preferably represents a phenyl group, a 4-tert-butylphenyl group, a 1-naphthyl group, or a 4-methyl-1-naphthyl group.

In a case in which $R_8$ to $R_{11}$ are the same and each thereof includes an aromatic ring, the aromatic ring is optionally substituted with a halogen atom, an alkyl group, an aryl group, or the like, and is preferably substituted with a halogen atom, more preferably substituted with a fluorine atom.

The compound represented by Formula (2) is preferably at least one selected from the group consisting of 1,2-dicyclohexyl-4,4,5,5-tetramethyl biguanidium=n-butyltriphenylborate, 1,2-dicyclohexyl-4,4,5,5-tetramethyl biguanidium=tetrakis(3-fluorophenyl)borate, and 1,2-dicyclohexyl-4,4,5,5-tetramethyl biguanidium=butyl tri(1-naphthyl)borate. The "=" in the compound name means an ionic bond.

In particular, the compound represented by Formula (2) is more preferably at least one selected from the group consisting of 1,2-dicyclohexyl-4,4,5,5-tetramethyl biguanidium=n-butyltriphenylborate and 1,2-dicyclohexyl-4,4,5,5-tetramethyl biguanidium=tetrakis(3-fluorophenyl)borate, from the viewpoint of solubility, polymerizability, and the pot life balance of the composition.

Specific examples of the compound represented by Formula (2) include the following compounds, but not limited to the following compounds.

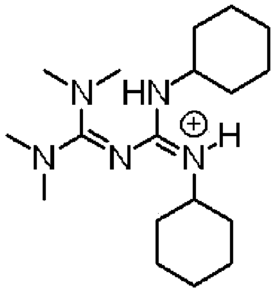 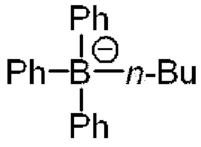 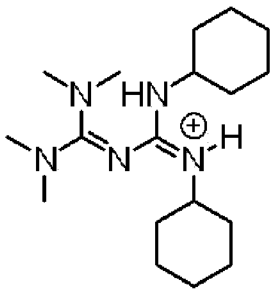 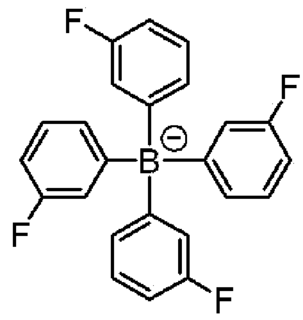

Hereinafter, the compound represented by Formula (3) is described.

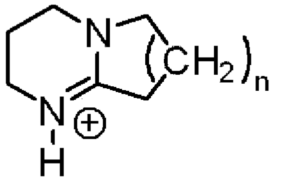 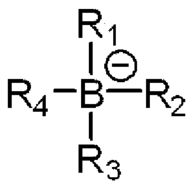

(3)

In Formula (3), n represents an integer from 1 to 3, each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

n preferably represents 1 or 3.

$R_4$ preferably represents an alkyl group having from 2 to 5 carbon atoms, more preferably represents a linear alkyl group, still more preferably represent a n-butyl group.

$R_1$ to $R_3$ are preferably the same.

Each of $R_1$ to $R_3$ preferably represents a phenyl group, a butylphenyl group, or a naphthyl group, more preferably represents a phenyl group, a 4-tert-butylphenyl group, a 1-naphthyl group, or a 4-methyl-1-naphthyl group.

In a case in which each of $R_1$ to $R_3$ includes an aromatic ring, the aromatic ring is optionally substituted with an alkyl group, an aryl group, or the like.

In Formula (3), $R_1$ to $R_4$ are also preferably the same.

In a case in which $R_1$ to $R_4$ are the same, each of $R_1$ to $R_4$ preferably represents a phenyl group, a butylphenyl group, or a naphthyl group, more preferably represents a phenyl group, a 4-tert-butylphenyl group, a 1-naphthyl group, or a 4-methyl-1-naphthyl group.

In a case in which $R_1$ to $R_4$ are the same and each thereof includes an aromatic ring, the aromatic ring is optionally substituted with a halogen atom, an alkyl group, an aryl group, or the like, and is preferably substituted with a halogen atom, more preferably substituted with a fluorine atom.

The compound represented by Formula (3) is preferably at least one selected from the group consisting of diazabicycloundecenium=n-butyltriphenylborate, diazabicycloundecenium=tetrakis(3-fluorophenyl)borate, diazabicycloundecenium=butyl tri(1-naphthyl)borate, diazabicycloundecenium=tetraphenylborate, diazabicyclononenium=n-butyltriphenylborate, diazabicyclononenium=tetrakis(3-fluorophenyl)borate, diazabicyclononenium=butyl tri(1-naphthyl)borate, and diazabicyclononenium=tetraphenylborate. The "=" in the compound name means an ionic bond.

In particular, the compound represented by Formula (3) is more preferably at least one selected from the group consisting of diazabicycloundecenium=tetraphenylborate and diazabicyclononenium=tetraphenylborate.

Hereinafter, the compound represented by Formula (4) is described.

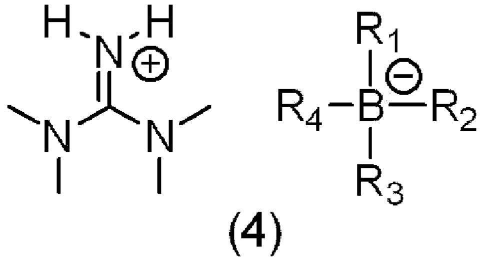

(4)

In Formula (4), each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

$R_4$ preferably represents an alkyl group having from 2 to 5 carbon atoms, more preferably represents a linear alkyl group, still more preferably represent a n-butyl group.

$R_1$ to $R_3$ are preferably the same.

Each of $R_1$ to $R_3$ preferably represents a phenyl group, a butylphenyl group, or a naphthyl group, more preferably represents a phenyl group, a 4-tert-butylphenyl group, a 1-naphthyl group, or a 4-methyl-1-naphthyl group.

In a case in which each of $R_1$ to $R_3$ includes an aromatic ring, the aromatic ring is optionally substituted with an alkyl group, an aryl group, or the like.

In Formula (4), $R_1$ to $R_4$ are also preferably the same.

In a case in which $R_1$ to $R_4$ are the same, each of $R_1$ to $R_4$ preferably represents a phenyl group, a butylphenyl group, or a naphthyl group, more preferably represents a phenyl group, a 4-tert-butylphenyl group, a 1-naphthyl group, or a 4-methyl-1-naphthyl group.

In a case in which $R_1$ to $R_4$ are the same and each thereof includes an aromatic ring, the aromatic ring is optionally substituted with a halogen atom, an alkyl group, an aryl group, or the like, and is preferably substituted with a halogen atom, more preferably substituted with a fluorine atom.

The compound represented by Formula (4) is preferably at least one selected from the group consisting of 1,1,3,3-tetramethylguanidinium=n-butyltriphenylborate, 1,1,3,3-tetramethylguanidinium=tetrakis(3-fluorophenyl)borate, 1,1,3,3-tetramethylguanidinium=butyl tri(1-naphthyl)borate, and 1,1,3,3-tetramethylguanidinium=tetraphenylborate. The "=" in the compound name means an ionic bond.

In particular, the compound represented by Formula (4) is more preferably 1,1,3,3-tetramethylguanidinium=tetraphenylborate.

The content of the base generator (a) is preferably 0.01 parts by mass or more, more preferably 0.03 parts by mass or more, still more preferably 0.05 parts by mass or more, from the viewpoint of excellent photocurability, under the assumption that the total mass of the polyiso(thio)cyanate compound (b), the polythiol compound (c), and the episulfide compound (f) is 100 parts by mass.

The content of the base generator (a) is preferably 5.00 parts by mass or less, more preferably 3.00 parts by mass or less, still more preferably 1.00 part by mass or less from the viewpoint of an enhancement in pot life and from the viewpoint of enhancements in close adhesiveness and adhesiveness, under the assumption that the total mass of the polyiso(thio)cyanate compound (b), the polythiol compound (c), and the episulfide compound (f) is 100 parts by mass.

<Polyiso(thio)cyanate Compound (b)>

The photocurable composition of the first embodiment includes a polyiso(thio)cyanate compound (b), in which the polyiso(thio)cyanate compound (b) includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

The photocurable composition of the first embodiment includes the polyiso(thio)cyanate compound (b), and thus can allow a cured product excellent in close adhesiveness and adhesiveness to be obtained. A cured product having a high refractive index can also be obtained.

Examples of the polyiso(thio)cyanate compound (b) include an aliphatic polyiso(thio)cyanate compound, an

alicyclic polyiso(thio)cyanate compound, an aromatic polyiso(thio)cyanate compound, and a heterocyclic polyiso(thio)cyanate compound, and such a compound may be used singly, or in mixture of two or more kinds thereof.

The polyiso(thio)cyanate compound may also encompass a dimer, a trimer, or a prepolymer. Examples of the polyiso(thio)cyanate compound can also include any compound exemplified in WO 2011/055540.

In the first embodiment, the alicyclic polyiso(thio)cyanate compound refers to a polyiso(thio)cyanate compound containing an alicyclic structure and optionally containing a heterocyclic structure. The aromatic polyiso(thio)cyanate compound refers to a polyiso(thio)cyanate compound containing an aromatic structure and optionally containing an alicyclic structure and a heterocyclic structure. The heterocyclic polyiso(thio)cyanate compound refers to a polyiso(thio)cyanate compound containing a heterocyclic structure and not containing any alicyclic structure and any aromatic structure.

The polyiso(thio)cyanate compound (b) preferably includes at least one selected from the group consisting of the aliphatic polyiso(thio)cyanate compound, the alicyclic polyiso(thio)cyanate compound, the aromatic polyiso(thio)cyanate compound, and the heterocyclic polyiso(thio)cyanate compound.

In the first embodiment, the polyiso(thio)cyanate compound (b) includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate,

preferably includes at least one selected from the group consisting of 2,5-bis(isocyanatomethyl)bicyclo-[2.2.1]-heptane, 2,6-bis(isocyanatomethyl)bicyclo-[2.2.1]-heptane, xylylene diisocyanate, and 1,3-bis(isocyanatomethyl)cyclohexane,
more preferably includes at least one selected from the group consisting of 2,5-bis(isocyanatomethyl)bicyclo-[2.2.1]-heptane, 2,6-bis(isocyanatomethyl)bicyclo-[2.2.1]-heptane, and m-xylylene diisocyanate,

from the viewpoint that a cured product obtained is excellent in adhesiveness and refractive index, and from the viewpoint of excellent photocurability.

<Polythiol Compound (c)>

The photocurable composition of the first embodiment includes a polythiol compound (c).

The photocurable composition of the first embodiment includes the polyiso(thio)cyanate compound (b) and the polythiol compound (c), and thus a thiourethane resin can be obtained by curing the photocurable composition.

The polythiol compound (c) is a compound having 2 or more mercapto groups, and examples can include any compound exemplified in WO 2016/125736.

In the first embodiment, the polythiol compound (c) preferably includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, and tris(mercaptomethylthio)methane,

more preferably includes at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(3-mercaptopropionate), and pentaerythritol tetrakis(2-mercaptoacetate),
still more preferably includes at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane,

from the viewpoint of excellent photocurability.

The refractive index of a sodium D-line (namely, light at a wavelength of 589.3 nm) at 20°C, of the polythiol compound (c), is preferably from 1.60 to 1.80 from the viewpoint of the refractive index of a cured product obtained.

The total content of the polyiso(thio)cyanate compound (b) and the polythiol compound (c) is preferably 20% by mass or more, more preferably 30% by mass or more, still more preferably 40% by mass or more, particularly preferably 50% by mass or more, much more preferably 60% by mass or more with respect to the total mass of the photocurable composition, from the viewpoint of photocurability, and close adhesiveness and adhesiveness of the cured

product.

The total content of the polyiso(thio)cyanate compound (b) and the polythiol compound (c) may be 99.9% by mass or less, or may be 99.8% by mass or less with respect to the total mass of the photocurable composition.

The content of the polythiol compound (c) with respect to the content of the polyiso(thio)cyanate compound (b), (c/b), is preferably from 0.5 to 4.0, more preferably from 0.6 to 3.0, still more preferably from 0.7 to 1.5 from the viewpoint of photocurability, and close adhesiveness and adhesiveness of the cured product.

<Episulfide Compound (f)>

The photocurable composition of the first embodiment preferably further includes an episulfide compound (f) represented by the following Formula (5).

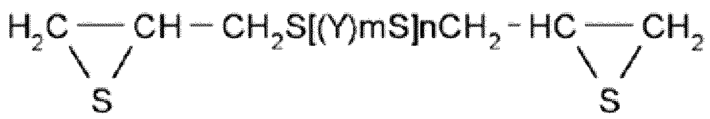

(5)

In Formula (5), Y represents a linear divalent hydrocarbon group having from 1 to 4 carbon atoms, a branched divalent hydrocarbon group having from 2 to 4 carbon atoms, a cyclic divalent hydrocarbon group having from 3 to 6 carbon atoms, a 1,4-dithiane group, an arylene group, or an aralkylene group, m represents an integer from 0 to 2, and n represents an integer from 0 to 3.

Y optionally includes a substituent, or is optionally unsubstituted.

Y preferably represents a linear divalent hydrocarbon group having from 1 to 4 carbon atoms, a branched divalent hydrocarbon group having from 2 to 4 carbon atoms, or a cyclic divalent hydrocarbon group having from 3 to 6 carbon atoms, more preferably represents a linear divalent hydrocarbon group having from 1 to 4 carbon atoms.

m preferably represents 0 or 1, more preferably represents 0.
n preferably represents 0 or 1, more preferably represents 1.

The episulfide compound (f) preferably includes at least one selected from the group consisting of bis(2,3-epithiopropyl)sulfide, bis(2,3-epithiopropyl)disulfide, and 2,5-bis(2,3-epithiopropylthiomethyl)-1,4-dithiane.

The content of such an episulfide resin is preferably less than 90% by mass, more preferably 80% by mass or less, still more preferably 70% by mass or less, particularly preferably 60% by mass or less with respect to the total mass of the photocurable composition.

The content of such an episulfide resin may be 0% by mass or more.

The refractive index of a sodium D-line (namely, light at a wavelength of 589.3 nm) at 20°C, of the episulfide compound (f), is preferably from 1.60 to 1.80 from the viewpoint of the refractive index of a cured product obtained.

The refractive indexes of a sodium D-line (namely, light at a wavelength of 589.3 nm) at 20°C, of the polythiol compound (c) and the episulfide compound (f), are preferably from 1.60 to 1.80 from the viewpoint of the refractive index of a cured product obtained.

The photocurable composition of the first embodiment preferably further includes an ultraviolet absorbent (e) which is at least one selected from the group consisting of compounds represented by the following Formula (e-1) to the following Formula (e-4).

The photocurable composition can include the ultraviolet absorbent (e), thereby having excellent weather resistance.

More specifically, for example, an excellent yellow index (YI) is obtained.

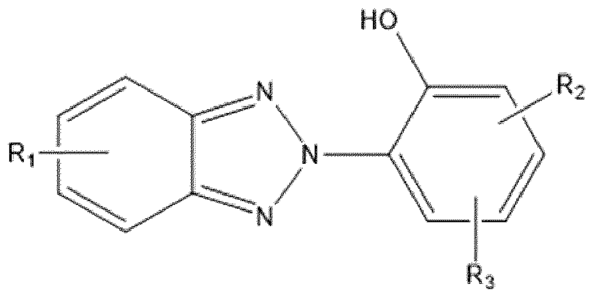

(e - 1)

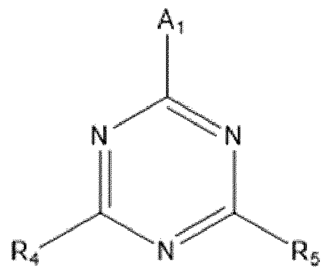

(e - 2)

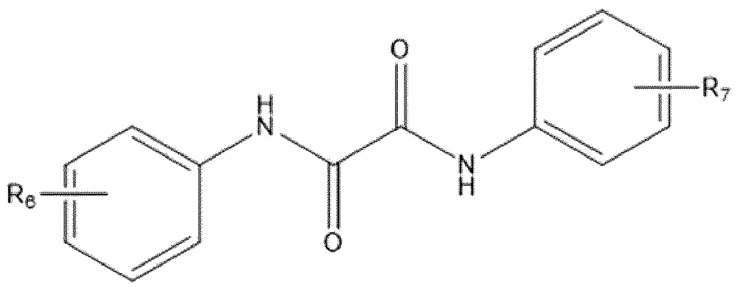

(e - 3)

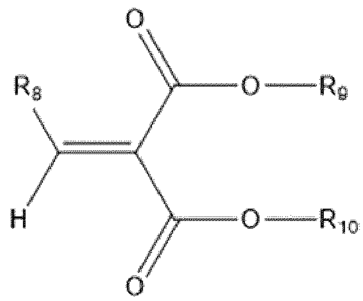

(e - 4)

In Formula (e-1), $R_1$ represents a hydrogen atom or a chlorine atom, and each of $R_2$ and $R_3$ independently represents a substituted or unsubstituted, linear or branched alkyl group having from 1 to 12 carbon atoms, or an aromatic group or heteroaromatic group having from 4 to 12 carbon atoms.

In a case in which the substituted or unsubstituted, linear or branched alkyl group having from 1 to 12 carbon atoms contains a substituent, examples of the substituent include an aromatic group or a heteroaromatic group having from 6 to 12 carbon atoms.

Examples of the aromatic group and the heteroaromatic group include a phenyl group, a biphenyl group, a 2,3,5-trimethylphenyl group, a furyl group, and a p-methoxyphenyl group.

A commercially available product may also be used as the compound represented by Formula (e-1), and examples thereof include TINUVIN 234 (manufactured by BASF Japan) and TINUVIN 328 (manufactured by BASF Japan).

In Formula (e-2), $A_1$ represents a structure represented by the following Formula (e-2a), and each of $R_4$ and $R_5$ independently represents a structure represented by the following Formula (e-2b).

A1=

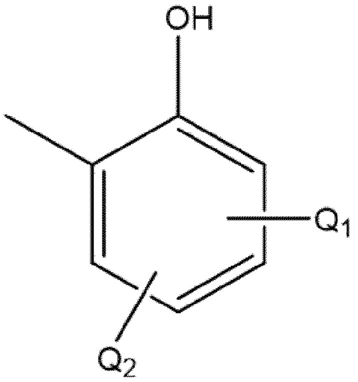

(e − 2 a)

R4, R5 =

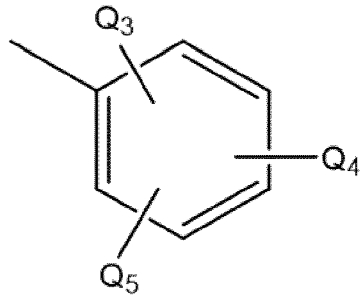

(e − 2 b)

In Formula (e-2a) and Formula (e-2b), each of $Q_1$ to $Q_5$ independently represents a linear or branched alkyl group having from 1 to 12 carbon atoms, a linear or branched alkoxy group having from 1 to 18 carbon atoms, halogen, or an aromatic group or heteroaromatic group having from 4 to 12 carbon atoms.

The number of carbon atoms in the linear or branched alkyl group having from 1 to 12 carbon atoms is preferably from 1 to 6, more preferably from 1 to 3.

Examples of the linear or branched alkoxy group having from 1 to 18 carbon atoms include a methoxy group, a butoxy group, a 2-hydroxy-3-octyloxy-propyloxy group, and a 2-ethylhexyloxy group.

Examples of the aromatic group and the heteroaromatic group include a phenyl group, a biphenyl group, a 2,3,5-trimethylphenyl group, a furyl group, and a p-methoxyphenyl group.

A commercially available product may also be used as the compound represented by Formula (e-2), and examples thereof include TINUVIN 405 (manufactured by BASF Japan) and TINUVIN 1600 (manufactured by BASF Japan).

In Formula (e-3), each of $R_6$ and $R_7$ independently represents a linear or branched alkyl group having from 1 to 6 carbon atoms, or a linear or branched alkoxy group having from 1 to 6 carbon atoms.

Examples of the linear or branched alkyl group having from 1 to 6 carbon atoms in Formula (e-3) can include a methyl group, an ethyl group, a butyl group, a propyl group, a pentyl group, and a hexyl group.

Examples of the linear or branched alkoxy group having from 1 to 6 carbon atoms can include a methoxy group, an ethoxy group, a butoxy group, and a phenoxy group.

A commercially available product may also be used as the compound represented by Formula (e-3), and examples thereof include HOSTAVIN VSU (manufactured by Clariant Chemicals Ltd.).

In Formula (e-4), $R_8$ represents an optionally substituted aromatic group having from 6 to 20 carbon atoms, or an optionally substituted alicyclic group having from 5 to 20 carbon atoms.

Each of $R_9$ and $R_{10}$ independently represents a linear or branched alkyl group having from 1 to 6 carbon atoms.

Examples of the optionally substituted aromatic group having from 6 to 20 carbon atoms can include a phenyl group, a benzyl group, a benzoyl group, and a p-methoxybenzyl group.

Examples of the optionally substituted alicyclic group having from 5 to 20 carbon atoms can include a cyclopentyl group, a cyclohexyl group, a cycloheptyl group, a cyclooctyl group, a cyclopentanyl group, and a cyclodecanyl group.

In a case in which the aromatic group or the alicyclic group contains a substituent, examples of the substituent include an alkyl group having from 1 to 6 carbon atoms and an alkoxy group having from 1 to 6 carbon atoms.

A commercially available product may also be used as the compound represented by Formula (e-4), and examples thereof include HOSTAVIN PR25 (manufactured by Clariant Chemicals Ltd.).

(Photo-sensitizer)

The photocurable composition of the first embodiment preferably further includes a photo-sensitizer.

The photocurable composition can include a photo-sensitizer, thereby allowing a base to be more efficiently released from the base generator (a). As a result, shortening of the exposure time, promotion of polymerization of the photocurable composition, and/or the like can be expected.

A conventional photocurable composition has been often inferior in solubility of a photo-sensitizer.

In this regard, in a case in which the photocurable composition of the first embodiment includes a photo-sensitizer, solubility of the photo-sensitizer is excellent.

The photo-sensitizer in the first embodiment means a component which propagates energy obtained by absorption of light with the component itself, to the base generator (a), and thus facilitates generation of a base from the base generator (a).

Examples of the photo-sensitizer in the first embodiment include a naphthalene compound such as diethoxynaphthalene, an anthracene compound such as dibutoxyanthracene, a thioxanthone compound such as isopropylthioxanthone, and a coumarin compound such as carbonyl bis(diethylaminocoumarin) or benzimidazoyl dimethylaminocoumarin.

In particular, the photo-sensitizer is preferably a naphthalene compound, an anthracene compound, a thioxanthone compound, or a coumarin compound, more preferably at least one selected from the group consisting of 1,4-diethoxynaphthalene, 9,10-bis(octanoyloxy)anthracene, 9,10-dibutoxyanthracene, 4-benzoyl-4'-methyldiphenyl sulfide, and 2-ethylanthraquinone, from the viewpoint of an improvement in polymerization depth.

The photo-sensitizer may be used singly, or in mixture of two or more kinds thereof.

The content of the photo-sensitizer is preferably from 0.01 parts by mass to 5 parts by mass, more preferably from 0.03 parts by mass to 3 parts by mass, still more preferably from 0.05 parts by mass to 1 part by mass from the viewpoint of photocurability, under the assumption that the total mass of the polyiso(thio)cyanate compound (b), the polythiol compound (c), and the episulfide compound (f) is 100 parts by mass.

(Metal Catalyst)

The curable composition of the first embodiment preferably further includes a metal catalyst.

The photocurable composition can include a metal catalyst, thereby having more enhanced polymerizability, and allowing enhancements in heat resistance, strength, hardness, close adhesiveness, adhesiveness, and the like of the cured product to be expected.

The metal catalyst in the first embodiment preferably includes tin, zinc, bismuth, aluminum, or zirconium, more preferably includes tin from the viewpoint of an increase in polymerizability.

Examples of the metal catalyst in the first embodiment include dibutyltin(IV) dilaurate, dibutyltin(IV) dichloride, and dimethyltin(IV) dichloride.

In particular, the metal catalyst is preferably dibutyltin(IV) dichloride or dimethyltin(IV) dichloride from the viewpoint of an increase in polymerizability.

The content of the metal catalyst is preferably 0.001 parts by mass or more, more preferably 0.003 parts by mass or more, still more preferably 0.005 parts by mass or more, from the viewpoint of an increase in polymerizability, under the assumption that the total mass of the polyiso(thio)cyanate compound (b), the polythiol compound (c), and the episulfide compound (f) is 100 parts by mass.

The content of the metal catalyst is preferably 0.5 parts by mass or less, more preferably 0.1 parts by mass or less, still more preferably 0.05 parts by mass or less, from the viewpoint of an increase in pot life, with respect to the total mass of the polyiso(thio)cyanate compound (b), the polythiol compound (c), and the episulfide compound (f).

An additive such as an epoxy group-containing compound, a phenol compound, an amino group-containing compound, a sulfur atom-containing inorganic compound, or a selenium atom-containing inorganic compound may be added to the curable composition of the first embodiment, for the purpose of improvements in various performances, for example, weather resistance, oxidation resistance, strength, hardness, close adhesiveness with a substrate, refractive index, and dyeing affinity, of the cured product. In this case, a known polymerization and curing catalyst can be, if necessary, separately added as one additive.

In a case in which such an additive is added for the purpose of improvements in various performances, for example, weather resistance, oxidation resistance, strength, hardness, close adhesiveness with a substrate, refractive index, and dyeing affinity, of the cured product, the content of the additive is preferably from 1% by mass to 70% by mass, more preferably from 3% by mass to 60% by mass, still more preferably from 5% by mass to 50% by mass with respect to the mass of the photocurable composition of the first embodiment.

Any other component(s) other than the above can be added to the curable composition of the first embodiment, for example, a solvent, a bluing agent, an IR cut agent, a blue light cut agent, a reactive diluent, an oil-soluble dye, a pigment, a perfume, a filler, a close adhesiveness enhancer such as a coupling agent, a chain extender, a crosslinker, a defoamer, a precipitation inhibitor, a dispersant, a plasticizer, a dripping inhibitor, an antifouling agent, a preservative agent, a disinfectant, an anti-bacterial agent, a fungicide, a delustering agent, a thickener, a pigment dispersant, a cissing inhibitor, a scratch resistance enhancer, a slipping agent, a surface modifier, a color separation inhibitor, an emulsifier, an anti-skinning agent, a desiccant, an antifouling agent, an antistatic agent, a conductive agent (electrostatic aid), a flame retardant, a heat conductivity improver, a plasticizer, a silica fine particle, a zirconium oxide fine particle, a titanium oxide fine particle, a zinc oxide fine particle, a silver oxide fine particle, a polyolefin fine particle, a poly(meth)acrylic fine

particle, and/or a polyurethane fine particle.

The content of such other component(s) may be usually from 0.1 ppm to 70% by mass, and is preferably from 1 ppm to 30% by mass, more preferably from 10 ppm to 10% by mass, still more preferably from 0.1% by mass to 5% by mass with respect to the mass of the photocurable composition of the first embodiment.

«Optical Member»

An optical member of the first embodiment includes a cured product of the photocurable composition of the first embodiment.

The cured product of the first embodiment has a high refractive index and is excellent in transparency, and thus can be suitably used as an optical member.

Specific examples of the optical member can include an optical adhesive, a coating, an optical waveguide, a film, a lens, an antireflection film, a microlens, a microlens array, a wafer level lens, an imaging lens for cameras (for example, car camera, digital camera, camera for PC, camera for mobile phones, and security camera), a spectacle lens, an optical beam collection lens, a lens for light diffusion, and a photoflash lens for cameras.

<<Adhesive>>

An adhesive of the first embodiment includes the photocurable composition of the first embodiment.

The photocurable composition of the first embodiment can be suitably used as an adhesive because the cured product thereof is excellent in adhesiveness.

An adherend is not particularly limited, and examples thereof include an ICT (Information and Communication Technology) member, an AR (Augmented Reality) member, a VR (Virtual Reality) member, and other optical member.

<<Coating Composition>>

A coating composition of the first embodiment includes the photocurable composition of the first embodiment.

The photocurable composition of the first embodiment can be suitably used as a coating composition because the cured product thereof is excellent in close adhesiveness.

The coating composition of the first embodiment can be used as, for example, a coating composition for coating an optical member. More specifically, the coating composition can be used as a coating composition for coating a lens, an ICT member, an AR member, a VR member, or the like.

Examples of the coating method can include known methods such as spin coating, dip coating, spray coating, flow coating, bar coating, gravure coating, and die coating.

<<Laminated Body>>

The laminated body of the first embodiment includes the cured product of the photocurable composition of the first embodiment.

The cured product of the photocurable composition of the first embodiment is excellent in adhesiveness, and thus can be suitably used as an adhesion layer for adhesion between layers.

In other words, it is preferable in the laminated body of the first embodiment that the cured product of the photocurable composition of the first embodiment is an adhesion layer.

The cured product of the photocurable composition of the first embodiment is excellent in close adhesiveness and exhibits a high refractive index, and can be suitably used as a coating layer.

In other words, it is preferable in the laminated body of the first embodiment that the cured product of the photocurable composition of the first embodiment is a coating layer.

[Method of Producing Photocurable Composition (Dissolution Method)]

The photocurable composition of the first embodiment is preferably produced by mixing solid substances such as the base generator (a), the photo-sensitizer, and the metal catalyst, with the polyiso(thio)cyanate compound (b), and then adding the polythiol compound (c) and the episulfide compound (f), from the viewpoint of a decrease in dissolution time.

The isocyanate compound is low in viscosity and relatively high in dissolution capability, and thus the solid substances are preferably dissolved in the isocyanate compound in advance. In this regard, the thiol compound and the episulfide compound are relatively low in dissolution capability, and thus are preferably added to a mixed liquid in which the solid substances are dissolved in advance.

<<Method of Producing Cured Product>>

A method of producing a cured product of the first embodiment includes a step of curing the photocurable composition of the first embodiment.

For example, optical energy or thermal energy can be used for curing the photocurable composition of the first embodiment. Optical energy is preferably used from the viewpoint of a decrease in curing time.

Examples of the method for curing the photocurable composition by optical energy include irradiation with ultraviolet light and irradiation with visible light.

Examples of the method for curing the photocurable composition by thermal energy include heating in an electric furnace.

Optical energy and thermal energy can be freely combined. Examples include a method including performing only irradiation with ultraviolet light or the like, a method including performing only heating, and any combination such as a method including performing irradiation with ultraviolet light or the like, and then heating, a method including performing heating and then irradiation with ultraviolet light or the like, a method including performing irradiation with ultraviolet light or the like with heating, and a method including performing heating, then irradiation with ultraviolet light or the like, and again heating.

Curing by optical energy and curing by thermal energy are preferably combined from the viewpoint of an increase in degree of polymerization of the cured product.

The method of producing the cured product of the first embodiment preferably includes a step of curing the photocurable composition of the first embodiment by irradiation with ultraviolet light or visible light.

The method of producing the cured product of the first embodiment preferably further includes a step of curing the photocurable composition by placing the photocurable composition in a room temperature or heating environment after the irradiation, in addition to the above step.

The irradiation with ultraviolet light or the like may be performed by direct irradiation of the photocurable composition of the first embodiment, or irradiation thereof with allowing ultraviolet light or the like to penetrate through a substrate or a mold having light permeability.

Such ultraviolet light or visible light preferably includes light at a wavelength of from 200 nm to 450 nm.

In the case of use of ultraviolet light, a light source such as sunlight, a chemical lamp, a mercury lamp, a metal halide lamp, or UVLED can be used. If necessary, a specified wavelength cut filter, a heat ray cut filter, or a wavelength cut filter which suppresses ozone generation may be used, or the cured product may be cooled or heated during irradiation with ultraviolet light.

Examples of ultraviolet light irradiation conditions include an irradiance of from 0.1 $mW/cm^2$ to 1,000 $mW/cm^2$, a cumulative amount of light of from 10 $mJ/cm^2$ to 30,000 $mJ/cm^2$, and an irradiation time of from 0.1 seconds to 500 seconds.

The heating may be performed by heating at a constant temperature, or may be performed by heating and cooling with a combination of heating, a temperature rise, cooling, and a temperature drop at a predetermined temperature for a predetermined time, by use of a temperature regulator or an electric furnace in which temperature regulation can be made based on a temperature program.

The heating may be performed under conditions of a temperature of from 20°C to 200°C, and a time of from 0.1 hours to 80 hours.

If necessary, a treatment such as anneal may also be performed from the viewpoint of relaxation or the like of internal stress generated in the cured product during curing. The treatment is usually performed at a temperature of from 50°C to 150°C, preferably from 70°C to 140°C, more preferably from 80°C to 130°C.

The atmosphere during curing, here adopted, can be any atmosphere such as an air atmosphere, a nitrogen atmosphere, or an inert gas atmosphere. The relative humidity during curing is preferably from 0.001% to 95%, more preferably from 0.001% to 80%, still more preferably from 0.001% to 70% from the viewpoint of curability.

The curable composition of the first embodiment sometimes undergoes polymerization inhibition due to oxygen in air, when optically cured. In a case in which the curable composition undergoes polymerization inhibition due to oxygen, exposure is preferably performed in an atmosphere at a low oxygen concentration in order to shorten the exposure time or sufficiently polymerize the curable composition.

Specific examples include a method including performing exposure with the atmosphere surrounding the curable composition being replaced with nitrogen gas or carbon dioxide. The oxygen concentration here is preferably 10% by volume or less, more preferably 5% by volume or less.

The curable composition may be cured after, for example, covering a surface of the curable composition with a film, a plate, or the like, or sealing the curable composition in a mold. The film, the plate, and the mold used in this case is preferably, for example, glass, plastic, metal, or a polytetrafluoroethylene resin. In the case of curing by light irradiation, a film, a plate and a mold used in the surface to be irradiated with light preferably have light permeability.

Such a mold may be one assembled with a tape, a gasket, or the like.

The mold used in the production of the cured product of the first embodiment may be one subjected to a release treatment in order to enhance releasability between the cured product and a mold surface. The mold here used is suitably one treated with a release agent such as a silicone compound or a fluorine-containing compound.
The thickness of the cured product of the first embodiment is preferably 10 mm or less, more preferably 5 mm or less, still more preferably 3 mm or less from the viewpoint of photocurability. The thickness of the cured product is preferably 0.01 μm or more, more preferably 0.05 μm or more, still more preferably 0.1 μm or more from the viewpoint of adhesiveness or the like.
The substrate in the first embodiment refers to a member to be coated with the photocurable composition of the first embodiment, or a member for adhesion by the photocurable composition. The substrate is not essential for obtaining the cured product of the curable composition of the first embodiment. The cured product may be taken out from the substrate.
The substrate in the first embodiment can be selected depending on various applications, and examples include quartz, glass, an optical film, a ceramic material, a deposited film, a magnetic film, reflective film, a metal plate of Ni, Cu, Cr, Fe, or the like, paper, SOG (Spin On Glass), a polyester resin, a polycarbonate resin, a polyimide resin, a polyurethane resin, a polythiourethane resin, a polyepisulfide resin, a polyurethane urea resin, a polyacrylic resin, a polyallyl resin, a polyvinyl resin, a polyolefin resin, an acetylcellulose resin, a TFT array plate, an electrode plate of PDP, a conductive plate of metal (for example, ITO), an insulating plate, and a semiconductor production substrate such as silicon, silicon nitride, polysilicon, oxidized silicon, or amorphous silicon.
The shape of the substrate is also not particularly limited, and may be a plate shape or a roll shape. A light-permeable or non-light-permeable substrate can be selected.
The substrate in the first embodiment may be subjected to a pre-treatment such as etching. Examples of the etching method include alkali etching involving immersion in an aqueous alkali solution, plasma etching involving exposure to gas plasma of oxygen or the like, and UV ozone etching involving exposure to ultraviolet light and ozone.

<<Imprint Member>>

An imprint member of the first embodiment includes the cured product of the photocurable composition of the first embodiment.
The photocurable composition of the first embodiment is excellent in photocurability, and thus can be used for formation of an imprint member.
The "imprint" in the first embodiment means transfer of a pattern of a mold having the pattern.
The structure of the pattern to be transferred may be a repeated structure or is not necessarily a repeated structure. The imprint member of the first embodiment means a member which has a pattern transferred by imprint and which is produced by imprint.
The photocurable composition of the first embodiment can be used for production of the imprint member.
For example, a composition for imprint member production, to be used for production of the imprint member, may also be used, and the composition for imprint member production includes the photocurable composition of the first embodiment.
The size of the imprint structure is not particularly limited, and is, for example, from several nanometers to several centimeters from the viewpoint of exertion of the function of the imprint member.
The mold usable for producing the imprint member of the first embodiment may have light permeability or non-light permeability.
Specific examples include glass, quartz, a light-permeable resin such as a polyacrylic resin, a polyethylene terephthalate resin, a polyethylene naphthalate resin, a polycarbonate resin, or a polyolefin resin, a transparent metal-deposited film, a flexible film such as polydimethylsiloxane, a photocured film, a metal film, a ceramic material, a deposited film, a magnetic film, a reflective film, a metal plate of Ni, Cu, Cr, Fe, or the like, SiC, silicon, silicon nitride, polysilicon, oxidized silicon, and amorphous silicon.
The shape of the mold is not particularly restricted, and the mold may be a plate-shaped mold or a roll-shaped mold. A roll-shaped mold is applied particularly in a case in which continuous productivity of transfer is required.
In a case in which the imprint member of the first embodiment is produced, the mold is (pushed on) pressed on and contacted with a pattern formation layer surface in order to transfer a pattern to a pattern formation layer. Thus, a fine pattern formed in advance on a pushing surface of the mold can be transferred to the pattern formation layer.
The imprint member of the first embodiment can be produced by curing the photocurable composition of the first embodiment sandwiched between the substrate and the mold, and then releasing the mold.
In a case in which curing is made by irradiation with light in production of the imprint member of the first embodiment, it is preferable that a substrate or a mold having transparency in the wavelength region of the light is used and the substrate or the mold having transparency is irradiated with light.
The imprint member of the first embodiment can be used as, for example, an ICT member, an AR member, a

VR member, a decorative member, a hologram member, or other optical member, but not particularly limited thereto.

«Optical Waveguide»

An optical waveguide of the first embodiment includes the cured product of the photocurable composition of the first embodiment.
The cured product of the photocurable composition of the first embodiment exhibits a high refractive index, and thus can be suitably used as an optical waveguide.
The optical waveguide of the first embodiment can be used as, for example, an ICT member, an AR member, a VR member, or other optical member, but not particularly limited thereto.

«Film»

A film of the first embodiment includes the cured product of the photocurable composition of the first embodiment.
The photocurable composition of the first embodiment is excellent in photocurability, and can allow for production of a film by thin film formation. The cured product of the photocurable composition of the first embodiment is excellent in strength and thus can be suitably used as a film.
The thickness of the film is preferably from 0.01 mm to 2.00 mm, still more preferably from 0.05 mm to 1.00 mm from the viewpoint of strength of the film.
The film of the first embodiment has a high refractive index and is excellent in transparency, and thus can be used in, for example, an optical film, a film for display, or an optical waveguide.

<<Lens>>

A lens of the first embodiment includes the cured product of the photocurable composition of the first embodiment.
The cured product of the photocurable composition of the first embodiment has a high refractive index, and thus can be suitably used as the lens.
The cured product of the curable composition of the first embodiment may form one portion of the lens, or may form the whole lens.
In the case of formation of one portion of the lens, a laminated body is preferable in which a layer including the cured product of the photocurable composition of the first embodiment is provided on a surface of the laminated body.
In other words, the cured product of the photocurable composition of the first embodiment is preferably layered on a surface of the lens of the first embodiment.
In this case, the cured product may be layered on one surface of the lens, or may be layered on each of both surfaces of the lens. A layer including the cured product is formed on a surface of the lens, whereby, for example, a plurality of regions having optical refractive power can be imparted to the lens, strength can be imparted thereto, scratch resistance can be imparted thereto, or a function layer can be imparted thereto.
In a case in which a layer including the cured product of the photocurable composition of the first embodiment is provided on a surface of the lens, examples of the production method include a method including contacting the photocurable composition with a surface of a prefabricated lens (also referred to as "lens substrate".) and then curing the photocurable composition, and a method of producing the lens using a mold having the cured product of the photocurable composition of the first embodiment on a surface of the mold.
The method of producing a lens having the laminated body structure of the first embodiment preferably includes a step of contacting the photocurable composition of the first embodiment with a lens substrate, and then curing the photocurable composition.
The method of producing a lens having the laminated body structure of the first embodiment preferably also includes an in-mold molding step of producing a molded article using a mold including the cured product of the photocurable composition of the first embodiment on a surface of the mold.
In a case in which the cured product of the photocurable composition of the first embodiment is layered on a surface of a lens substrate, the production method preferably includes the following steps. The lens substrate may be subjected to an etching treatment with an alkali liquid, plasma, ozone, or the like before use in the following steps. The lens substrate is preferably heated and dried. The shape of the lens substrate may be a shape of a cast finish lens (completed lens) or may be a shape of a semi-finish lens (namely, semi-completed lens). Any other step may also be included between the steps.

Step 1: step of preparing a mold
Step 2: step of contacting the photocurable composition of the first embodiment with the mold

Step 3: step of contacting a lens substrate with the photocurable composition on the mold
Step 4: step of curing the photocurable composition

The resulting laminated body may be subjected to an annealing treatment by heating or the like.
In a case in which the lens is produced using a mold having the cured product of the photocurable composition of the first embodiment on a surface of the mold, the production method preferably includes the following steps. This procedure may be called in-mold molding method. When a monomer-mixed liquid for lens production is polymerized, a tape, a gasket, or the like may be used. The cured product of the photocurable composition of the first embodiment may be layered on one surface of the lens, or may be layered on each of both surfaces of the lens.

Step 1: step of preparing a mold
Step 2: step of contacting the photocurable composition of the first embodiment with the mold
Step 3: step of curing the photocurable composition on a mold for lens production to obtain the mold for lens production, on which a cured product is layered
Step 4: step of polymerizing a monomer-mixed liquid for lens production, in a cavity for lens polymerization including the mold for lens production, on which the cured product is layered, and other member
Step 5: step of releasing the mold

The resulting laminated body may be subjected to an annealing treatment by heating or the like.
A lens including the cured product of the curable composition of the first embodiment may have a pattern. Specific examples of the pattern include each structure of a fine asperity, a microlens, and a Fresnel lens. The structure of the pattern may be a repeated structure or is not necessarily a repeated structure.
Examples of the method of providing the pattern include a method including using a mold in which the pattern is graven, and a method of providing the pattern by additive manufacturing.
In the case of formation of the whole lens, the thickness of the cured product of the photocurable composition of the first embodiment is preferably 10 mm or less, more preferably 5 mm or less, still more preferably 3 mm or less from the viewpoint of photocurability. The thickness of the lens is preferably 0.1 mm or more, more preferably 0.5 mm or more, still more preferably 1 mm or more from the viewpoint of strength of the lens.
In the case of formation of one portion of the lens, the thickness of the layer including the cured product of the photocurable composition of the first embodiment is preferably 5 mm or less, more preferably 1 mm or less, still more preferably 0.3 mm or less from the viewpoint of photocurability. The thickness is preferably 1.0 μm or more, more preferably 3.0 μm or more, still more preferably 5.0 μm or more from the viewpoint of close adhesiveness.

<<Lens Having Regions Having Optical Refractive Powers Different From Each Other on At Least Two or More Locations>>

A lens having regions having optical refractive powers different from each other on at least two or more locations, of the first embodiment, includes the cured product of the photocurable composition of the first embodiment.
The cured product of the photocurable composition of the first embodiment has a high refractive index, and thus can be used as a lens having regions having optical refractive powers different from each other on at least two or more locations.
The absolute value of the difference between optical refractive powers different from each other is preferably from 0.01 D to 10 D, more preferably from 0.05 D to 8 D, still more preferably from 0.1 D to 5 D from the viewpoint of the optical function of the lens.

«Multifocal Lens»

The cured product of the photocurable composition of the first embodiment has a high refractive index, and thus can be suitably used as a multifocal lens.
Specifically, the lens having regions having optical refractive powers different from each other on at least two or more locations is preferably a multifocal lens.
Specific examples of the multifocal lens include a bifocal lens, a progressive lens, a defocus lens, a myopia control lens, and a hyperopia control lens, and a myopia control lens or a hyperopia control lens is preferable.
The number of focal points may be 2, or may be 2 or more.
The cured product of the photocurable composition of the first embodiment can be used for producing one portion of the multifocal lens or the whole multifocal lens.

<<Myopia Control Lens or Hyperopia Control Lens>>

The cured product of the photocurable composition of the first embodiment can be suitably used as a myopia control lens or a hyperopia control lens from the viewpoint of having a high refractive index.

The shape of the myopia control lens or the hyperopia control lens is not particularly limited, and specific examples of the shape include a lens having a fine convex lens or concave lens structure. The fine convex lens or concave lens may be present on a lens surface, or may be present in the lens. The diameter of the fine convex lens or the concave lens is preferably from 0.5 mm to 2.0 mm.

More specific examples include any lens described in U.S. Patent publication No. 2017/0131567, WO 2019-166653, WO 2020-078964, or the like.

<<Composition for Additive Manufacturing, Method of Producing Molded Article, Including Additive Manufacturing Step>>

The photocurable composition of the first embodiment has excellent photocurability, and thus can be suitably used as a composition for additive manufacturing (3D printing).

A composition for additive manufacturing of the first embodiment includes the photocurable composition.

The method of producing a molded article of the first embodiment preferably includes a step of producing a molded article with the composition for additive manufacturing, according to additive manufacturing.

The additive manufacturing method is not particularly limited, and specific examples can include a method (material spraying method) of obtaining a molded article by repeatedly performing ejection and photocuring of liquid droplets of the photocurable composition of the first embodiment, and a method (liquid layer photopolymerization method) of obtaining a molded article by layering the cured product by light irradiation of a liquid surface of a pool of the photocurable composition. Examples of the ejection method in the material spraying method include ejection by ink-jet and ejection by a syringe.

The method of curing the cured product in the additive manufacturing step may be performed by only light irradiation, or a combination of light irradiation and heating.

In a case in which a shaped surface including a photocurable resin composition is irradiated with active energy ray to form each cured resin layer having a predetermined shape pattern, a shaping system may be adopted which involves forming such each cured resin layer by a dot drawing or line drawing system with active energy ray focused in a dotted manner, such as laser light, or which involves forming such each cured resin layer by irradiation of the shaped surface with active energy ray through a sheet-shaped drawing mask formed by alignment of a plurality of micro-optical shutters such as liquid crystal shutters or digital micro-mirror shutters (DMD).

Specific examples of an article produced by additive manufacturing include an optical member, an optical waveguide, a film, a microlens array, a lens, a multifocal lens, a defocus lens, a myopia control lens, and a hyperopia control lens.

«Microlens Array, Wafer Level Lens»

The cured product of the photocurable composition of the first embodiment has a high refractive index, and thus can be suitably used as a microlens array or a wafer level lens.

A microlens array or a wafer level lens of the first embodiment includes the cured product of the photocurable composition.

The cured product of the curable composition of the first embodiment may form one portion of a microlens array or a wafer level lens, or may form the whole microlens array or wafer level lens.

A microlens array or a wafer level lens, when produced, may be produced by the production method including the following steps. Any other step may also be included between the steps.

Step 1: step of preparing a microlens array- or wafer level lens-forming mold having one or more lens molds
Step 2: step of contacting the photocurable composition of the first embodiment with the microlens array- or wafer level lens-forming mold
Step 3: step of curing the curable composition of the first embodiment to obtain a microlens array or a wafer level lens

The microlens array or the wafer level lens may also be subjected to an annealing treatment by heating or the like, after curing.

The microlens array or the wafer level lens obtained may also be layered on other microlens array or wafer level lens to produce a laminated body of lenses.

<<Method of Producing Molded Article Having Difference in Angle between Molds before and after Polymerization, of 0.05° or less>>

The method of producing the molded article of the first embodiment includes a step of curing the photocurable composition of the first embodiment in two molds, in which the difference between the angle formed by the two molds before curing and the angle formed by the two molds after curing in the curing step is preferably 0.05° or less.

The mold surface used in the present production method may be flat, or may have a pattern.

The difference in angle formed by the two molds, before and after curing, is smaller, whereby a cured product excellent in parallelism can be produced.

<<Method of Producing Molded Article by Pressurizing Curable Composition during Curing of Curable Composition>>

The method of producing a molded article having a difference in angle between molds before and after polymerization, of 0.05° or less, preferably further involves pressurization of the curable composition during curing of the photocurable composition in the curing step.

The curable composition is pressurized during curing of the curable composition, whereby a cured product excellent in parallelism can be produced.

The pressure applied to the cured product is preferably from 0.1 Pa to 1 MPa, more preferably from 1 Pa to 1 kPa, still more preferably from 5 Pa to 100 Pa.

«Molded Article Exhibiting TTV of 50 μm or less»

The molded article of the first embodiment includes the cured product of the photocurable composition of the first embodiment, in which the TTV (Total Thickness Variation) is preferably 50 μm or less.

The molded article can be suitably used in an optical member, an optical waveguide, an ICT member, an AR member, or a VR member.

TTV means the difference between the maximum value and the minimum value of thicknesses in a region of the molded article, in which the flatness is applied.

TTV is measured with, for example, FLATMASTER (registered trademark) MSP-40, FLATMASTER MSP-150, FLATMASTER MSP-300, FLATMASTER INDUSTRIAL, or the like manufactured by CORNING TROPEL (registered trademark) CORP.

The first embodiment also includes the following aspects.

<1A> A photocurable composition including a base generator (a), a polyiso(thio)cyanate compound (b), and a polythiol compound (c), wherein the base generator (a) includes at least one selected from the group consisting of compounds represented by the following Formula (1) to the following Formula (4).

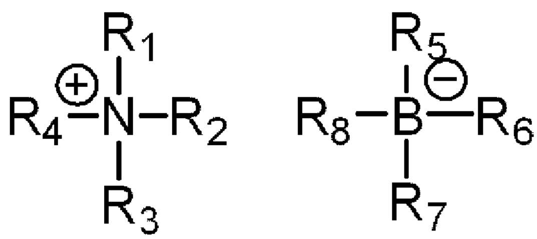

(1)

In Formula (1), each of $R_1$ to $R_4$ independently represents an alkyl group having from 1 to 8 carbon atoms, each of $R_5$ to $R_8$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

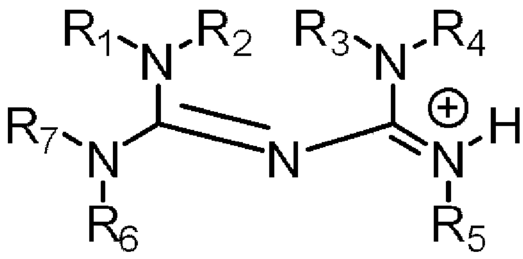 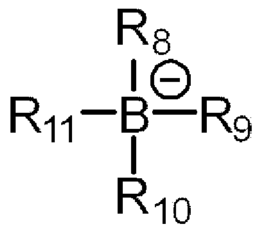

(2)

In Formula (2), each of $R_1$ to $R_7$ independently represents an alkyl group having from 1 to 8 carbon atoms or a cycloalkyl group having from 3 to 8 carbon atoms, each of $R_5$ to Rn independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

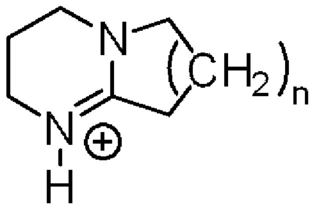 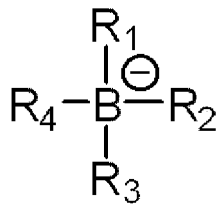

(3)

In Formula (3), n represents an integer from 1 to 3, each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

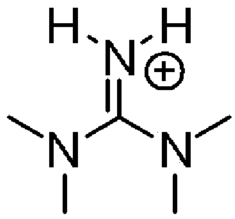 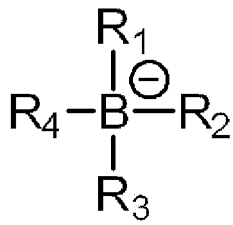

(4)

In Formula (4), each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

<2A> The photocurable composition according to <1A>, further including an episulfide compound (f) represented by the following Formula (5).

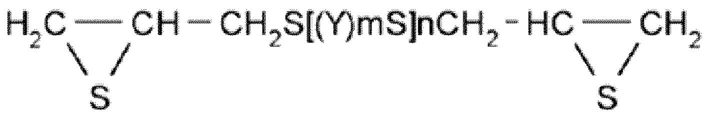

(5)

In Formula (5), Y represents a linear divalent hydrocarbon group having from 1 to 4 carbon atoms, a branched divalent hydrocarbon group having from 2 to 4 carbon atoms, a cyclic divalent hydrocarbon group having from 3 to 6 carbon atoms, a 1,4-dithiane group, an arylene group, or an aralkylene group, m represents an integer from 0 to 2, and n represents an integer from 0 to 3.

<3A> The photocurable composition according to <2A>, wherein a refractive index of a sodium D-line at 20°C, of each of the polythiol compound (c) and the episulfide compound (f), is from 1.60 to 1.80.

<4A> The photocurable composition according to <2A> or <3A>, wherein the episulfide compound (f) includes at least one selected from the group consisting of bis(2,3-epithiopropyl)sulfide, bis(2,3-epithiopropyl)disulfide, and 2,5-bis(2,3-epithiopropylthiomethyl)-1,4-dithiane.

<5A> The photocurable composition according to any one of <1A> to <4A>, wherein the polyiso(thio)cyanate compound (b) includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

<6A> The photocurable composition according to any one of <1A> to <5A>, wherein the polythiol compound (c) includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, and tris(mercaptomethylthio)methane.

<7A> The photocurable composition according to any one of <1A> to <6A>, further including a photo-sensitizer.

<8A> The photocurable composition according to any one of <1A> to <7A>, further including a metal catalyst.

<9A> An optical member including a cured product of the photocurable composition according to any one of <1A> to <8A>.

<10A> An adhesive including the photocurable composition according to any one of <1A> to <8A>.

<11A> A coating composition including the photocurable composition according to any one of <1A> to <8A>.

<12A> A laminated body including a cured product of the photocurable composition according to any one of <1A> to <8A>.

<13A> The laminated body according to <12A>, wherein the cured product is an adhesion layer.

<14A> The laminated body according to <12A>, wherein the cured product is a coating layer.

<15A> A method of producing a cured product, including a step of curing the photocurable composition according to any one of <1A> to <8A>, by irradiation with ultraviolet light or visible light.

<16A> The method of producing a cured product according to <15A>, further including a step of curing the photocurable composition by placing the photocurable composition in a room temperature or heating environment after the irradiation.

<17A> A composition for imprint member production, including the photocurable composition according to any one of <1A> to <8A>.

<18A> An imprint member including a cured product of the photocurable composition according to any one of <1A> to <8A>.

<19A> An optical waveguide including a cured product of the photocurable composition according to any one of <1A> to <8A>.

<20A> A film including a cured product of the photocurable composition according to any one of <1A> to <8A>.

<21A> A lens including a cured product of the photocurable composition according to any one of <1A> to <8A>.

<22A> The lens according to <21A>, wherein the cured product of the photocurable composition is layered on a surface.

<23A> A method of producing a lens having a laminated body structure, including a step of contacting the photocurable composition according to any one of <1A> to <8A>, with a lens substrate, and then curing the photocurable composition.

<24A> A method of producing a lens having a laminated body structure, including an in-mold molding step of producing a molded article using a mold including a cured product of the photocurable composition according to any one of <1A> to <8A>, on a surface of the mold.

<25A> A lens having regions having optical refractive powers different from each other on at least two or more locations, the lens including a cured product of the photocurable composition according to any one of <1A> to <8A>.

<26A> The lens according to <25A>, wherein the lens is a multifocal lens.

<27A> The lens according to <25A> or <26A>, wherein the lens is a myopia control lens or a hyperopia control lens.

<28A> A composition for additive manufacturing, including the photocurable composition according to any one of <1A> to <8A>.

<29A> A method of producing a molded article, including a step of producing a molded article with the composition for additive manufacturing according to <28A>, according to additive manufacturing.

<30A> A microlens array or a wafer level lens including a cured product of the photocurable composition according to any one of <1A> to <8A>.

<31A> A method of producing a molded article, including

a step of curing the photocurable composition according to any one of <1A> to <8A>, in two molds, wherein a difference between an angle formed by the two molds before curing and an angle formed by the two molds after curing in the curing step is 0.05° or less.

<32A> The method of producing a molded article according to <31A>, further involving pressurization of the curable composition during curing of the photocurable composition in the curing step.

<33A> A molded article including a cured product of the photocurable composition according to any one of <1A> to <8A>, wherein
a TTV (Total Thickness Variation) is 50 $\mu$m or less.

[Second Embodiment]

«Photocurable Composition»

A photocurable composition of the second embodiment includes a base generator (a), a polyiso(thio)cyanate compound (b), a polythiol compound (c), and a polyether-modified silicone compound (d).

A thiourethane resin may be used in the optical field, and can be produced by polymerization reaction of a polyiso(thio)cyanate compound and a polythiol compound. The photocurable composition of the second embodiment includes a base generator. The base generator can be irradiated with light to generate a base, thereby allowing polymerization reaction to progress.

The photocurable composition of the second embodiment includes the above configuration, and thus can allow for formation of a thiourethane resin excellent in transparency and releasability, and is excellent in photocurability.

<Base Generator (a)>

The photocurable composition of the second embodiment includes a base generator (a).

The base generator in the second embodiment means a compound which generates a free base by at least one of optical energy or thermal energy, such as electromagnetic wave.

The photocurable composition of the second embodiment includes the base generator (a), and thus can allow for an enhancement in photocurability of a polyiso(thio)cyanate compound and a polythiol compound.

Moreover, thermal curability can also be, if necessary, enhanced in a case in which thermal curing is performed.

The base generator (a) preferably includes at least one selected from the group consisting of compounds represented by the following Formula (a1) to the following Formula (a4).

The details of specific aspects, preferable aspects, and the like of the compounds represented by Formula (a1) to Formula (a4), for the base generator (a) in the second embodiment, are the same respectively as the details of specific aspects, preferable aspects, and the like of the compounds represented by Formula (1) to Formula (4), for the base generator (a) in the first embodiment.

The content of the base generator (a) is preferably 0.01 parts by mass or more, more preferably 0.03 parts by mass or more, still more preferably 0.05 parts by mass or more, from the viewpoint of excellent photocurability, under the assumption that the total mass of the polyiso(thio)cyanate compound (b) and the polythiol compound (c) (the polyiso(thio)cyanate compound (b), the polythiol compound (c), and an episulfide compound (f) described below in the

case of further inclusion of the episulfide compound (f)) is 100 parts by mass.

The content of the base generator (a) is preferably 5.00 parts by mass or less, more preferably 3.00 parts by mass or less, still more preferably 1.00 part by mass or less from the viewpoint of an enhancement in pot life and from the viewpoint of enhancements in close adhesiveness and adhesiveness, under the assumption that the total mass of the polyiso(thio)cyanate compound (b) and the polythiol compound (c) (the polyiso(thio)cyanate compound (b), the polythiol compound (c), and an episulfide compound (f) described below in the case of further inclusion of the episulfide compound (f)) is 100 parts by mass.

<Polyiso(thio)cyanate Compound (b)>

The photocurable composition of the second embodiment includes a polyiso(thio)cyanate compound (b).

The photocurable composition of the second embodiment includes the polyiso(thio)cyanate compound (b), and thus can allow a cured product excellent in close adhesiveness and adhesiveness to be obtained. A cured product having a high refractive index can also be obtained.

The polyiso(thio)cyanate compound (b) in the second embodiment is not necessarily needed to include at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate, unlike the polyiso(thio)cyanate compound (b) in the first embodiment, and may also include such at least one compound.

The details of specific aspects, preferable aspects, and the like of the polyiso(thio)cyanate compound (b) in the second embodiment are the same respectively as the details of specific aspects, preferable aspects, and the like of the polyiso(thio)cyanate compound (b) in the first embodiment.

<Polythiol Compound (c)>

The photocurable composition of the second embodiment includes a polythiol compound (c).

In the second embodiment, two or more of such polythiol compounds (c) may be referred to as "polythiol composition".

The photocurable composition of the second embodiment includes the polyiso(thio)cyanate compound (b) and the polythiol compound (c), and thus can provide a thiourethane resin, when cured. The photocurable composition includes the polyiso(thio)cyanate compound (b) and the polythiol composition, and thus can provide a thiourethane resin, when cured.

The details of specific aspects, preferable aspects, the refractive index of a sodium D-line (namely, light at a wavelength of 589.3 nm), the total content of the polyiso(thio)cyanate compound (b) and the polythiol compound (c), the content of the polythiol compound (c) with respect to the content of the polyiso(thio)cyanate compound (b), (c/b), and the like, of the polythiol compound (c) in the second embodiment, are the same respectively as the details of specific aspects, preferable aspects, the refractive index of a sodium D-line (namely, light at a wavelength of 589.3 nm), the total content of the polyiso(thio)cyanate compound (b) and the polythiol compound (c), the content of the polythiol compound (c) with respect to the content of the polyiso(thio)cyanate compound (b), (c/b), and the like, of the polythiol compound (c) in the first embodiment.

<Polyether-Modified Silicone Compound (d)>

The photocurable composition of the second embodiment includes a polyether-modified silicone compound (d).

The polyether-modified silicone compound (d) can be used as a so-called internal release agent.

The photocurable composition of the second embodiment includes the polyether-modified silicone compound (d), and thus can enhance releasability of a cured product.

The polyether-modified silicone compound (d) preferably includes at least one selected from the group consisting of a polyether-modified silicone compound (d1) represented by the following Formula (1) and a polyether-modified silicone compound (d2) represented by the following Formula (2) from the viewpoint of releasability.

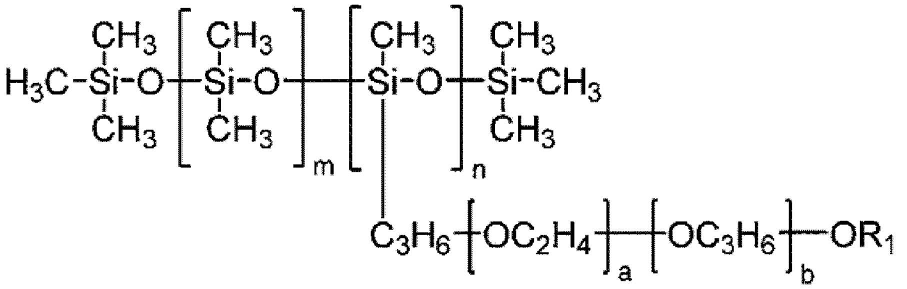

(1)

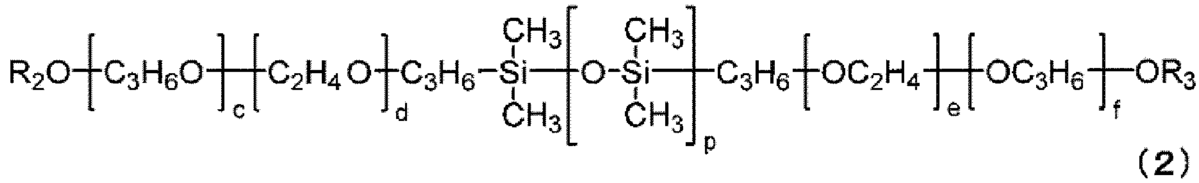

(2)

In Formula (1), each of m and n independently represents an integer of 1 or more. Each of a and b independently represents an integer of 0 or more (except for a case in which both a and b represent 0). $R_1$ represents a linear or branched alkyl group having from 1 to 6 carbon atoms, a linear or branched alkenyl group having from 2 to 10 carbon atoms, an acryloyl group, a methacryloyl group, or a hydrogen atom.

In Formula (2), p represents an integer of 1 or more, and each of c, d, e, and f independently represents an integer of 0 or more (except for a case in which all of c, d, e and f represent 0). Each of $R_2$ and $R_3$ independently represents a linear or branched alkyl group having from 1 to 6 carbon atoms, a linear or branched alkenyl group having from 2 to 10 carbon atoms, an acryloyl group, a methacryloyl group, or a hydrogen atom.

In Formula (1) and (2), a unit represented by ($OC_3H_6$) represents an oxypropylene group ($O-CH(CH_3)-CH_2$), and $C_3H_6$ in a moiety represented by $Si-C_3H_6-(OC_2H_4)$ represents a trimethylene group (1,3-propanediyl group ($-CH_2CH_2CH_2-$)).

In Formula (1), m preferably represents an integer from 1 to 500, more preferably an integer from 10 to 300. n preferably represents an integer from 1 to 100, more preferably an integer from 1 to 50.

a preferably represents an integer from 0 to 1000, more preferably an integer from 1 to 500. b preferably represents an integer from 0 to 1000, more preferably an integer from 0 to 500.

The weight average molecular weight of the polyether-modified silicone compound represented by Formula (1) is preferably from 200 to 100,000, more preferably from 1,000 to 80,000.

In Formula (2), p preferably represents an integer from 1 to 500, more preferably an integer from 10 to 300.

Each of c and f preferably represents an integer from 0 to 1000, more preferably an integer from 1 to 500. Each of d and e preferably represents an integer from 0 to 1000, more preferably an integer from 0 to 500.

The weight average molecular weight of the polyether-modified silicone compound represented by Formula (2) is preferably from 200 to 100,000, more preferably from 1,000 to 80,000.

In Formula (1), the mole fraction of the silicone unit [namely, $(m + n)/(m + n + a + b)$] is preferably from 0.08 to 0.60.

The mole fraction of the silicone unit is 0.08 or more, and thus releasability can be sufficiently retained.

The mole fraction of the silicone unit is 0.60 or less, and thus a cured product can be inhibited from being cloudy, opaque, and the like, and can retain transparency.

The mole fraction of the silicone unit in Formula (1) is more preferably from 0.10 to 0.50 from the same viewpoint as described above.

In Formula (1), the mole fraction of the polyether unit [namely, $(a + b)/(a + b + m + n)$] is preferably from 0.40 to 0.92.

The mole fraction of the polyether unit is 0.40 or more, and thus a cured product can be inhibited from being cloudy, opaque, and the like, and can retain transparency.

The mole fraction of the polyether unit is 0.92 or less, and thus releasability can be sufficiently retained.

The mole fraction of the polyether unit in Formula (1) is more preferably from 0.50 to 0.90 from the same viewpoint as described above.

The mole fractions of the silicone unit and the polyether unit are measured by the following method.

The mole fractions of the silicone unit and the polyether unit are measured by $^1H$-NMR, as follows.

First, the value of integral in a chemical shift of $\delta_{ppm}$ = 0.4 to 0.6 ($Si-CH_2-(EO)$) is defined as 2. The value of integral means the value of integral of a methylene group in a $Si-CH_2-(EO)$ moiety.

This value of integral is defined as reference, and the values of integral X, Y, and Z in the following chemical

shifts are respectively calculated.

A is calculated by the following Formula (1).

$$A = (((Z/3)-3)/2) + 3 \qquad (1)$$

In Formula (1), Z means the value of integral in a chemical shift of $\delta_{ppm}$ = -0.2 to 0.2 ($CH_3$-Si). The value of integral means the value of integral of a methyl group in a $CH_3$-Si moiety.

B is calculated by the following Formula (2).

$$B = ((X-Y-2)/4) + (Y/3) \qquad (2)$$

In Formula (2), X means the value of integral in a chemical shift of $\delta_{ppm}$ = 3.2 to 3.9 ($CH_2$-$CH_2$-O). The value of integral means the value of integral of a methylene group in an oxyethylene moiety.

In Formula (2), Y means the value of integral in a chemical shift of $\delta_{ppm}$ = 1.0 to 1.2 ($CH_2$-$CH(CH_3)$-O). The value of integral means the value of integral of a methyl group in an oxypropylene moiety.

The mole fraction of the silicone unit is measured according to $(A/(A + B)) \times 100$.

The mole fraction of the polyether unit is measured according to $(B/(A + B)) \times 100$.

In Formula (2), the mole fraction of the silicone unit [namely, p/(p + c + d + e + f)] is preferably from 0.08 to 0.60.

The mole fraction of the silicone unit in Formula (2) is 0.08 or more, and thus releasability can be sufficiently retained.

The mole fraction of the silicone unit in Formula (2) is 0.60 or less, and thus a cured product can be inhibited from being cloudy, opaque, and the like, and can retain transparency.

The mole fraction of the silicone unit in Formula (2) is more preferably from 0.10 to 0.50 from the same viewpoint as described above.

In Formula (2), the mole fraction of the polyether unit [namely, (c + d + e + f)/(c + d + e + f + p)] is preferably from 0.40 to 0.92.

The mole fraction of the polyether unit in Formula (2) is 0.40 or more, and thus a cured product can be inhibited from being cloudy, opaque, and the like, and can retain transparency.

The mole fraction of the polyether unit in Formula (2) is 0.92 or less, and thus releasability can be sufficiently retained.

The mole fraction of the polyether unit in Formula (2) is more preferably from 0.50 to 0.90 from the same viewpoint as described above.

The method of measuring the mole fractions of the silicone unit and the polyether unit is the same as the above method.

The mole fraction of the total silicone unit in Formula (1) and Formula (2) [namely, (m + n + p)/(m + n + p + a + b + c + d + e + f)] is preferably from 0.08 to 0.60.

The mole fraction of the total silicone unit in Formula (1) and Formula (2) is 0.08 or more, and thus releasability can be sufficiently retained.

The mole fraction of the total silicone unit in Formula (1) and Formula (2) is 0.60 or less, and thus a cured product can be inhibited from being cloudy, opaque, and the like, and can retain transparency.

The mole fraction of the total silicone unit in Formula (1) and Formula (2) is more preferably from 0.10 to 0.50 from the same viewpoint as described above.

The mole fraction of the total polyether unit in Formula (1) and Formula (2) [namely, (a + b + c + d + e + f)/(a + b + c + d + e + f + m + n + p)] is preferably from 0.40 to 0.92.

The mole fraction of the total polyether unit in Formula (1) and Formula (2) is 0.40 or more, and thus a cured product can be inhibited from being cloudy, opaque, and the like, and can retain transparency.

The mole fraction of the total polyether unit in Formula (1) and Formula (2) is from 0.92 or less, and thus releasability can be sufficiently retained.

The mole fraction of the total polyether unit in Formula (1) and Formula (2) is more preferably from 0.50 to 0.90 from the same viewpoint as described above.

In a case in which the polyether-modified silicone compound (d) includes both a polyether-modified silicone

compound (d1) and a polyether-modified silicone compound (d2),

the ratio (b1:b2) between the polyether-modified silicone compound (d1) and the polyether-modified silicone compound (d2) may be from 5:95 to 95:5, and is preferably from 10:90 to 90:10, more preferably from 20:80 to 80:20, from the viewpoint of the effects of the second embodiment.

The polyether-modified silicone compound (d) may contain one kind of each of the polyether-modified silicone compound (d1) and the polyether-modified silicone compound (d2), or may contain two or more kinds thereof.

<Episulfide Compound (f)>

The photocurable composition of the second embodiment preferably further includes the episulfide compound (f) represented by the following Formula (3).

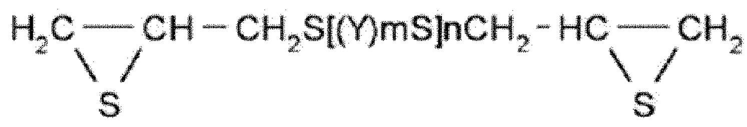

(3)

In Formula (3), Y represents a linear divalent hydrocarbon group having from 1 to 4 carbon atoms, a branched divalent hydrocarbon group having from 2 to 4 carbon atoms, a cyclic divalent hydrocarbon group having from 3 to 6 carbon atoms, a 1,4-dithiane group, an arylene group, or an aralkylene group, m represents an integer from 0 to 2, and n represents an integer from 0 to 3.

Y optionally includes a substituent, or is optionally unsubstituted.

The details of specific aspects, preferable aspects, the content, the refractive index of a sodium D-line (namely, light at a wavelength of 589.3 nm), and the like of the episulfide compound (f) represented by Formula (3) in the second embodiment are the same respectively as the details of specific aspects, preferable aspects, the content, the refractive index of a sodium D-line (namely, light at a wavelength of 589.3 nm), and the like of the episulfide compound (f) represented by Formula (5) in the first embodiment.

The episulfide compound (f) represented by Formula (3) corresponds to an episulfide compound (f) represented by Formula (5).

The photocurable composition of the second embodiment preferably further includes an ultraviolet absorbent (e) which is at least one selected from the group consisting of the compounds represented by Formula (e-1) to Formula (e-4).

(Photo-sensitizer)

The photocurable composition of the second embodiment preferably further includes a photo-sensitizer.

The details of specific aspects, preferable aspects, the content, and the like of the photo-sensitizer in the second embodiment are the same respectively as the details of specific aspects, preferable aspects, the content, and the like of the photo-sensitizer in the first embodiment.

(Metal Catalyst)

The photocurable composition of the second embodiment preferably further includes a metal catalyst.

The details of specific aspects, preferable aspects, the content, and the like of the metal catalyst in the second embodiment are the same respectively as the details of specific aspects, preferable aspects, the content, and the like of the metal catalyst in the first embodiment.

An additive such as an epoxy group-containing compound, a phenol compound, an amino group-containing compound, a sulfur atom-containing inorganic compound, or a selenium atom-containing inorganic compound may be added to the photocurable composition of the second embodiment, for the purpose of improvements in various performances, for example, weather resistance, oxidation resistance, strength, hardness, close adhesiveness with a substrate, refractive index, and dyeing affinity, of the cured product. In this case, a known polymerization and curing catalyst can be, if necessary, separately added as one additive.

In a case in which such an additive is added for the purpose of improvements in various performances, for

example, weather resistance, oxidation resistance, strength, hardness, close adhesiveness with a substrate, refractive index, and dyeing affinity, of the cured product, the content of the additive is preferably from 1% by mass to 70% by mass, more preferably from 3% by mass to 60% by mass, still more preferably from 5% by mass to 50% by mass with respect to the mass of the photocurable composition of the second embodiment.

Any other component(s) other than the above can be added to the photocurable composition of the second embodiment, for example, a solvent, a bluing agent, an IR cut agent, a blue light cut agent, a reactive diluent, an oil-soluble dye, a pigment, a perfume, a filler, a close adhesiveness enhancer such as a coupling agent, a chain extender, a crosslinker, a defoamer, a precipitation inhibitor, a dispersant, a plasticizer, a dripping inhibitor, an antifouling agent, a preservative agent, a disinfectant, an anti-bacterial agent, a fungicide, a delustering agent, a thickener, a pigment dispersant, a cissing inhibitor, a scratch resistance enhancer, a slipping agent, a surface modifier, a color separation inhibitor, an emulsifier, an anti-skinning agent, a desiccant, an antifouling agent, an antistatic agent, a conductive agent (electrostatic aid), a flame retardant, a heat conductivity improver, a plasticizer, a silica fine particle, a zirconium oxide fine particle, a titanium oxide fine particle, a zinc oxide fine particle, a silver oxide fine particle, a polyolefin fine particle, a poly(meth)acrylic fine particle, and/or a polyurethane fine particle.

The content of such other component(s) may be usually from 0.1 ppm to 70% by mass, and is preferably from 1 ppm to 30% by mass, more preferably from 10 ppm to 10% by mass, still more preferably from 0.1% by mass to 5% by mass with respect to the mass of the photocurable composition of the second embodiment.

The ppm means ppm by mass.

[Method of Producing Photocurable Composition (Dissolution Method)]

The photocurable composition of the second embodiment is preferably produced by mixing solid substances such as the base generator (a), the photo-sensitizer, and the metal catalyst, with the polyiso(thio)cyanate compound (b), and then adding the polythiol compound (c) and the episulfide compound (f), from the viewpoint of a decrease in dissolution time.

An isocyanate compound is low in viscosity and relatively high in dissolution capability, and thus the solid substances are preferably dissolved in the isocyanate compound in advance. In this regard, the thiol compound and the episulfide compound are relatively low in dissolution capability, and thus are preferably added to a mixed liquid in which the solid substances are dissolved in advance.

<<Adhesive>>

An adhesive of the second embodiment includes the photocurable composition of the second embodiment.

The details of specific aspects, preferable aspects, and the like of the adhesive in the second embodiment are the same respectively as the details of specific aspects, preferable aspects, and the like of the adhesive in the first embodiment.

<<Coating Composition>>

A coating composition of the second embodiment includes the photocurable composition of the second embodiment.

The details of specific aspects, preferable aspects, and the like of the coating composition of the second embodiment are the same respectively as the details of specific aspects, preferable aspects, and the like of the coating composition of the first embodiment.

«Optical Member»

An optical member of the second embodiment includes a cured product of the photocurable composition of the second embodiment.

The cured product of the second embodiment has a high refractive index and is excellent in transparency, and thus can be suitably used as an optical member.

Specific examples of the optical member can include an optical adhesive, a coating, an optical waveguide, a film, a lens, an antireflection film, a microlens, a microlens array, a wafer level lens, an imaging lens for cameras (for example, car camera, digital camera, camera for PC, camera for mobile phones, and security camera), a spectacle lens, an optical beam collection lens, a lens for light diffusion, and a photoflash lens for cameras.

«Film»

A film of the second embodiment includes the cured product of the photocurable composition of the second embodiment.
The photocurable composition of the second embodiment is excellent in photocurability, and can allow for production of a film by thin film formation. The cured product of the photocurable composition of the second embodiment is excellent in strength and thus can be suitably used as a film.
The thickness of the film is preferably from 0.01 mm to 2.00 mm, still more preferably from 0.05 mm to 1.00 mm from the viewpoint of strength of the film.
The film of the second embodiment has a high refractive index and is excellent in transparency, and thus can be used in, for example, an optical film, a film for display, or an optical waveguide.

<<Laminated Body>>

A laminated body of the second embodiment includes a cured layer as the cured product of the photocurable composition of the second embodiment.
The cured product of the photocurable composition of the second embodiment is excellent in close adhesiveness, and exhibits a high refractive index. Thus, for example, the cured product of the photocurable composition of the second embodiment can be used as a coating layer.
For example, the laminated body of the second embodiment preferably includes a resin substrate and a cured layer as the cured product of the photocurable composition of the second embodiment, disposed on the resin substrate.
The resin substrate in the second embodiment refers to a member to be coated with the photocurable composition of the second embodiment, or a member for adhesion by the photocurable composition.
Herein, the resin substrate is not essential for obtaining the cured product of the photocurable composition of the second embodiment. The cured product may be taken out from the resin substrate.
The resin substrate in the second embodiment can be selected depending on various applications, and examples include an ester resin, a carbonate resin, an imide resin, a urethane resin, a thiourethane resin, an episulfide resin, a urethane urea resin, an acrylic resin, an allyl resin, a vinyl resin, an olefin resin, an acetylcellulose resin, silicone, silicone nitride, polysilicone, oxidized silicone, and amorphous silicone.
In particular, the resin substrate preferably includes a thiourethane resin or an episulfide resin.
The shape of the resin substrate is also not particularly limited, and may be a plate shape or a roll shape. A light-permeable or non-light-permeable substrate can be selected.
The resin substrate may be subjected to a pre-treatment such as etching. Examples of the etching method include alkali etching involving immersion in an aqueous alkali solution, plasma etching involving exposure to gas plasma of oxygen or the like, and UV ozone etching involving exposure to ultraviolet light and ozone.
It is preferable in the laminated body of the second embodiment that the cured layer has a Fresnel lens pattern on an opposite surface to a surface of the cured layer, in which the surface is in contact with the resin substrate.
It is also preferable in the laminated body of the second embodiment that the cured layer has a microlens pattern on an opposite surface to a surface of the cured layer, in which the surface is in contact with the resin substrate.

<<Imprint Member>>

An imprint member of the second embodiment includes the cured product of the photocurable composition of the second embodiment.
The photocurable composition of the second embodiment is excellent in photocurability, and thus can be used for formation of an imprint member.
The "imprint" in the second embodiment means transfer of a pattern of a mold having the pattern.
The structure of the pattern to be transferred may be a repeated structure or is not necessarily a repeated structure. The imprint member of the second embodiment means a member which has a pattern transferred by imprint and which is produced by imprint.
The photocurable composition of the second embodiment can be used for production of the imprint member.
For example, a composition for imprint member production, to be used for production of the imprint member, may also be used, and the composition for imprint member production includes the photocurable composition of the second embodiment.
The size of the imprint structure is not particularly limited, and is, for example, from several nanometers to several centimeters from the viewpoint of exertion of the function of the imprint member.
The mold usable for producing the imprint member of the second embodiment may have light permeability or non-light permeability.

Specific examples include glass, quartz, a light-permeable resin such as an acrylic resin, a polyethylene terephthalate, polyethylene naphthalate, a carbonate resin, or an olefin resin, a transparent metal-deposited film, a flexible film such as polydimethylsiloxane, a photocured film, a metal film, a ceramic material, a deposited film, a magnetic film, a reflective film, a metal plate of Ni, Cu, Cr, Fe, or the like, SiC, silicon, silicon nitride, polysilicon, oxidized silicon, and amorphous silicon.
The shape of the mold is not particularly restricted, and the mold may be a plate-shaped mold or a roll-shaped mold. A roll-shaped mold is applied particularly in a case in which continuous productivity of transfer is required.
In a case in which the imprint member of the second embodiment is produced, the mold is (pushed on) pressed on and contacted with a pattern formation layer surface in order to transfer a pattern to a pattern formation layer. Thus, a fine pattern formed in advance on a pushing surface of the mold can be transferred to the pattern formation layer.
The imprint member of the second embodiment can be produced by curing the photocurable composition of the second embodiment sandwiched between the substrate and the mold, and then releasing the mold.
In a case in which curing is made by irradiation with light in production of the imprint member of the second embodiment, it is preferable that a substrate or a mold having transparency in the wavelength region of the light is used and the substrate or the mold having transparency is irradiated with light.
The imprint member of the second embodiment can be used as, for example, an ICT member, an AR member, a VR member, a decorative member, a hologram member, or other optical member, but not particularly limited thereto.

«Optical Waveguide»

An optical waveguide of the second embodiment includes the cured product of the photocurable composition of the second embodiment.
The cured product of the photocurable composition of the second embodiment exhibits a high refractive index, and thus can be suitably used as an optical waveguide.
The optical waveguide of the second embodiment can be used as, for example, an ICT member, an AR member, a VR member, or other optical member, but not particularly limited thereto.

<<Method of Producing Cured Product>>

The details of specific aspects, preferable aspects, the ultraviolet light used, the irradiance, the heating time and temperature, the atmosphere during curing, the thickness of a cured product, the etching method, and the like in the method of producing a cured product of the second embodiment are the same respectively as the details of specific aspects, preferable aspects, the ultraviolet light used, the irradiance, the heating time and temperature, the atmosphere during curing, the thickness of a cured product, the etching method, and the like in the method of producing a cured product of the first embodiment.

<<Method of Producing Laminated Body>>

The method of producing the laminated body of the second embodiment may include a step of providing the photocurable composition of the second embodiment on a surface of a resin substrate, and a step of curing the photocurable composition provided on the surface of a resin substrate, by irradiation with ultraviolet light or visible light, to obtain a cured layer (hereinafter, also referred to as "Mode 1").
Thus, a laminated body including a resin substrate and a cured layer as the cured product of the photocurable composition of the second embodiment, disposed on the resin substrate, can be obtained.
The method of producing the laminated body of the second embodiment may include step (a) of providing the photocurable composition of the second embodiment, on a surface of any one of a molding die and a resin substrate, and placing other thereof on a surface of the photocurable composition provided on such any one surface, thereby interposing the photocurable composition between the molding die and the resin substrate, and
step (b) of curing the photocurable composition interposed between the molding die and the resin substrate, by irradiation with ultraviolet light or visible light, to obtain a cured layer, after step (a) (hereinafter, also referred to as "Mode 2").
Step (a) is preferably a step of providing the photocurable composition on a surface of the molding die and placing the resin substrate on a surface of the photocurable composition provided on the surface of the molding die, thereby interposing the photocurable composition between the molding die and the resin substrate, and
the method preferably further includes step (c) of separating the cured layer and the resin substrate from the molding die, after step (b).
Thus, a laminated body including the resin substrate and the cured layer as the cured product of the photocurable composition of the second embodiment, disposed on the resin substrate, can be obtained.

(Step (a))

Step (a) is a step of providing the photocurable composition of the second embodiment, on a surface of any one of a molding die and a resin substrate, and placing other thereof on a surface of the photocurable composition provided on such any one surface, thereby interposing the photocurable composition between the molding die and the resin substrate.
In other words, step (a) allows the molding die and the resin substrate to be layered with the photocurable composition before curing being interposed.
Step (a) may specifically include, for example, each step below.

Step 1: step of preparing a molding die (for example, mold)
Step 2: step of contacting the photocurable composition of the second embodiment with the molding die

(Step (b))

Step (b) is a step of curing the photocurable composition interposed between the molding die and the resin substrate, by irradiation with ultraviolet light or visible light, to obtain a cured layer, after step (a).
After the curing, a laminated body including the resin substrate and the cured layer as the cured product of the photocurable composition of the second embodiment, disposed on the resin substrate, is obtained. The photocurable composition of the second embodiment can allow for formation of a thiourethane resin excellent in releasability, and thus the laminated body can be easily released from the molding die.
Step (b) may specifically include, for example, each step below.

Step 3: step of contacting the resin substrate with the photocurable composition on the molding die
Step 4: step of curing the photocurable composition

The method of producing the laminated body of Mode 2 preferably further includes step (c) of separating the cured layer and the resin substrate from the molding die, after step (b).
The molding die is not particularly limited.
The molding die may have a pattern. In a case in which the molding die has a pattern, the pattern is transferred to a cured product portion in the resulting laminated body.
Specific examples of the pattern include each structure of a fine asperity, a microlens, and a Fresnel lens. The structure of the pattern may be a repeated structure or is not necessarily a repeated structure.
It is preferable in the method of producing the laminated body of the second embodiment that the molding die has a Fresnel lens pattern and the photocurable composition of the second embodiment is provided on a surface of the molding die, in which the surface has a Fresnel lens pattern, in step (a).
It is preferable in the method of producing the laminated body of the second embodiment that the molding die has a microlens pattern and the photocurable composition of the second embodiment is provided on a surface of the molding die, in which the surface has a microlens pattern, in step (a).

<<Lens>>

A lens of the second embodiment includes the cured product of the photocurable composition of the second embodiment.
The cured product of the photocurable composition of the second embodiment has a high refractive index, and thus can be suitably used as the lens.
The cured product of the photocurable composition of the second embodiment may form one portion of the lens, or may form the whole lens.
In the case of formation of one portion of the lens, a laminated body is preferable in which a layer including the cured product of the photocurable composition of the second embodiment is provided on a surface of the laminated body.
In other words, the cured product of the photocurable composition of the second embodiment is preferably layered on a surface of the lens of the second embodiment.
In this case, the cured product may be layered on one surface of the lens, or may be layered on each of both surfaces of the lens. A layer including the cured product is formed on a surface of the lens, whereby, for example, a plurality of regions having optical refractive power can be imparted to the lens, strength can be imparted thereto, scratch resistance can be imparted thereto, or a function layer can be imparted thereto.
In a case in which a layer including the cured product of the photocurable composition of the second embodiment is provided on a surface of the lens, examples of the production method include a method including contacting the

photocurable composition with a surface of a prefabricated lens (also referred to as "lens substrate".) and then curing the photocurable composition, and a method of producing the lens using a mold having the cured product of the photocurable composition of the second embodiment on a surface of the mold.

The method of producing a lens having the laminated body structure of the second embodiment preferably includes a step of contacting the photocurable composition of the second embodiment with a lens substrate, and then curing the photocurable composition.

The method of producing a lens having the laminated body structure of the second embodiment preferably also includes an in-mold molding step of producing a molded article using a mold including the cured product of the photocurable composition of the second embodiment on a surface of the mold.

In a case in which the cured product of the photocurable composition of the second embodiment is layered on a surface of a lens substrate, the production method preferably includes the following steps. The lens substrate may be subjected to an etching treatment with an alkali liquid, plasma, ozone, or the like before use in the following steps. The lens substrate is preferably heated and dried. The shape of the lens substrate may be a shape of a cast finish lens (completed lens) or may be a shape of a semi-finish lens (namely, semi-completed lens). Any other step may also be included between the steps.

Step 1: step of preparing a mold
Step 2: step of contacting the photocurable composition of the second embodiment with the mold
Step 3: step of contacting a lens substrate with the photocurable composition on the mold
Step 4: step of curing the photocurable composition

The resulting laminated body may be subjected to an annealing treatment by heating or the like.

In a case in which the lens is produced using a mold having the cured product of the photocurable composition of the second embodiment on a surface of the mold, the production method preferably includes the following steps. This procedure may be called in-mold molding method. When a monomer-mixed liquid for lens production is polymerized, a tape, a gasket, or the like may be used. The cured product of the photocurable composition of the second embodiment may be layered on one surface of the lens, or may be layered on each of both surfaces of the lens.

Step 1: step of preparing a mold
Step 2: step of contacting the photocurable composition of the second embodiment with the mold
Step 3: step of curing the photocurable composition on a mold for lens production to obtain the mold for lens production, on which a cured product is layered
Step 4: step of polymerizing a monomer-mixed liquid for lens production, in a cavity for lens polymerization including the mold for lens production, on which the cured product is layered, and other member
Step 5: step of releasing the mold

The resulting laminated body may be subjected to an annealing treatment by heating or the like.

A lens including the cured product of the photocurable composition of the second embodiment may have a pattern. Specific examples of the pattern include each structure of a fine asperity, a microlens, and a Fresnel lens. The structure of the pattern may be a repeated structure or is not necessarily a repeated structure.

Examples of the method of providing the pattern include a method including using a mold in which the pattern is graven, and a method of providing the pattern by additive manufacturing.

In the case of formation of the whole lens, the thickness of the cured product of the photocurable composition of the second embodiment is preferably 10 mm or less, more preferably 5 mm or less, still more preferably 3 mm or less from the viewpoint of photocurability. The thickness of the lens is preferably 0.1 mm or more, more preferably 0.5 mm or more, still more preferably 1 mm or more from the viewpoint of strength of the lens.

In the case of formation of one portion of the lens, the thickness of the layer including the cured product of the photocurable composition of the second embodiment is preferably 5 mm or less, more preferably 1 mm or less, still more preferably 0.3 mm or less from the viewpoint of photocurability. The thickness is preferably 1.0 μm or more, more preferably 3.0 μm or more, still more preferably 5.0 μm or more from the viewpoint of close adhesiveness.

<<Lens Having Regions Having Optical Refractive Powers Different From Each Other on At Least Two or More Locations>>

A lens having regions having optical refractive powers different from each other on at least two or more locations, of the second embodiment, includes the cured product of the photocurable composition of the second embodiment.

The cured product of the photocurable composition of the second embodiment has a high refractive index, and thus can be used as a lens having regions having optical refractive powers different from each other on at least two or

more locations.

The absolute value of the difference between optical refractive powers different from each other is preferably from 0.01 D to 10 D, more preferably from 0.05 D to 8 D, still more preferably from 0.1 D to 5 D from the viewpoint of the optical function of the lens.

«Multifocal Lens»

The cured product of the photocurable composition of the second embodiment has a high refractive index, and thus can be suitably used as a multifocal lens.

Specifically, the lens having regions having optical refractive powers different from each other on at least two or more locations is preferably a multifocal lens.

Specific examples of the multifocal lens include a bifocal lens, a progressive lens, a defocus lens, a myopia control lens, and a hyperopia control lens, and a myopia control lens or a hyperopia control lens is preferable.

The number of focal points may be 2, or may be 2 or more.

The cured product of the photocurable composition of the second embodiment can be used for producing one portion of the multifocal lens or the whole multifocal lens.

<<Myopia Control Lens or Hyperopia Control Lens>>

The cured product of the photocurable composition of the second embodiment can be suitably used as a myopia control lens or a hyperopia control lens from the viewpoint of having a high refractive index.

The details of specific aspects, preferable aspects, and the like of the myopia control lens or the hyperopia control lens of the second embodiment are the same respectively as the details of specific aspects, preferable aspects, and the like of the myopia control lens or the hyperopia control lens of the first embodiment.

<<Composition for Additive Manufacturing, Method of Producing Molded Article, Including Additive Manufacturing Step>>

The photocurable composition of the second embodiment has excellent photocurability, and thus can be suitably used as a composition for additive manufacturing (3D printing).

The details of specific aspects, preferable aspects, and the like of the composition for additive manufacturing, and the method of producing a molded article, including an additive manufacturing step, of the second embodiment are the same respectively as the details of specific aspects, preferable aspects, and the like of the composition for additive manufacturing, and the method of producing a molded article, including an additive manufacturing step, of the first embodiment.

«Microlens Array, Wafer Level Lens»

The cured product of the photocurable composition of the second embodiment has a high refractive index, and thus can be suitably used as a microlens array or a wafer level lens.

The details of specific aspects, preferable aspects, and the like of the microlens array, the wafer level lens, and the respective production methods thereof, of the second embodiment, are the same respectively as the details of specific aspects, preferable aspects, and the like of the microlens array, the wafer level lens, and the respective production methods thereof, of the first embodiment.

<<Method of Producing Molded Article Having Difference in Angle between Molds before and after Polymerization, of 0.05° or less>>

The method of producing the molded article of the second embodiment includes a step of curing the photocurable composition of the second embodiment in two molds, in which the difference between the angle formed by the two molds before curing and the angle formed by the two molds after curing in the curing step is preferably 0.05° or less.

The details of specific aspects, preferable aspects, and the like of the method of producing a molded article having a difference in angle between molds before and after polymerization, of 0.05° or less, of the second embodiment are the same respectively as the details of specific aspects, preferable aspects, and the like of the method of producing a molded article having a difference in angle between molds before and after polymerization, of 0.05° or less, of the first embodiment.

<<Method of Producing Molded Article by Pressurizing Curable Composition during Curing of Curable Composition>>

The method of producing a molded article having a difference in angle between molds before and after polymerization, of 0.05° or less, preferably further involves pressurization of the curable composition during curing of the photocurable composition in the curing step.

The details of specific aspects, preferable aspects, and the like of the method of producing a molded article by pressurizing the photocurable composition during curing of the curable composition of the second embodiment are the same respectively as the details of specific aspects, preferable aspects, and the like of the method of producing a molded article by pressurizing the photocurable composition during curing of the curable composition of the first embodiment.

«Molded Article Exhibiting TTV of 50 μm or less»

The molded article of the second embodiment includes the cured product of the photocurable composition of the second embodiment, in which the TTV (Total Thickness Variation) is preferably 50 μm or less.

The details of specific aspects, preferable aspects, and the like of the molded article exhibiting a TTV of 50 μm or less of the second embodiment are the same respectively as the details of specific aspects, preferable aspects, and the like of the molded article exhibiting a TTV of 50 μm or less of the first embodiment.

The second embodiment also includes the following aspects.

<1B> A photocurable composition including a base generator (a), a polyiso(thio)cyanate compound (b), a polythiol compound (c), and a polyether-modified silicone compound (d).

<2> The photocurable composition according to <1B>, wherein the polyether-modified silicone compound (d) includes at least one selected from the group consisting of a polyether-modified silicone compound (d1) represented by the following Formula (1) and a polyether-modified silicone compound (d2) represented by the following Formula (2).

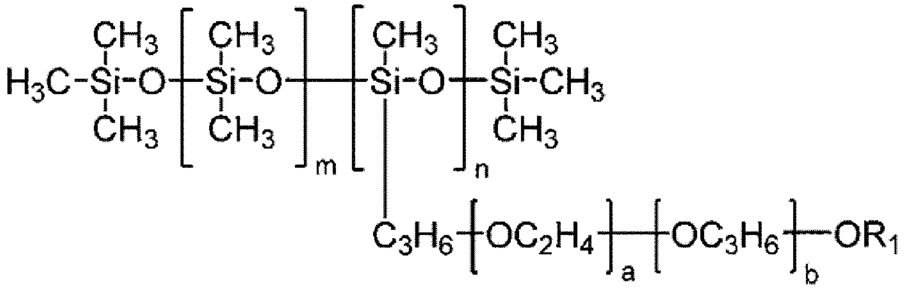

(1)

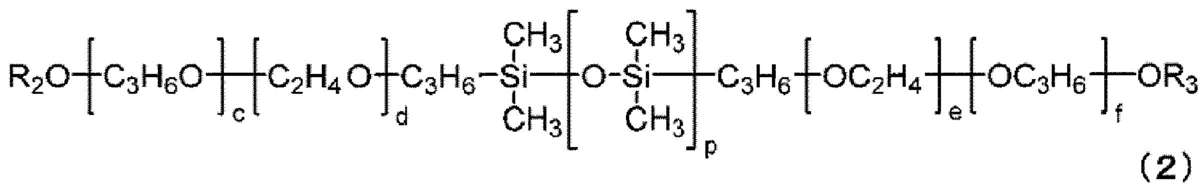

(2)

In Formula (1), each of m and n independently represents an integer of 1 or more. Each of a and b independently represents an integer of 0 or more (except for a case in which both a and b represent 0). $R_1$ represents a linear or branched alkyl group having from 1 to 6 carbon atoms, a linear or branched alkenyl group having from 2 to 10 carbon atoms, an acryloyl group, a methacryloyl group, or a hydrogen atom.

In Formula (2), p represents an integer of 1 or more, and each of c, d, e, and f independently represents an integer of 0 or more (except for a case in which all of c, d, e and f represent 0). Each of $R_2$ and $R_3$ independently represents a linear or branched alkyl group having from 1 to 6 carbon atoms, a linear or branched alkenyl group having from 2 to 10 carbon atoms, an acryloyl group, a methacryloyl group, or a hydrogen atom.

<3> The photocurable composition according to <1B> or <2B>, wherein the base generator (a) includes at least one selected from the group consisting of compounds represented by the following Formula (a1) to the following Formula (a4).

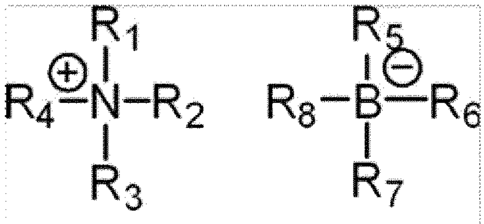

(a1)

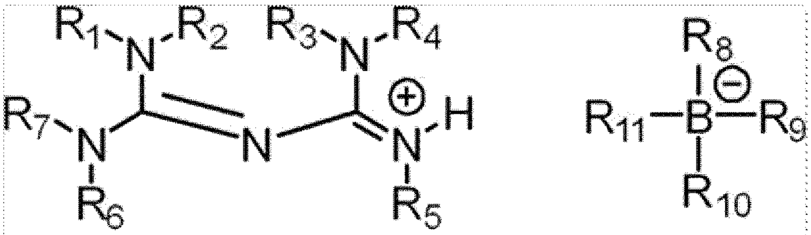

(a2)

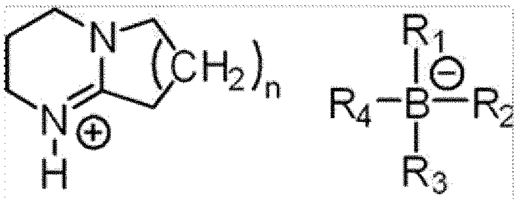

(a3)

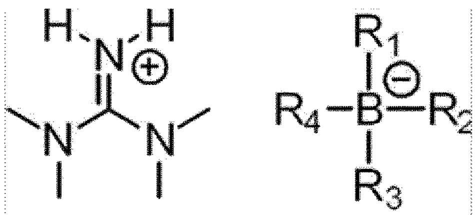

(a4)

In Formula (a1), each of $R_1$ to $R_4$ independently represents an alkyl group having from 1 to 8 carbon atoms, each of $R_5$ to $R_8$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

In Formula (a2), each of $R_1$ to $R_7$ independently represents an alkyl group having from 1 to 8 carbon atoms or a cycloalkyl group having from 3 to 8 carbon atoms, each of $R_8$ to $R_{11}$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

In Formula (a3), n represents an integer from 1 to 3, each of $R_1$ to $R_4$ independently represents an alkyl group

having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

In Formula (a4), each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

<4B> The photocurable composition according to any one of <1B> to <3B>, wherein the polyiso(thio)cyanate compound (b) includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

<5B> The photocurable composition according to any one of <1B> to <4B>, wherein the polythiol compound (c) includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, and tris(mercaptomethylthio)methane.

<6B> The photocurable composition according to any one of <1B> to <5B>, further including a metal catalyst.

<7B> An optical member including a cured product of the photocurable composition according to any one of <1B> to <6B>.

<8B> A laminated body including a cured layer as a cured product of the photocurable composition according to any one of <1B> to <6B>.

<9B> A laminated body including a resin substrate and a cured layer as a cured product of the photocurable composition according to any one of <1B> to <6B>, disposed on the resin substrate.

<10B> The laminated body according to <9B>, wherein the resin substrate includes a thiourethane resin or an episulfide resin.

<11B> The laminated body according to <9B> or <10B>, wherein the cured layer has a Fresnel lens pattern on an opposite surface to a surface of the cured layer, in which the surface is in contact with the resin substrate.

<12B> The laminated body according to <9B> or <10B>, wherein the cured layer has a microlens pattern on an opposite surface to a surface of the cured layer, in which the surface is in contact with the resin substrate.

<13B> A method of producing a cured product, including a step of curing the photocurable composition according to any one of <1B> to <6B>, by irradiation with ultraviolet light or visible light, to obtain a cured product.

<14B> A method of producing a laminated body, including a step of providing the photocurable composition according to any one of <1B> to <6B>, on a surface of a resin substrate, and a step of curing the photocurable composition provided on the surface of a resin substrate, by irradiation with ultraviolet light or visible light, to obtain a cured layer.

<15B> A method of producing a laminated body, including step (a) of providing the photocurable composition according to any one of <1B> to <6B>, on a surface of any one of a molding die and a resin substrate, and placing other thereof on a surface of the photocurable composition provided on such any one surface, thereby interposing the photocurable composition between the molding die and the resin substrate, and step (b) of curing the photocurable composition interposed between the molding die and the resin substrate, by irradiation with ultraviolet light or visible light, to obtain a cured layer, after step (a).

<16B> The method of producing a laminated body according to <15B>, wherein step (a) is a step of providing the photocurable composition on a surface of the molding die and placing the resin substrate on a surface of the photocurable composition provided on the surface of the molding die, thereby interposing the photocurable composition between the molding die and the resin substrate, and the method further includes step (c) of separating the cured layer and the resin substrate from the molding die, after step (b).

<17B> The method of producing a laminated body according to <15B> or <16B>, wherein the molding die has a Fresnel lens pattern, and the photocurable composition is provided on a surface of the molding die, in which the surface has a Fresnel lens pattern, in step (a).

<18B> The method of producing a laminated body according to <15B> or <16B>, wherein the molding die has a microlens pattern, and the photocurable composition is provided on a surface of the molding die, in which the surface has a microlens pattern, in step (a).

EXAMPLES

Hereinafter, Examples of the first embodiment are shown, but the first embodiment is not limited to the following Examples.
Methods and apparatuses used in evaluation in the following Examples and Comparative Examples are as follows.

[Solubility]

The solubility of each component (each solubility of photo-base generator, photo-sensitizer, and the like) of the photocurable composition obtained in each of Examples and Comparative Examples was evaluated by the following method.
The solubility was determined by mixing a curable composition and then visually evaluating the residue of any solid substance in the curable composition. A case in which no residue of any solid substance was visually observed was rated as A, and a case in which the residue of any solid substance was visually observed was rated as B. The method of mixing the curable composition was described in Examples.

[Cured State]

The cured state of the cured product obtained in each of Examples and Comparative Examples was evaluated by the following method.
The cured state of a curable composition was confirmed by visually evaluating the absence of fluidity of the curable composition after curing. A case in which the absence of fluidity was visually observed was rated as A, and a case in which no absence of fluidity was visually observed was rated as B. The method of curing the curable composition was described in Examples.

[Close Adhesiveness]

The close adhesiveness of a cured product obtained in Part B with respect to each of Examples and Comparative Examples was evaluated by the following method.
The close adhesiveness of the cured product was evaluated by a peeling test with CELLOTAPE (registered trademark) CT405AP-18 manufactured by NICHIBAN Co., Ltd., according to JIS K5400-8.5:1999. The interval between notches was set to 1 mm, and 100 cells were produced with such notches.
The evaluation result represents the proportion of the area of a portion not peeled, with respect to the surface area of the cured product, in a sample.
For example, an evaluation result of 100% means that the proportion of the area of a portion not peeled, with respect to the surface area of the cured product, in a sample is 100%. In other words, it is meant that no peeling is made at all. In a case in which it was confirmed that the cells were partially peeled, such cells were regarded as peeled.

[Refractive Index of Cured Product]

Measurement was performed at room temperature with a SPECTROSCOPIC ELLIPSOMETER SE-2000 manufactured by Semilab Inc. The value of the refractive index was a refractive index of light at a wavelength of 546 nm.

[Thickness]

The thickness of the cured product was measured with DIGIMATIC INDICATOR ID-H and COMPARATOR STAND BSB-20X manufactured by Mitutoyo Corporation. The value obtained by subtracting the thickness of a substrate from the total thickness of the cured product and the substrate was defined as the thickness of the cured product.

[Transparency]

Whether or not clouding occurred in the cured product was visually confirmed in a room illuminated with a fluorescent lamp.

• UV Curing Apparatus

A batch-type UV curing apparatus was used which had a POWER SOURCE UB012-0BM-60 HZ, FOR UV

IRRADIATION, manufactured by EYE GRAPHICS Co., Ltd., and had a METAL HALIDE LAMP M01-L212 (length of arc 122 mm, output of lamp 80 W/cm) manufactured by EYE GRAPHICS Co., Ltd., in a boxy housing. This UV curing apparatus is made so that a sample can be irradiated with ultraviolet light for only a specified time, and the cumulative amount of UV light for irradiation of the sample can be changed. The output of the lamp can be switched in two stages of 750 W and 1,000 W, the distance between the sample and the metal halide lamp is variable, and the irradiance of UV light can be changed.

• Measurement of Intensity of UVA ultraviolet light

The intensity of ultraviolet light in the wavelength range of UVA (from 320 nm to 390 nm) was measured with a UVA SINGLE BAND ACTINOMETER UVICURE (registered trademark) PLUS II manufactured by EIT (registered trademark), INC. The actinometer was calibrated by EIT (registered trademark), INC.

• Measurement of Intensity of UVC ultraviolet light

The intensity of ultraviolet light in the wavelength range of UVC (from 250 nm to 260 nm) was measured with a UVC SINGLE BAND ACTINOMETER UVICURE PLUS II manufactured by EIT, INC.

The actinometer was calibrated by EIT, INC.

• Refractive Indexes (nD) of Sodium D-line, of Polythiol Compound (C-1, C-2) and Episulfide Compound (D-1)

The refractive indexes of a sodium D-line (light at a wavelength of 589.3 nm), of C-1, C-2 and D-1, were measured with an ABBE REFRACTOMETER NAR-4T manufactured by ATAGO CO., LTD. The measurement temperature was 20°C.

The refractive indexes of C-1, C-2 and D-1, obtained by the above measurement method, were as follows.

C-1: 1.648
C-2: 1.631
D-1: 1.65

[Synthesis Example 1A]

Diazabicycloundecene (10 mmol, 1,8-diazabicyclo[5.4.0]undeca-7-ene, manufactured by Tokyo Chemical Industry Co., Ltd.) was dissolved in 10% by mass hydrochloric acid (10 mL). While this solution was stirred, sodium tetraphenylborate (10.5 mmol, manufactured by Tokyo Chemical Industry Co., Ltd.) was dropped to this solution. The precipitate produced was separated by filtration, washed with water, and then further washed with methanol. The precipitate washed was re-crystallized by a mixed liquid of acetone and methanol, and then dried under reduced pressure, and thus A-6 (1.47 g) was obtained. The identification data of A-6 obtained is shown below.
$^1$H-NMR (DMSO-d6), $\delta$ (ppm): 1.56 to 1.70 (m, 6H), 1.9 (q, 2H), 2.62 (t, 2H), 3.23 (t, 2H), 3.45 (t, 2H), 3.57 (2H), 6.79 (t, 4H), 7.18, (m, 8H), 9.47 (NH, 1H)

[Synthesis Example 2A]

A-7 (2.12 g) was obtained by the same procedure except that diazabicyclononene (10 mmol, 1,5-diazabicyclo[4.3.0]-5-nonene, manufactured by Tokyo Chemical Industry Co., Ltd.) was used instead of diazabicycloundecene in Synthesis Example 1A. The identification data of A-7 obtained is shown below.
$^1$H-NMR (DMSO-d6), $\delta$ (ppm): 1.87 (q, 2H), 1.99 (q, 2H), 2.77 (t, 2H), 3.26 (t, 2H), 3.32 (t, 5H), 3.56 (t, 2H), 6.79 (t, 4H), 6.92 (t, 8H), 7.18 (m, 8H), 9.57 (NH, 1H)

[Synthesis Example 3A]

A-8 (1.91 g) was obtained by the same procedure except that 1,1,3,3-tetramethylguanidine (10 mmol, manufactured by Tokyo Chemical Industry Co., Ltd.) was used instead of diazabicycloundecene in Synthesis Example 1A. The identification data of A-8 obtained is shown below.
$^1$H-NMR (DMSO-d6), $\delta$ (ppm): 2.86 (s, 12H), 6.79 (t, 4H), 6.92 (t, 8H), 7.18 (m, 8H), 7.75 (NH, 2H)

[Example 1A to Example 15A]

(Part A: Preparation of Photocurable Composition)

A base generator, a polyisocyanate compound, and, if necessary, a photo-sensitizer and a metal catalyst were weighed in a vial made of glass so that the types and amounts (parts by mass) thereof were as described in Table 1. A stirring bar was placed in the vial, and the mixture were stirred and mixed with a magnetic stirrer at a rotational speed of from 100 rpm (revolutions per minute) to 500 rpm. The lid of the vial was closed to prevent contact with external air during the mixing. The mixing was performed at 25°C for from 1 hour to 6 hours.

Each photocurable composition was prepared by adding a polythiol compound and, if necessary, a polyepisulfide compound to this solution so that the types and amounts (parts by mass) thereof were as described in Table 1, and stirring and mixing them at a rotational speed of from 100 rpm to 500 rpm. The mixing was performed at 25°C for from 1 hour to 6 hours. The evaluation results of solubility were described in Table 2. The photocurable composition mixed was defoamed under a reduced pressure of 400 Pa or less for from 30 minutes to 1 hour, and then subjected to filtration with a polytetrafluoroethylene membrane filter, having a pore size of 1 μm.

(Part B: Production of Cured Product)

An ULTRASOUND CLEANER MCS-6 manufactured by AS ONE Corporation was charged with an aqueous 10% by mass potassium hydroxide solution. The oscillation frequency of the ULTRASOUND CLEANER was 40 kHz, and the output of ultrasound from the ULTRASOUND CLEANER was 150 W.

A glass plate (square plate 70 mm on a side, made of soda glass and having a thickness of 2 mm) was immersed in this solution, and irradiated with ultrasound at from 50°C to 55°C for 5 minutes. After ultrasound irradiation, the glass plate was taken out and washed with flowing water for 3 minutes, and subsequently the glass plate was immersed in a vessel charged with ion-exchange water and equipped with an ultrasound generator, and was irradiated with ultrasound at 45°C for 5 minutes. After ultrasound irradiation, the glass plate was taken out and heated in a forced blast circulation type thermostat oven set at 110°C, for about 30 minutes. After completion of the heating, the glass plate was taken out from the oven, and the glass plate was cooled at a room temperature of from 18 to 30°C for 30 minutes or more.

One or two droplets of the photocurable composition prepared in Part A were applied onto a polytetrafluoroethylene plate (square plate 70 mm on a side), by use of a dropper. A plastic pressure-sensitive adhesive tape (width 10 mm, length 60 mm) was attached onto each side of the polytetrafluoroethylene plate in advance, thereby preventing the photocurable composition from spilling from the polytetrafluoroethylene plate. The temperature of the photocurable composition was the same temperature as a room temperature of from 20°C to 30°C. The above glass plate subjected to an etching treatment was mounted on a surface of the polytetrafluoroethylene plate, on which the photocurable composition was dropped, whereby the photocurable composition was sandwiched between the polytetrafluoroethylene plate and the glass plate. Thereafter, the photocurable composition was cured to produce a cured product.

The photocurable composition was cured by "Only UV irradiation" or "UV irradiation and heating" described below. The curing conditions and the evaluation results of the cured state in each of Examples were described in Table 2.

(Curing Method by "Only UV Irradiation")

The photocurable composition sandwiched between the polytetrafluoroethylene plate and the glass plate was irradiated with UV light by use of an UV (ultraviolet) curing apparatus. The irradiation with UV light was performed from a surface of the glass plate. The UV irradiation was performed under an air atmosphere at a relative humidity of from 30% to 70% and an air temperature of from 18°C to 30°C. The irradiance of UV light in the wavelength region of UVA was 255 $mW/cm^2$ and the irradiance of UV light in the wavelength region of UVC was 75 $mW/cm^2$, with respect to the intensity of UV light for the irradiation.

After completion of the irradiation with UV light, the cured product sandwiched between the polytetrafluoroethylene plate and the glass plate was taken out from the UV curing apparatus. The polytetrafluoroethylene plate was detached from the cured product obtained.

(Curing Method by "UV Irradiation and Heating")

The photocurable composition sandwiched between the polytetrafluoroethylene plate and the glass plate was irradiated with UV light by use of an UV curing apparatus. The irradiation with UV light was performed from a surface of the glass plate. The UV irradiation was performed under an air atmosphere at a relative humidity of from 30% to 70% and an air temperature of from 18°C to 30°C. The irradiance of UV light in the wavelength region of UVA was 255 $mW/cm^2$ and the irradiance of UV light in the wavelength region of UVC was 75 $mW/cm^2$, with respect to the intensity

of UV light for the irradiation.

After completion of the irradiation with UV light, the cured product sandwiched between the polytetrafluoroethylene plate and the glass plate was taken out from the UV curing apparatus, and heated in a forced blast circulation type thermostat electric furnace. After completion of the heating, the cured product sandwiched between the polytetrafluoroethylene plate and the glass plate was taken out from the electric furnace, and cooled to room temperature. The polytetrafluoroethylene plate was detached from the cured product obtained.

A laminated body of a thin film of a cured product having a thickness of from 130 μm to 170 μm and the glass plate was obtained by the curing method by "Only UV irradiation" or "UV irradiation and heating". The laminated body obtained was used, and the close adhesiveness of the cured product to the glass plate, and the refractive index of the cured product were evaluated. The evaluation results of the close adhesiveness and the refractive index were described in Table 2.

[Table 1]

| Example No. | Base generator | | | | | | | | Polyiso(thio)cyanate compound | | Polythiol compound | | Episulfide compound | Photo-sensitizer | | | Metal catalyst |
|---|---|---|---|---|---|---|---|---|---|---|---|---|---|---|---|---|---|
| | A-1 | A-2 | A-3 | A-4 | A-5 | A-6 | A-7 | A-8 | B-1 | B-2 | C-1 | C-2 | D-1 | E-1 | E-2 | E-3 | F-1 |
| 1A | 0.3 | - | - | - | - | - | - | - | - | 51.4 | 48.6 | - | - | 0.3 | - | - | - |
| 2A | 0.3 | - | - | - | - | - | - | - | - | 51.4 | 48.6 | - | - | 0.3 | - | - | - |
| 3A | 0.3 | - | - | - | - | - | - | - | - | 51.4 | 48.6 | - | - | - | 0.3 | - | - |
| 4A | 0.3 | - | - | - | - | - | - | - | - | 51.4 | 48.6 | - | - | - | 0.3 | - | - |
| 5A | - | - | 0.3 | - | - | - | - | - | - | 51.4 | 48.6 | - | - | 0.3 | - | - | - |
| 6A | - | 0.1 | - | - | - | - | - | - | - | 49.8 | 50.2 | - | - | - | - | 0.1 | - |
| 7A | - | 0.1 | - | - | - | - | - | - | - | 49.8 | 50.2 | - | - | - | - | 0.1 | - |
| 8A | 0.3 | - | - | - | - | - | - | - | - | 41.12 | 38.88 | - | 20 | 0.3 | - | - | - |
| 9A | - | - | - | 0.1 | - | - | - | - | 56.02 | - | - | 43.98 | - | - | - | - | - |
| 10A | - | - | - | 0.2 | - | - | - | - | - | 51.4 | 48.6 | - | - | - | - | - | 0.01 |
| 11A | 0.2 | - | - | - | - | - | - | - | 28 | - | - | 22 | 50 | 0.3 | - | - | 0.01 |
| 12A | - | - | - | - | - | 0.05 | - | - | - | 51.4 | 48.6 | - | - | 0.05 | - | - | - |
| 13A | - | - | - | - | - | - | 0.05 | - | - | 51.4 | 48.6 | - | - | 0.05 | - | - | - |
| 14A | - | - | - | - | - | - | - | 0.05 | - | 51.4 | 48.6 | - | - | 0.05 | - | - | - |
| 15A | - | - | 0.3 | - | - | - | - | - | - | 51.4 | 48.6 | - | - | 1.5 | - | - | - |

In Table 1, the numerical value indicated in the column of the composition of the photocurable composition indicates the content (parts by mass) of each component in conversion of the total amount of the polyisocyanate compound, the polythiol compound, and the polyepisulfide compound as the polymerizable compounds, into 100 parts by mass, and "-" indicates that no corresponding component is contained.

The details of abbreviations in Table 1 are as follows.

(Base Generator)

A-1: 1,2-Dicyclohexyl-4,4,5,5-tetramethyl biguanidium=n-butyltriphenylborate (manufactured by FUJIFILM Wako Pure Chemical Corporation, WPBG-300) [Compound represented by Formula (2)]

A-2: 1,2-Dicyclohexyl-4,4,5,5-tetramethyl biguanidium=tetrakis(3-fluorophenyl)borate (manufactured by FUJIFILM Wako Pure Chemical Corporation, WPBG-345) [Compound represented by Formula (2)]

A-3: Tetra(n-butyl)ammonium=n-butyltriphenylborate (manufactured by Showa Denko K.K., P3B) [Compound represented by Formula (1)]

A-4: Tetra(n-butyl)ammonium=n-butyl tri(1-naphthyl)borate (manufactured by Showa Denko K.K., N3B) [Compound represented by Formula (1)]

A-5: 9-Anthrylmethyl-N,N-diethylcarbamate (manufactured by FUJIFILM Wako Pure Chemical Corporation, WPBG-018) [compound not corresponding to any of Formula (1) to Formula (4)]

A-6: Base generator [Compound represented by Formula (3)] having the following structure, produced according to Synthesis Example 1A

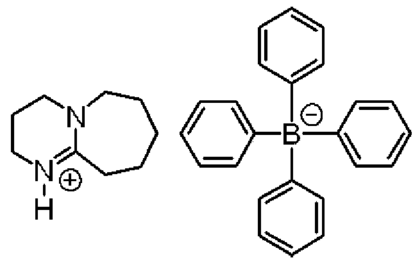

A-7: Base generator [Compound represented by Formula (3)] having the following structure, produced according to Synthesis Example 2A

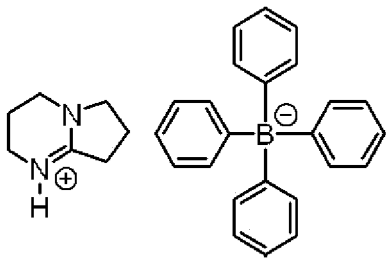

A-8: Base generator [Compound represented by Formula (4)] having the following structure, produced according to Synthesis Example 3A

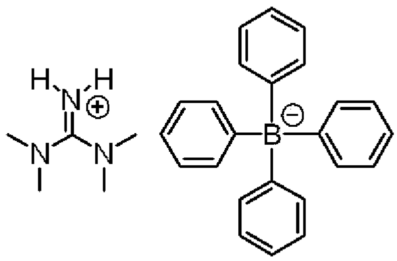

(Polyiso(thio)cyanate Compound)

B-1: 2,5-Bis(isocyanatomethyl)bicyclo-[2.2.1]-heptane and 2,6-bis(isocyanatomethyl)bicyclo-[2.2.1]-heptane
B-2: Xylylene diisocyanate

(Polythiol Compound)

C-1: Mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane
C-2: 4-Mercaptomethyl-1,8-dimercapto-3,6-dithiaoctane

(Polyepisulfide Compound)

D-1: Bis(2,3-epithiopropyl)disulfide

(Photo-Sensitizer)

E-1: 9,10-Dibutoxyanthracene (manufactured by Kawasaki Kasei Chemicals Ltd., UVS-1331)
E-2: 4-Benzoyl-4'-methyldiphenylsulfide (manufactured by Tokyo Chemical Industry Co., Ltd.)
E-3: 2-Ethylanthraquinone (manufactured by FUJIFILM Wako Pure Chemical Corporation)

(Metal Catalyst)

F-1: Dimethyltin(IV) dichloride

[Table 2]

| Example No. | Photocurable composition | | | Cured product | | |
|---|---|---|---|---|---|---|
| | Solubility | Curing conditions | | Cured state | Close adhesiveness (%) | Refractive index |
| 1A | A | Only UV irradiation | UV irradiation time: 20 seconds | A | 100 | 1.67 |
| 2A | A | UV irradiation and heating | UV irradiation time: 10 seconds, heating: 110°C 30 minutes | A | 100 | 1.67 |
| 3A | A | Only UV irradiation | UV irradiation time: 20 seconds | A | 20 | 1.67 |
| 4A | A | UV irradiation and heating | UV irradiation time: 10 seconds, heating: 110°C 30 minutes | A | 100 | 1.67 |
| 5A | A | UV irradiation and heating | UV irradiation time: 10 seconds, heating: 110°C 30 minutes | A | 100 | 1.67 |
| 6A | A | Only UV irradiation | UV irradiation time: 60 seconds | A | 100 | 1.67 |

(continued)

| Example No. | Photocurable composition | | | Cured product | | |
|---|---|---|---|---|---|---|
| | Solubility | Curing conditions | | Cured state | Close adhesiveness (%) | Refractive index |
| 7A | A | UV irradiation and heating | UV irradiation time: 60 seconds, heating: 110°C 30 minutes | A | 100 | 1.67 |
| 8A | A | UV irradiation and heating | UV irradiation time: 10 seconds, heating: 110°C 30 minutes | A | 47 | 1.68 |
| 9A | A | UV irradiation and heating | UV irradiation time: 10 seconds, heating: 110°C 30 minutes | A | 100 | 1.62 |
| 10A | A | UV irradiation and heating | UV irradiation time: 10 seconds, heating: 110°C 30 minutes | A | 100 | 1.67 |
| 11A | A | UV irradiation and heating | UV irradiation time: 120 seconds, heating: 110°C 60 minutes | A | 95 | 1.68 |
| 12A | A | UV irradiation and heating | UV irradiation time: 60 seconds, heating: 110°C 30 minutes | A | 81 | 1.67 |
| 13A | A | UV irradiation and heating | UV irradiation time: 60 seconds, heating: 110°C 30 minutes | A | 100 | 1.67 |
| 14A | A | UV irradiation and heating | UV irradiation time: 60 seconds, heating: 110°C 30 minutes | A | 97 | 1.67 |
| 15A | A | UV irradiation and heating | UV irradiation time: 20 seconds, heating: 110°C 30 minutes | A | 100 | 1.67 |

As shown in Table 1 and Table 2, each of Examples in which the photocurable composition included the base generator (a), the polyiso(thio)cyanate compound (b), and the polythiol compound (c), and the base generator (a) included at least one selected from the group consisting of compounds represented by Formula (1) to Formula (4) exhibited excellent photocurability and allowed for formation of a cured product.

Example 4A in which the curing method by UV irradiation and heating was used exhibited excellent close adhesiveness as compared with Example 3A in which the curing method by only UV irradiation was used. In other words, it was found that the case of use of the curing method by UV irradiation and heating provided more excellent close adhesiveness than the case of use of the curing method by only UV irradiation.

Example 2A in which 100 parts by mass in total of the polyiso(thio)cyanate compound (b) and the polythiol compound (c) were used provided excellent close adhesiveness as compared with Example 8A in which 80 parts by mass in total of the polyiso(thio)cyanate compound (b) and the polythiol compound (c) were used.

[Comparative Example 1A to Comparative Example 4A]

(Part C: Preparation of Photocurable Composition)

Each photocurable composition of Comparative Example 1A to Comparative Example 3A was prepared by the following method.

A base generator, a polyepisulfide compound, and, if necessary, a sensitizer were weighed in a vial made of

glass so that the types and amounts (parts by mass) thereof were as described in Table 3. A stirring bar was placed in the vial, and the mixture were stirred and mixed with a magnetic stirrer at a rotational speed of from 100 rpm to 500 rpm, and thus a photocurable composition was prepared. The lid of the vial was closed to prevent contact with external air during the mixing. The mixing was performed at 25°C for from 1 hour to 6 hours. The photocurable composition mixed was defoamed under a reduced pressure of 400 Pa or less for from 30 minutes to 1 hour, and then subjected to filtration with a polytetrafluoroethylene membrane filter, having a pore size of 1 μm.

A photocurable composition of Comparative Example 4A was prepared by the same method as in Part A with compounds whose types and amounts (parts by mass) were as described in Table 3.

The evaluation results of solubility in Comparative Example 1A to Comparative Example 4A were described in Table 4.

(Part D: Production of Cured Product)

The photocurable composition obtained was used, thereby producing a cured product by curing the photocurable composition by the same method as in Part B. The curing conditions and the evaluation results of the cured state in each of Comparative Examples were described in Table 4. In a case in which fluidity of the curable composition was not observed, close adhesiveness was evaluated. The evaluation results of close adhesiveness were described in Table 4.

[Table 3]

| Comparative Example No. | Base generator | | | | | | | | Polyiso(thio)cyanate compound | | Polythiol compound | | Episulfide compound | Photo-sensitizer | | | Metal catalyst |
|---|---|---|---|---|---|---|---|---|---|---|---|---|---|---|---|---|---|
| | A-1 | A-2 | A-3 | A-4 | A-5 | A-6 | A-7 | A-8 | B-1 | B-2 | C-1 | C-2 | D-1 | E-1 | E-2 | E-3 | F-1 |
| 1A | - | - | - | 0.3 | - | - | - | - | - | - | - | - | 100 | 1.5 | - | - | - |
| 2A | - | - | - | 0.3 | - | - | - | - | - | - | - | - | 100 | - | - | - | - |
| 3A | - | - | - | 0.3 | - | - | - | - | - | - | - | - | 100 | - | - | - | - |
| 4A | - | - | - | - | 0.1 | - | - | - | - | 49.8 | 50.2 | - | - | - | - | 0.1 | - |

In Table 3, the numerical value indicated in the column of the composition of the photocurable composition indicates the content (parts by mass) of each component in conversion of the total amount of the polyisocyanate compound, the polythiol compound, and the polyepisulfide compound as the polymerizable compounds, into 100 parts by mass, and "-" indicates that no corresponding component is contained.

The details of abbreviations in Table 3 are the same as the details of abbreviations in Table 1 above.

[Table 4]

| Comparative Example No. | Photocurable composition | | | Cured product | |
|---|---|---|---|---|---|
| | Solubility | Curing conditions | | Cured state | Close adhesiveness (%) |
| 1A | B | - | - | - | - |
| 2A | A | Only UV irradiation | UV irradiation time: 60 seconds | A | 0 |
| 3A | A | UV irradiation and heating | UV irradiation time: 60 seconds, heating: 110°C 30 minutes | A | 0 |
| 4A | A | Only UV irradiation | UV irradiation time: 60 seconds | B | - |

As shown in Table 3 and Table 4, no thiourethane resin was formed in Comparative Example 1A in which the photocurable composition including no polyiso(thio)cyanate compound (b) and no polythiol compound (c) was used. In Comparative Example 1A, solubility was inferior and thus the photo-sensitizer remained without being dissolved. Thus, the photocurable composition of Comparative Example 1A was a heterogeneous composition, and no homogeneous cured product was obtained even by curing. In other words, curability was inferior.

No thiourethane resin was formed in Comparative Example 2A and Comparative Example 3A in which the photocurable composition including no polyiso(thio)cyanate compound (b) and no polythiol compound (c) was used. Comparative Example 2A and Comparative Example 3A provided inferior close adhesiveness.

Comparative Example 4A in which the photocurable composition not including at least one selected from the group consisting of compounds represented by Formula (1) to Formula (4), as the base generator, was used provided an inferior cured state, and did not allow for curing.

[Measurement of Tg]

[Example 16A]

In a glass vial, 49.8 parts by mass of the polyisocyanate compound B-2, 0.2 parts by mass of the base generator A-4, and 0.01 parts by mass of the metal catalyst F-1 were weighed. A stirring bar was placed in the glass vial, and the mixture were stirred and mixed with a magnetic stirrer at a rotational speed of from 100 rpm to 500 rpm. The lid of the vial was closed to prevent contact with external air during the mixing. The mixing was performed at 25°C for from 1 hour to 6 hours.

A photocurable composition was prepared by adding 50.2 parts by mass of a polythiol compound C-1 to this solution, and stirring and mixing the mixture at a rotational speed of from 100 rpm to 500 rpm. The mixing was performed at 25°C for from 1 hour to 6 hours. The photocurable composition mixed was defoamed under a reduced pressure of 400 Pa or less for from 30 minutes to 1 hour, and then subjected to filtration with a polytetrafluoroethylene membrane filter, having a pore size of 1 μm.

The photocurable composition obtained was cast into a cavity produced from two soda glass disc plates having a diameter of 70 mm, coated with a fluorine-based external release agent in advance, and a plastic tape. The cavity had a circular plate shape having a size of a diameter of 70 mm and a thickness of 2 mm. The photocurable composition cast was irradiated through both surfaces of the glass plate with UV light by use of an UV irradiation apparatus for 90 seconds. The irradiance of UV light in the wavelength region of UVA was 255 $mW/cm^2$ and the irradiance of UV light in the wavelength region of UVC was 75 $mW/cm^2$, with respect to the intensity of UV light for the irradiation.

After UV irradiation, the cured product sandwiched between the glass plates was further heated in an electric furnace at 120°C for 60 minutes. The glass plates were detached from the cured product, and thus a disc-shaped cured product having a diameter of 70 mm and a thickness of 2 mm was obtained. The cured product obtained was further heated and annealed in an electric furnace at 120°C for 60 minutes. The cured product after annealing was cut to a size

of a width of 3 mm, a length of 3 mm, and a height of 2 mm, and the glass transition temperature (Tg) of the cured product was measured. The Tg of the cured product was 95°C.

The Tg was measured with a THERMAL MECHANICAL ANALYZER TMA-60 manufactured by Shimadzu Corporation, according to a TMA penetration method (load 50 g, pin tip 0.5 mmφ, rate of temperature rise 10°C/min, heating temperature range of from room temperature to 140°C, processing to a sample size of 4 mm × 4 mm × 2 mm).

A photocurable composition to which no metal catalyst F-1 was added was prepared by the same method as described above, a cured product was produced therefrom, and the Tg of the cured product was measured and was 88°C.

The cured product obtained had a refractive index of 1.67 and had transparency, and was suitable as an optical member, an optical waveguide, or the like.

[Imprint Member]

[Example 17A]

In a glass vial, 54.3 parts by mass of the polyisocyanate compound B-1, 1 part by mass of the base generator A-3, and 0.5 parts by mass of 9,10-bis(octanoyloxy)anthracene (manufactured by Kawasaki Kasei Chemicals Ltd., UVS-581) as the photo-sensitizer were weighed. A stirring bar was placed in the glass vial, and the mixture were stirred and mixed with a magnetic stirrer at a rotational speed of from 100 rpm to 500 rpm. The lid of the vial was closed to prevent contact with external air during the mixing. The mixing was performed at 25°C for from 1 hour to 6 hours.

A photocurable composition was prepared by adding 45.7 parts by mass of a polythiol compound C-2 to this solution, and stirring and mixing the mixture at a rotational speed of from 100 rpm to 500 rpm. The mixing was performed at 25°C for from 1 hour to 6 hours. The photocurable composition mixed was defoamed under a reduced pressure of 400 Pa or less for from 30 minutes to 1 hour, and then subjected to filtration with a polytetrafluoroethylene membrane filter, having a pore size of 1 μm.

Two to four droplets of the photocurable composition obtained were dropped on a soda glass plate etched by an aqueous alkali solution in advance, by use of a polyethylene dropper. A Si mold having a fine structure was mounted on the photocurable composition dropped on the glass plate, and irradiated through a surface of the glass plate with UV light by use of an UV irradiation apparatus for 10 seconds. The irradiance of UV light in the wavelength region of UVA was 255 mW/cm$^2$ and the irradiance of UV light in the wavelength region of UVC was 75 mW/cm$^2$, with respect to the intensity of UV light for the irradiation.

The mold was detached from a cured product after UV irradiation, and an imprint member in which the pattern of the mold was imprinted on the cured product was obtained. The surface of the imprint member was observed with an electron microscope, whereby the surface structure of the mold was observed to be imprinted on the cured product.

The surface of the mold used in the present Example had a structure in which a straight cone having a height of 100 nm and a radius of 100 nm was repeatedly formed. The surface of the mold was coated with a fluorine-based external release agent in advance in order to easily release the mold from the cured product.

[Film, Optical Waveguide]

[Example 18A]

The same procedure as in Example 1A was performed for curing except that the glass plate washed with alkali and the polytetrafluoroethylene plate described in Part B of Example 1A were changed to two glass plates each coated with a fluorine-based release agent and the photocurable composition was sandwiched between the glass plates. A cured product was released from the glass plates, whereby a film-shaped cured product was obtained. The thickness of the film was 130 μm to 170 μm, and the refractive index of the film was 1.67. The film had transparency and was suitable as an optical member.

Light was allowed to be incident through a film end, an opposite end to the end through which light was incident was observed, and then the incident light was observed to be emitted. The cured product of the first embodiment functioned as an optical waveguide.

[Lens]

[Example 19A]

A cured product was obtained by the same procedure as in Example 16A except that the two soda glass disc plates having a diameter of 70 mm, coated with a fluorine-based external release agent, described in Example 16A, were changed to a glass mold having a curve shape and having a diameter of 81 mm, coated with a fluorine-based

external release agent, and a cavity (curve shape: 4 curve in both concave and convex surfaces, center thickness: 2 mm) configured from the glass mold and a tape was produced. The cured product had a lens shape having 4 curve in both concave and convex surfaces, a center thickness of 2 mm, and a diameter of 81 mm, had transparency regardless of the presence of the metal catalyst F-1, and was suitable as a lens.

[Lens Having Laminated Structure with Coating Formed]

[Example 20A]

A homogeneous solution was obtained by adding 0.02 parts by mass (1,000 ppm) of ZELEC (registered trademark) UN (manufactured by Stepan Company) as an internal release agent, 0.3 parts by mass (15,000 ppm) of 2-(2'-hydroxy-5'-t-octylphenyl)benzotriazole (trade name VIOSORB 583 manufactured by KYODO CHEMICAL CO., LTD.) as an UV absorbent, 0.01 parts by mass (500 ppm) of dibutyltin(II) dichloride as a catalyst, and 10.12 parts by mass of 2,5(6)-bis(isocyanatomethyl)bicyclo-[2.2.1]-heptane as a polymerizable compound to a sample bottle having a volume of 100 mL, and stirring and mixing them at 20°C.

A homogeneous polymerizable composition was obtained by further adding 4.78 parts by mass of pentaerythritol tetrakis(3-mercaptopropionate) and 5.1 parts by mass of 4-mercaptomethyl-1,8-dimercapto-3,6-dithiaoctane as polymerizable compounds to the homogeneous solution, and stirring and mixing them at 20°C.

The polymerizable composition obtained was defoamed under a reduced pressure of 400 Pa or less (3 Torr or less) for from 30 minutes to 1 hour, and thereafter filtered with a PTFE membrane filter having a pore size of 1 $\mu$m, and the resultant was injected to a cavity (curve shape: 4 curve in both concave and convex surfaces, center thickness: 2 mm) configured from a glass mold and a tape, and sealed with the tape.

The cavity configured from the glass mold and the tape, in which the polymerizable composition was placed, was placed in a polymerization oven, and the temperature was gradually raised from 25°C to 120°C over 19 hours and then held at 120°C for 2 hours, whereby polymerization was performed. After cooling, the glass mold and the tape were released, and a molded article (plastic lens) including a cured resin formed therein was taken out. The molded article (plastic lens) obtained was colorless and transparent, the refractive index ne was 1.60, and the Abbe's number ve was 40.

Next, an ULTRASOUND CLEANER MCS-6 manufactured by AS ONE Corporation was charged with an aqueous 10% by mass potassium hydroxide solution. The oscillation frequency of the ULTRASOUND CLEANER was 40 kHz, and the output of ultrasound from the ULTRASOUND CLEANER was 150 W. The plastic lens having a refractive index ne of 1.60 was immersed in the solution, and irradiated with ultrasound at from 50°C to 55°C for 5 minutes. After ultrasound irradiation, the plastic lens was taken out and washed with flowing water for 3 minutes, and subsequently the glass plate was immersed in a vessel charged with ion-exchange water and equipped with an ultrasound generator, and was irradiated with ultrasound at 45°C for 5 minutes. After ultrasound irradiation, the plastic lens was taken out and heated in a forced blast circulation type thermostat oven set at 110°C, for about 30 minutes. After completion of the heating, the plastic lens was taken out from the oven, and the plastic lens was cooled at a room temperature of from 18°C to 30°C for 30 minutes or more.

A convex surface of the plastic lens cooled was coated with the photocurable composition prepared with the composition of Example 1A by the method described in Part A, according to a spin coating method. The spin coating method included fixation of the plastic lens to a SPIN COATER MS-150A manufactured by MIKASA, equipped with a rotation tool, with a vacuum chuck, and rotation of the lens at a certain rotational speed. A substrate being rotated was coated with from 3 mL to 5 mL of the photocurable composition by use of a dropper over from 10 seconds to 20 seconds. The temperature of the photocurable composition was the same temperature as room temperature of from 20°C to 30°C. The plastic lens coated with the photocurable composition was irradiated with UV light by use of an UV curing apparatus. The UV light was radiated through the convex surface of the plastic lens for 10 seconds. The UV irradiation was performed under an air atmosphere at a relative humidity of from 30% to 70% and an air temperature of from 18°C to 30°C. The irradiance of UV light in the wavelength region of UVA was 255 mW/$cm^2$ and the irradiance of UV light in the wavelength region of UVC was 75 mW/$cm^2$, with respect to the intensity of UV light for the irradiation. After completion of the irradiation with UV light, the plastic lens on which the cured product was film-formed was taken out from the UV curing apparatus, and heated in a forced blast circulation type thermostat electric furnace at 110°C for 30 minutes. After completion of the heating, the plastic lens was cooled to room temperature, and thus a lens having a laminated structure in which a coating of the cured product was formed on a surface was obtained.

The close adhesiveness of the coating was evaluated with the lens having a laminated structure in which the coating was formed, and then peeling of the coating was not observed.

[Multifocal Lens]

[Example 21A]

A homogeneous solution was obtained by adding 0.02 parts by mass (1,000 ppm) of ZELEC (registered trademark) UN (manufactured by Stepan Company) as an internal release agent, 0.3 parts by mass (15,000 ppm) of 2-(2'-hydroxy-5'-t-octylphenyl)benzotriazole (trade name VIOSORB 583 manufactured by KYODO CHEMICAL CO., LTD.) as an UV absorbent, 0.01 parts by mass (500 ppm) of dibutyltin(II) dichloride as a catalyst, and 10.12 parts by mass of m-xylylene diisocyanate as a polymerizable compound to a sample bottle having a volume of 100 mL, and stirring and mixing them at 20°C. A homogeneous polymerizable composition was obtained by further adding 9.88 parts by mass of a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane as polymerizable compounds to the homogeneous solution, and stirring and mixing them at 20°C. The polymerizable composition was defoamed under a reduced pressure of 400 Pa or less for from 30 minutes to 1 hour, and thereafter filtered with a polytetrafluoroethylene membrane filter having a pore size of 1 μm, and the resultant was injected to a cavity (curve shape: 4 curve in both concave and convex surfaces, center thickness: 2 mm) configured from a glass mold and a tape, and sealed with the tape. The cavity configured from the glass mold and the tape, in which the polymerizable composition was placed, was placed in a polymerization oven, and the temperature was gradually raised from 25°C to 120°C over 19 hours and then held at 120°C for 2 hours, whereby polymerization was performed. After cooling, the glass mold and the tape were released, and a molded article (plastic lens) including a cured resin formed therein was taken out. The plastic lens obtained was colorless and transparent, the refractive index ne was 1.67, the Abbe's number νe was 31, and the optical refractive power was 0 D.

Next, an ULTRASOUND CLEANER MCS-6 manufactured by AS ONE Corporation was charged with an aqueous 10% by mass potassium hydroxide solution. The oscillation frequency of the ULTRASOUND CLEANER was 40 kHz, and the output of ultrasound from the ULTRASOUND CLEANER was 150 W. The plastic lens having a refractive index ne of 1.67 was immersed in the solution, and irradiated with ultrasound at from 50°C to 55°C for 5 minutes. After ultrasound irradiation, the plastic lens was taken out and washed with flowing water for 3 minutes, and subsequently the glass plate was immersed in a vessel charged with ion-exchange water and equipped with an ultrasound generator, and was irradiated with ultrasound at 45°C for 5 minutes. After ultrasound irradiation, the plastic lens was taken out and heated in a forced blast circulation type thermostat oven set at 110°C, for about 30 minutes. After completion of the heating, the plastic lens was taken out from the oven, and the plastic lens was cooled at a room temperature of from 18°C to 30°C for 30 minutes or more.

The photocurable composition prepared with the composition of Example 1A by the method described in Part A was dropped on a concave surface with 4 curve, of the glass mold, by use of a pipette. The glass mold having such a concave surface with 4 curve had a Fresnel lens structure on one portion of the concave surface. The concave surface of the glass mold was coated with a fluorine-based external release agent in advance. The plastic lens cooled was provided on the glass mold so that a convex surface of the plastic lens was contacted with the photocurable composition dropped, and the photocurable composition was sandwiched between the plastic lens and the glass mold with a Fresnel lens pattern. Herein, a plastic tape was attached to three or more locations of the periphery portion of the glass mold before sandwiching of the photocurable composition between the plastic lens and the glass mold, whereby the plastic lens and the glass mold were completely contacted and the thickness of the layer of the photocurable composition was not lost. The resulting laminated body of the plastic lens, the photocurable composition, and the glass mold was irradiated with UV light by use of an UV curing apparatus. The UV light was radiated through a surface of the glass mold for 20 seconds. The UV irradiation was performed under an air atmosphere at a relative humidity of from 30% to 70% and an air temperature of from 18°C to 30°C. The irradiance of UV light in the wavelength region of UVA was 255 $mW/cm^2$ and the irradiance of UV light in the wavelength region of UVC was 75 $mW/cm^2$, with respect to the intensity of UV light for the irradiation.

After UV irradiation, the glass mold was released. The resulting molded article was a lens having a layer of the cured product of the photocurable composition of the first embodiment, on a convex surface with 4 curve. The layer of the cured product of the photocurable composition of the first embodiment, layered on the convex surface of the lens, had a Fresnel lens structure transferred from the glass mold. A portion of the lens, corresponding to the Fresnel lens structure, had an optical refractive power of + 0.5 D and other portion thereof had an optical refractive power of 0 D, and the lens functioned as a multifocal lens.

[Additive Manufacturing, Defocus Lens, Myopia Control Lens]

[Example 22A]

A homogeneous solution was obtained by adding 0.02 parts by mass (1,000 ppm) of ZELEC UN manufactured by Stepan Company, as an internal release agent, 0.3 parts by mass (15,000 ppm) of 2-(2'-hydroxy-5'-t-octylphenyl)benzotriazole (trade name VIOSORB 583 manufactured by KYODO CHEMICAL CO., LTD.) as an UV absorbent, 0.01 parts by mass (500 ppm) of dibutyltin(II) dichloride as a catalyst, and 10.12 parts by mass of m-xylylene diisocyanate as a polymerizable compound to a sample bottle having a volume of 100 mL, and stirring and mixing them at 20°C. A homogeneous polymerizable composition was obtained by further adding 9.88 parts by mass of a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane as polymerizable compounds to the homogeneous solution, and stirring and mixing them at 20°C. The polymerizable composition was defoamed under a reduced pressure of 400 Pa or less for from 30 minutes to 1 hour, and thereafter filtered with a polytetrafluoroethylene membrane filter having a pore size of 1 μm, and the resultant was injected to a cavity (curve shape: 4 curve in both concave and convex surfaces, center thickness: 2 mm) configured from a glass mold and a tape, and sealed with the tape. The cavity configured from the glass mold and the tape, in which the polymerizable composition was placed, was placed in a polymerization oven, and the temperature was gradually raised from 25°C to 120°C over 19 hours and then held at 120°C for 2 hours, whereby polymerization was performed. After cooling, the glass mold and the tape were released, and a molded article (plastic lens) including a cured resin formed therein was taken out. The plastic lens obtained was colorless and transparent, the refractive index ne was 1.67, and the Abbe's number ve was 31.

Next, an ULTRASOUND CLEANER MCS-6 manufactured by AS ONE Corporation was charged with an aqueous 10% by mass potassium hydroxide solution. The oscillation frequency of the ULTRASOUND CLEANER was 40 kHz, and the output of ultrasound from the ULTRASOUND CLEANER was 150 W. The plastic lens having a refractive index ne of 1.67 was immersed in the solution, and irradiated with ultrasound at from 50°C to 55°C for 5 minutes. After ultrasound irradiation, the plastic lens was taken out and washed with flowing water for 3 minutes, and subsequently the glass plate was immersed in a vessel charged with ion-exchange water and equipped with an ultrasound generator, and was irradiated with ultrasound at 45°C for 5 minutes. After ultrasound irradiation, the plastic lens was taken out and heated in a forced blast circulation type thermostat oven set at 110°C, for about 30 minutes. After completion of the heating, the plastic lens was taken out from the oven, and the plastic lens was cooled at a room temperature of from 18°C to 30°C for 30 minutes or more.

The photocurable composition prepared with the composition of Example 1A by the method described in Part A was dropped on a convex surface of the plastic lens cooled, by use of a micropipette. The photocurable composition dropped was irradiated with UV light by use of an UV curing apparatus. The UV light was radiated through the convex surface of the plastic lens for 20 seconds. The UV irradiation was performed under an air atmosphere at a relative humidity of from 30% to 70% and an air temperature of from 18°C to 30°C. The irradiance of UV light in the wavelength region of UVA was 255 $mW/cm^2$ and the irradiance of UV light in the wavelength region of UVC was 75 $mW/cm^2$, with respect to the intensity of UV light for the irradiation.

A plurality of microlenses was produced on the plastic lens by a method including repeatedly performing dropping of the photocurable composition with a micropipette, and UV curing, namely, additive manufacturing. The resulting plastic lens with microlenses functioned as a defocus lens. The defocus lens was here designed with reference to the lens described in U.S. Patent publication No. 2017/0131567. The defocus lens functioned as a myopia control lens.

Hereinafter, Examples of the second embodiment are shown, but the second embodiment is not limited to the following Examples.

Evaluations performed in the following Examples and Comparative Examples are as follows.

[Photocurability]

The photocurability with respect to each of Examples and Comparative Examples was evaluated by the following method.

The photocurability was determined by irradiating the photocurable composition with UV by use of an UV CURING APPARATUS (UB012-0BM-60Hz manufactured by EYE GRAPHICS Co., Ltd.) and then evaluating the curability of the photocurable composition according to the following criteria.

[Evaluation Criteria]

A: the photocurable composition was solidified by polymerization and a cured product was obtained.
B: the photocurable composition was not solidified and no cured product was obtained.

[Transparency]

The transparency with respect to each of Examples and Comparative Examples was evaluated by the following method.
The cured product was visually confirmed in a room illuminated with a fluorescent lamp, and evaluated according to the following criteria.

[Evaluation Criteria]

A: the cured product was transparent and not clouded.
B: the cured product was not transparent or was clouded.

[Releasability]

The releasability with respect to each of Examples and Comparative Examples was evaluated by the following method.
The releasability of the cured product in detachment of the cured product after polymerization, from the mold, was evaluated according to the following criteria.

A: the cured product could be detached without any damage on the cured product and any application of a large force to the cured product.
B: the cured product, although could be detached, was confirmed to be damaged, the cured product could be detached only by application of a large force, or the cured product could not be detached.

(Comparative Example 1B)

First, tetrabutylammonium tri(1-naphthyl)butylborate (0.04 parts by mass, base generator, corresponding to Formula (a1), manufactured by Showa Denko K.K.) was dissolved in xylylene diisocyanate (19.9 parts by mass) as a polyisocyanate compound. After complete dissolution, a polythiol composition (20.1 parts by mass) including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane as polythiol compounds, as main components, was added, and furthermore stirred for 30 minutes, thereby preparing a photocurable composition.
The photocurable composition obtained was filtered with a 3-μm PTFE filter, and degassed under vacuum with stirring for from 30 minutes to 60 minutes. The photocurable composition prepared was transferred to a glass mold having a thickness of 1.1 mm. Polymerization and curing of the photocurable composition were performed by light irradiation for 90 seconds (9.5 $mW/cm^2/s$ at 365 nm) and then heating in an oven at 120°C for 1 hour.
The cured product after polymerization and curing was tried to be released from the glass mold, but could not be released.

(Example 1B)

Tetrabutylammonium tri(1-naphthyl)butylborate (0.04 parts by mass, manufactured by Showa Denko K.K.) and SH-3773M (0.02 parts by mass, internal release agent, manufactured by Dow Chemical Japan Limited.) were dissolved in xylylene diisocyanate (19.9 parts by mass) as a polyisocyanate compound. After complete dissolution, a polythiol composition (20.1 parts by mass) including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane as polythiol compounds, as main components, was added, and furthermore stirred for 30 minutes, thereby preparing a photocurable composition.
The photocurable composition obtained was filtered with a 3-μm PTFE filter, and degassed under vacuum with stirring for from 30 minutes to 60 minutes.
The photocurable composition prepared was transferred to a glass mold having a thickness of 1.1 mm. Polymerization and curing of the photocurable composition were performed by light irradiation for 90 seconds (9.5 $mW/cm^2/s$ at 365 nm) and then heating in an oven at 120°C for 1 hour.

The cured product after polymerization and curing could be naturally released from the glass mold. An optical member excellent in transparency was obtained from the cured product.

[Table 5]

| | Internal release agent | Photocurability | Transparency | Releasability |
|---|---|---|---|---|
| Comparative Example 1B | - | A | A | B |
| Example 1B | SH-3773M | A | A | A |

The detail of the component described with respect to each item in Table 5 is as follows.

SH-3773M polyether-modified silicone compound, corresponding to mixture of Formula (1) and Formula (2)

As shown in Table 5, each of Examples in which the photocurable composition including the base generator (a), the polyiso(thio)cyanate compound (b), the polythiol compound (c), and the polyether-modified silicone compound (d) was used was excellent in all the photocurability, the transparency, and the releasability.

In this regard, Comparative Example 1B in which no polyether-modified silicone compound (d) was included was inferior in releasability.

(Example 2B and Example 3B)

(Production of Cured Product Including Resin A)

Tetrabutylammonium tri(1-naphthyl)butylborate (0.2 parts by mass, manufactured by Showa Denko K.K.) and an internal release agent in an amount shown in Table 6 were dissolved in xylylene diisocyanate (50.7 parts by mass) as a polyisocyanate compound. After complete dissolution, a polythiol composition (49.3 parts by mass) including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane as polythiol compounds, as main components, was added, and furthermore stirred for 30 minutes, thereby preparing a photocurable composition.

The photocurable composition obtained was filtered with a 3-μm PTFE filter, and degassed under vacuum with stirring for from 30 minutes to 60 minutes. The photocurable composition prepared was transferred to a glass mold having a thickness of 1.1 mm. Polymerization and curing of the photocurable composition were performed by light irradiation for 90 seconds (9.5 $mW/cm^2/s$ at 365 nm) and then heating in an oven at 120°C for 1 hour.

The results of the photocurability, the releasability, and the transparency are shown in Table 6.

(Example 4B to Example 11B)

(Production of Cured Product Including Resin B)

Tetrabutylammonium tri(1-naphthyl)butylborate (0.2 parts by mass, manufactured by Showa Denko K.K.) and an internal release agent in an amount shown in Table 6 were dissolved in a mixture (54.3 parts by mass) of 2,5-bis(isocyanatomethyl)bicyclo[2.2.1]heptane and 2,6-bis(isocyanatomethyl)bicyclo[2.2.1]heptane as polyisocyanate compounds. After complete dissolution, a polythiol composition (45.7 parts by mass) including 4-mercaptomethyl-1,8-dimercapto-3,6-dithiaoctane as a polythiol compound, as a main component, was added, and furthermore stirred for 30 minutes, thereby preparing a photocurable composition.

The photocurable composition obtained was filtered with a 3-μm PTFE filter, and degassed under vacuum with stirring for from 30 minutes to 60 minutes. The photocurable composition prepared was transferred to a glass mold having a thickness of 1.1 mm. Polymerization and curing of the photocurable composition were performed by light irradiation for 30 seconds (9.5 $mW/cm^2/s$ at 365 nm) and heating in an oven at 120°C for 2 hours.

The results of the photocurability, the releasability, and the transparency are shown in Table 6.

[Table 6]

| | Resin | Internal release agent | | Photocurability | Transparency | Releasability |
|---|---|---|---|---|---|---|
| | | Type | Amount (ppm) | | | |
| Example 2B | A | SH-3773M | 100 | A | A | A |

(continued)

| | Resin | Internal release agent | | Photocurability | Transparency | Releasability |
|---|---|---|---|---|---|---|
| | | Type | Amount (ppm) | | | |
| Example 3B | A | SH-3773M | 50 | A | A | A |
| Example 4B | B | SH-3773M | 500 | A | A | A |
| Example 5B | B | SH-3749 | 1000 | A | A | A |
| Example 6B | B | KF-351A | 1000 | A | A | A |
| Example 7B | B | KF-352A | 1000 | A | A | A |
| Example 8B | B | KF-615A | 1000 | A | A | A |
| Example 9B | B | KF-640 | 1000 | A | A | A |
| Example 10B | B | KF-640 | 2000 | A | A | A |
| Example 11B | B | KF-640 | 3000 | A | A | A |

In Table 6, the amount (ppm by mass) of the internal release agent is expressed by ppm by mass with respect to the total mass of the polyisocyanate compound and the polythiol composition.

The detail of the component described with respect to each item in Table 6 is as follows.

SH-3773M polyether-modified silicone compound (manufactured by Dow Chemical Japan Limited.), corresponding to a mixture of Formula (1) and Formula (2)
SH-3749 polyether-modified silicone compound (manufactured by Dow Chemical Japan Limited.), corresponding to a mixture of Formula (1) and Formula (2)
KF-351A polyether-modified silicone compound (manufactured by Shin-Etsu Chemical Co., Ltd.), corresponding to Formula (1)
KF-352A polyether-modified silicone compound (manufactured by Shin-Etsu Chemical Co., Ltd.), corresponding to Formula (1)
KF-615A polyether-modified silicone compound (manufactured by Shin-Etsu Chemical Co., Ltd.), corresponding to Formula (1)
KF-640 polyether-modified silicone compound (manufactured by Shin-Etsu Chemical Co., Ltd.), corresponding to Formula (1)

The detail of each internal release agent is shown in Table 7 below. In Table 7, EO represents ethylene oxide and PO represents propylene oxide, respectively.

[Table 7]

| | Internal release agent | GPC | | $^1$HNMR | | Mole fraction | |
|---|---|---|---|---|---|---|---|
| | | Content (% by mass) | Weight average molecular weight (Mw) | Silicone (% by mol) | Polyether (% by mol) | Silicone unit | Polyether unit |
| Example 2B | SH-3773M | 25 | 15000 | 44 | EO:56 | 0.44 | 0.56 |
| Example 3B | | 54 | 9000 | | | | |
| Example 4B | | 21 | 1700 | | | | |
| Example 5B | SH-3749 | 39 | 39000 | 12 | EO:47 | 0.12 | 0.88 |
| | | 61 | 3800 | | PO:41 | | |
| Example 6B | KF-351A | 54 | 5600 | 18 | EO:82 | 0.18 | 0.82 |
| | | 46 | 900 | | | | |

(continued)

| | Internal release agent | GPC | | ¹HNMR | | Mole fraction | |
|---|---|---|---|---|---|---|---|
| | | Content (% by mass) | Weight average molecular weight (Mw) | Silicone (% by mol) | Polyether (% by mol) | Silicone unit | Polyether unit |
| Example 7B | KF-352A | 56 | 35700 | 15 | EO:43 | 0.15 | 0.85 |
| | | 44 | 4500 | | PO:42 | | |
| Example 8B | KF-615A | 50 | 22200 | 16 | EO:62 | 0.16 | 0.84 |
| | | 17 | 9200 | | PO:22 | | |
| | | 33 | 3100 | | | | |
| Example 9B | KF-640 | 46 | 1700 | 30 | EO:70 | 0.30 | 0.70 |
| Example 10B | | 37 | 720 | | | | |
| Example 11B | | 17 | 350 | | | | |

As shown in Table 6, each of Examples in which the photocurable composition including the base generator (a), the polyiso(thio)cyanate compound (b), the polythiol compound (c), and the polyether-modified silicone compound (d) was used was excellent in all the photocurability, the transparency, and the releasability.

(Manufacturing of Laminated Body)

(Production of Photocurable Composition A)

Tetrabutylammonium tri(1-naphthyl)butylborate (0.3 parts by mass, manufactured by Showa Denko K.K.), dimethyltin dichloride(0.01 parts by mass, metal catalyst), and SH-3773M (0.05 parts by mass, internal release agent, manufactured by Dow Chemical Japan Limited.) were dissolved in xylylene diisocyanate (50.7 parts by mass) as a polyisocyanate compound. After complete dissolution, a polythiol composition (49.3 parts by mass) including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane as polythiol compounds, as main components, was added, and furthermore stirred for 30 minutes, thereby preparing a photocurable composition A.

The photocurable composition A obtained was filtered with a 3-μm PTFE filter, and degassed under vacuum with stirring for from 30 minutes to 60 minutes.

(Production of Lens Substrate)

-Curved Lens Substrate A-

An internal release agent, 0.1 parts by mass of "ZELEC UN" (acidic phosphate-based release agent as a product of Stepan Company), and 0.05 parts by mass of "VIOSORB583" (manufactured by KYODO CHEMICAL CO., LTD.) as an ultraviolet absorbent were dissolved in 40.7 parts by mass of xylylene diisocyanate as a polyisocyanate compound.

A mixed liquid was prepared by adding 49.3 parts by mass of a polythiol composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane as polythiol compounds, as main components, to the solution obtained.

The mixed liquid was charged with a solution in a polymerization solvent, obtained by dissolving 0.008 parts by mass of dimethyltin dichloride (manufactured by Tokyo Chemical Industry Co., Ltd.) as a polymerization catalyst and 10.0 parts by mass of xylylene diisocyanate as a polyisocyanate compound, and the resultant was stirred and mixed, thereby preparing a polymerizable composition.

The polymerizable composition obtained was filtered with a 3-μm PTFE filter, and degassed at 20°C under vacuum with stirring for from 30 minutes to 60 minutes.

The polymerizable composition degassed was injected between paired curved glass molds fixed with a tape.

Next, the paired curved glass molds between which the polymerizable composition was injected were loaded into an oven, and the temperature in the oven was gradually raised from room temperature to 120°C.

Subsequently, the content in the oven was cooled, the paired curved glass molds were taken out from the oven after cooling, then a resin molded article was removed from the paired curved glass molds, and thus a curved lens substrate A having a thickness of 5 mm was obtained.

-Flat Lens Substrate-

An internal release agent, 0.1 parts by mass of "ZELEC UN" (acidic phosphate-based release agent as a product of Stepan Company), was dissolved in 40.7 parts by mass of xylylene diisocyanate as a polyisocyanate compound.

A mixed liquid was prepared by adding 49.3 parts by mass of a polythiol composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1, 11-dimercapto-3,6,9-trithiaundecane as polythiol compounds, as main component, to the solution obtained.

The mixed liquid was charged with a solution in a polymerization solvent, obtained by dissolving 0.008 parts by mass of dimethyltin dichloride (manufactured by Tokyo Chemical Industry Co., Ltd.) as a polymerization catalyst and 10.0 parts by mass of xylylene diisocyanate as a polyisocyanate compound, and the resultant was stirred and mixed, thereby preparing a polymerizable composition.

The polymerizable composition obtained was filtered with a 3-μm PTFE filter, and degassed at 20°C under vacuum with stirring for from 30 minutes to 60 minutes.

The polymerizable composition after degassing was injected between paired flat glass molds fixed with a tape.

Next, the paired flat glass molds between which the polymerizable composition was injected were loaded into an oven, and the temperature in the oven was gradually raised from room temperature to 120°C.

Subsequently, the content in the oven was cooled, the paired flat glass molds were taken out from the oven after cooling, then a resin molded article was removed from the paired flat glass molds, and thus a flat lens substrate having a thickness of 2 mm was obtained.

(Example 12B)

A sufficient amount of the photocurable composition A was added to a curved glass mold. Next, a surface of the curved lens substrate A obtained above was treated with an alkali treatment or a plasma treatment.

Thereafter, the lens substrate A was stacked over the photocurable composition A, and the photocurable composition A was widely spread between the glass mold and the lens substrate A.

The circumference of a laminated structure formed by the lens substrate A, the photocurable composition A, and the glass mold was fixed with a tape.

The region between the glass mold and the lens substrate A can form, for example, a laminated body having a desired thickness in a range of from 100 μm to 300 μm.

Polymerization and curing of the photocurable composition were performed by light irradiation for 30 seconds (9.5 $mW/cm^2/s$ at 365 nm) and then heating in an oven at 90°C for 30 minutes.

A laminated body including the cured product after polymerization and curing, and the lens substrate A was detached from the glass mold, and annealed at 110°C for 1 hour.

The laminated body including the cured product after polymerization and curing, and the lens substrate A could be naturally released from the glass mold. An optical member excellent in transparency was obtained from the cured product.

(Example 13B)

A sufficient amount of the photocurable composition A was added to a curved glass mold having a Fresnel pattern. Next, the curved lens substrate A obtained above was stacked over the photocurable composition A, and the photocurable composition A was widely spread between the glass mold and the lens substrate.

The circumference of a laminated structure formed by the lens substrate A, the photocurable composition A, and the glass mold was fixed with a tape.

Polymerization and curing of the photocurable composition were performed by light irradiation from the glass mold side for 30 seconds (9.5 $mW/cm^2/s$ at 365 nm) and then heating in an oven at 90°C for 30 minutes.

A laminated body including the cured product after polymerization and curing, and the lens substrate A was detached from the glass mold, and annealed at 110°C for 1 hour.

The Fresnel pattern was transferred to the laminated body obtained.

The laminated body including the cured product after polymerization and curing, and the lens substrate A could be naturally released from the glass mold. An optical member excellent in transparency was obtained from the cured product.

(Example 14B)

A sufficient amount of the photocurable composition A was added to a flat mold having a microlens pattern. Next, the flat lens substrate obtained above was stacked over the photocurable composition A, and the photocurable composition A was widely spread between the mold and the lens substrate.

The circumference of a laminated structure formed by the lens substrate, the photocurable composition A, and the mold was fixed with a tape.

Polymerization and curing of the photocurable composition were performed by light irradiation from the lens substrate side for 30 seconds (9.5 $mW/cm^2/s$ at 365 nm) and then heating in an oven at 90°C for 30 minutes.

A laminated body including the cured product after polymerization and curing, and the lens substrate was detached from the mold, and annealed at 110°C for 1 hour.

The microlens pattern was transferred to the laminated body obtained. Pattern transferring performance was analyzed by laser microscopy and interferometer spectroscopy.

The laminated body including the cured product after polymerization and curing, and the lens substrate could be naturally released from the glass mold. An optical member excellent in transparency was obtained from the cured product.

(Production of Photocurable Composition B)

Tetrabutylammonium tri(1-naphthyl)butylborate (0.3 parts by mass, manufactured by Showa Denko K.K.) and KF-351A (0.1 parts by mass, internal release agent, manufactured by Shin-Etsu Chemical Co., Ltd.) were dissolved in a mixture (54.3 parts by mass) of 2,5-bis(isocyanatomethyl)bicyclo[2.2.1]heptane and 2,6-bis(isocyanatomethyl)bicyclo[2.2.1]heptane as polyisocyanate compounds. After complete dissolution, a polythiol composition (45.7 parts by mass) including 4-mercaptomethyl-1,8-dimercapto-3,6-dithiaoctane as a polythiol compound, as a main component, was added, and furthermore stirred for 30 minutes, thereby preparing a photocurable composition A.

The photocurable composition A obtained was filtered with a 3-μm PTFE filter, and degassed under vacuum with stirring for from 30 minutes to 60 minutes.

(Production of Lens Substrate)

-Curved Lens Substrate B-

An ultraviolet absorbent, 1.1 parts by mass of "TINUVIN PS" (manufactured by Ciba-Geigy), was dissolved in 100.0 parts by mass of bis(2,3-epithiopropyl)disulfide.

A mixed liquid was prepared by adding 9.0 parts by mass of a polythiol composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane as polythiol compounds, as main components, to the solution obtained.

The mixed liquid was charged with a solution in a polymerization solvent, obtained by dissolving 0.1 parts by mass of N,N-dicyclohexylmethylamine (manufactured by Tokyo Chemical Industry Co., Ltd.) as a polymerization catalyst and 0.02 parts by mass of N,N-dimethylcyclohexylamine (manufactured by Tokyo Chemical Industry Co., Ltd.) in 1.0 part by mass of a polythiol composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane as polythiol compounds, as main components, and the resultant was stirred and mixed, thereby preparing a polymerizable composition.

The polymerizable composition obtained was filtered with a 3-μm PTFE filter, and degassed at 20°C under vacuum with stirring for 10 minutes.

The polymerizable composition degassed was injected between paired curved glass molds fixed with a tape.

Next, the paired curved glass molds between which the polymerizable composition was injected were loaded into an oven, and the temperature in the oven was gradually raised from room temperature to 120°C.

Subsequently, the content in the oven was cooled, the paired curved glass molds were taken out from the oven after cooling, then a resin molded article was removed from the paired curved glass molds, and thus a curved lens substrate B having a thickness of 5 mm was obtained.

(Example 15B)

A sufficient amount of the photocurable composition B was added to a curved glass mold. Next, a surface of the curved lens substrate A obtained above was treated with an alkali treatment or a plasma treatment.
Thereafter, the lens substrate A was stacked over the photocurable composition B, and the photocurable composition B was widely spread between the glass mold and the lens substrate A.
The circumference of a laminated structure formed by the lens substrate A, the photocurable composition B, and the glass mold was fixed with a tape.
The region between the glass mold and the lens substrate A can form, for example, a laminated body having a desired thickness in a range of from 100 μm to 300 μm.
Polymerization and curing of the photocurable composition were performed by light irradiation for 60 seconds (9.5 $mW/cm^2/s$ at 365 nm) and then heating in an oven at 90°C for 30 minutes.
A laminated body including the cured product after polymerization and curing, and the lens substrate A was detached from the glass mold, and annealed at 120°C for 1 hour.
The laminated body including the cured product after polymerization and curing, and the lens substrate A could be naturally released from the glass mold. An optical member excellent in transparency was obtained from the cured product.

(Example 16B)

A sufficient amount of the photocurable composition B was added to a curved glass mold. Next, a surface of the curved lens substrate B obtained above was treated with an alkali treatment or a plasma treatment.
Thereafter, the lens substrate B was stacked over the photocurable composition B, and the photocurable composition B was widely spread between the glass mold and the lens substrate B.
The circumference of a laminated structure formed by the lens substrate B, the photocurable composition B, and the glass mold was fixed with a tape.
The region between the glass mold and the lens substrate B can form, for example, a laminated body having a desired thickness in a range of from 100 μm to 300 μm.
Polymerization and curing of the photocurable composition were performed by light irradiation for 60 seconds (9.5 $mW/cm^2/s$ at 365 nm) and then heating in an oven at 90°C for 30 minutes.
A laminated body including the cured product after polymerization and curing, and the lens substrate B was detached from the glass mold, and annealed at 120°C for 1 hour.
The laminated body including the cured product after polymerization and curing, and the lens substrate B could be naturally released from the glass mold. An optical member excellent in transparency was obtained from the cured product.
The following evaluations were performed in the following Examples and Comparative Examples.

[Photocurability]

The photocurability with respect to each of Examples and Comparative Examples was evaluated by the following method.
The photocurability was determined by irradiating the photocurable composition with UV by use of an UV CURING APPARATUS (UB012-0BM-60Hz manufactured by EYE GRAPHICS Co., Ltd.) and then evaluating the curability of the photocurable composition according to the following criteria.

[Evaluation Criteria]

A: the photocurable composition was solidified by polymerization and a cured product was obtained.
B: the photocurable composition was not solidified and no cured product was obtained.

[Releasability]

The releasability with respect to each of Examples and Comparative Examples was evaluated by the following method.
The releasability of the cured product in detachment of the cured product after polymerization, from the mold, was evaluated according to the following criteria.

A: the cured product could be detached without any damage on the cured product and any application of a large force to the cured product.

B: the cured product, although could be detached, was confirmed to be damaged, the cured product could be detached only by application of a large force, or the cured product could not be detached.

[Weather Resistance]

A flat resin plate having a thickness of 0.8 mm was used to perform a test under the following conditions with an ACCELERATED WEATHER RESISTANCE TESTER manufactured by Q-Lab Corporation.

Light source: UVA-340, strength: 0.5 $W/m^2$, test conditions: 50°C, 150 hours

The weather resistance was evaluated based on the average amount of change in yellow index before and after the test of three flat resin plates. A smaller amount of change in yellow index was evaluated to be more favorable in light resistance.

(Yellow Index)

The yellow index (ASTM E313-96) of each of flat resin plates having thicknesses of 0.8 mm and 2 mm was measured with a SPECTROPHOTOMETER CM-5 (manufactured by

KONICA MINOLTA, INC.).

[Haze]

The haze value of a flat resin plate having a thickness of 2 mm was measured with a TURBIDIMETER NDH2000 (manufactured by NIPPON DENSHOKU INDUSTRIES Co., Ltd.).

[Production of Flat Resin Plate]

Tetrabutylammonium tri(1-naphthyl)butylborate (0.3 parts by mass, manufactured by Showa Denko K.K.), dimethyltin dichloride (0.01 parts by mass, metal catalyst, manufactured by Tokyo Chemical Industry Co., Ltd.), SH-3773M (0.05 parts by mass, internal release agent, manufactured by Dow Chemical Japan Limited.), and an ultraviolet absorbent described in Table 8 were dissolved in xylylene diisocyanate (50.7 parts by mass) as a polyisocyanate compound.

After complete dissolution, a polythiol composition (49.3 parts by mass) including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane as polythiol compounds, as main components, was added, and furthermore stirred for 30 minutes, thereby preparing a photocurable composition.

The photocurable composition obtained was filtered with a 3-μm PTFE filter, and degassed under vacuum with stirring for from 30 minutes to 60 minutes.

The photocurable composition degassed was injected between paired flat glass molds fixed with a tape.

Polymerization and curing of the photocurable composition were performed by irradiation of the glass molds with light for from 60 to 180 seconds (9.5 mW/cm2/s at 365 nm) and then heating in an oven at 120°C for 2 hours.

Subsequently, the content in the oven was cooled, the paired flat glass molds were taken out from the oven after cooling, then a resin molded article was removed from the paired flat glass molds, and thus each of flat resin plates having thicknesses of 0.8 mm and 2 mm was obtained.

[Table 8]

| | Ultraviolet absorbent 1 | (ppm) | Ultraviolet absorbent 2 | (ppm) | Photocurability | Releasability | Weather resistance ΔYI | Yellow index | | Haze Thickness 2 mm |
|---|---|---|---|---|---|---|---|---|---|---|
| | | | | | | | Thickness 0.8 mm | Thickness 0.8 mm | Thickness 2 mm | |
| Example 1C | HOSTAVIN PR-25 | 2000 | - | - | A | A | 3.8 | 0.92 | 1.3 | 0.5 |
| Example 2C | HOSTAVIN PR-25 | 8000 | - | - | A | A | 3.0 | 0.97 | 1.63 | 0.19 |
| Example 3C | HOSTAVIN VSU | 2000 | - | - | A | A | 5.0 | 0.99 | 1.7 | 0.3 |
| Example 4C | TINUVIN 405 | 2000 | - | - | A | A | 3.0 | 3.02 | 4.4 | 0.4 |
| Example 5C | TINUVIN 1600 | 2000 | - | - | A | A | 2.1 | 3.51 | 7.4 | 0.3 |
| Example 6C | TINUVIN 234 | 1000 | - | - | A | A | 4.3 | 1.41 | 2.83 | 0.25 |
| Example 7C | TINUVIN 328 | 1000 | - | - | A | A | 3.4 | 1.59 | 3.34 | 0.18 |
| Example 8C | HOSTAVIN PR-25 | 2000 | TINUVIN 328 | 500 | A | A | 4.2 | 1.26 | 2.44 | 0.19 |

In Table 8, the amount (ppm by mass) of the ultraviolet absorbent is expressed by ppm by mass with respect to the total mass of the polyisocyanate compound and the polythiol compound.

As shown in Table 8, Examples including the ultraviolet absorbent (e) being at least one selected from the group consisting of compounds represented by Formula (e-1) to Formula (e-4) exhibited small values of ΔYI and YI. Therefore, it was indicated that weather resistance was excellent.

The disclosures of Japanese Patent Application No. 2021-169814, filed October 15, 2021, and Japanese Patent Application No. 2022-125863, filed August 5, 2022, are incorporated herein by reference in their entirety.

All publications, patent applications, and technical standards mentioned in this specification are herein incorporated by reference to the same extent as if each individual publication, patent application, or technical standard was specifically and individually indicated to be incorporated by reference.

## Claims

**1.** A photocurable composition, comprising:

a base generator (a);
a polyiso(thio)cyanate compound (b); and
a polythiol compound (c), wherein:

the base generator (a) comprises at least one selected from the group consisting of compounds represented by the following Formulae (1) to (4), and
the polyiso(thio)cyanate compound (b) comprises at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate:

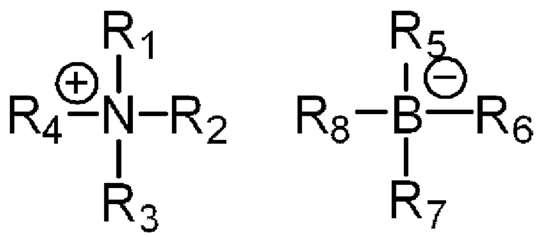

(1)

wherein, in Formula (1), each of $R_1$ to $R_4$ independently represents an alkyl group having from 1 to 8 carbon atoms, each of $R_5$ to $R_8$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group:

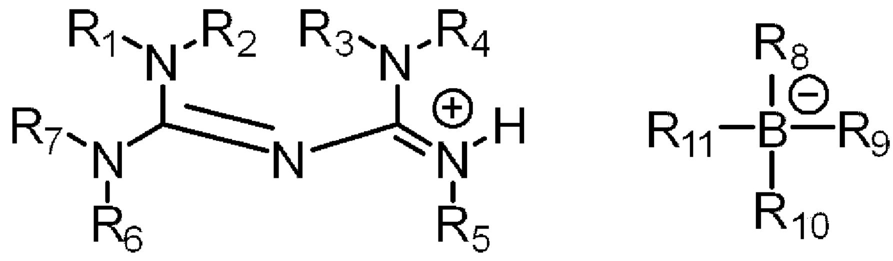

(2)

wherein, in Formula (2), each of $R_1$ to $R_7$ independently represents an alkyl group having from 1 to 8 carbon atoms or a cycloalkyl group having from 3 to 8 carbon atoms, each of $R_8$ to Rn independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group:

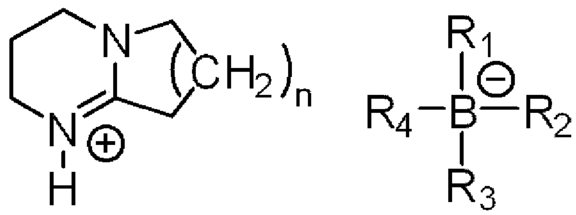

(3)

wherein, in Formula (3), n represents an integer from 1 to 3, each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group, and:

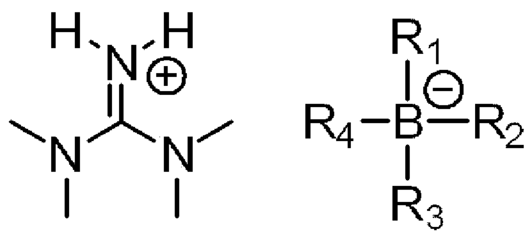

(4)

wherein, in Formula (4), each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

**2.** The photocurable composition according to claim 1, further comprising an episulfide compound (f) represented by the following Formula (5):

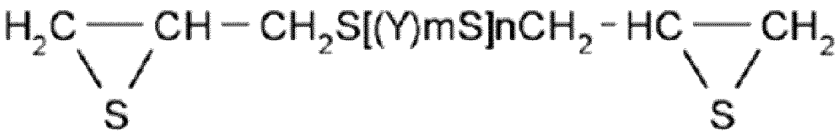

(5)

wherein, in Formula (5), Y represents a linear divalent hydrocarbon group having from 1 to 4 carbon atoms, a branched divalent hydrocarbon group having from 2 to 4 carbon atoms, a cyclic divalent hydrocarbon group having from 3 to 6 carbon atoms, a 1,4-dithiane group, an arylene group, or an aralkylene group, m represents an integer from 0 to 2, and n represents an integer from 0 to 3.

**3.** The photocurable composition according to claim 2, wherein a refractive index of a sodium D-line at 20°C, of each of the polythiol compound (c) and the episulfide compound (f), is from 1.60 to 1.80.

**4.** The photocurable composition according to claim 2, wherein the episulfide compound (f) comprises at least one selected from the group consisting of bis(2,3-epithiopropyl)sulfide, bis(2,3-epithiopropyl)disulfide, and 2,5-bis(2,3-epithiopropylthiomethyl)-1,4-dithiane.

**5.** The photocurable composition according to claim 1, further comprising an ultraviolet absorbent (e) which is at least one selected from the group consisting of compounds represented by the following Formulae (e-1) to (e-4):

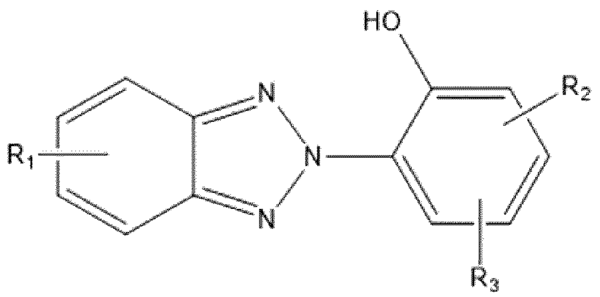

(e − 1)

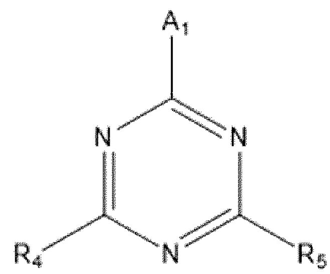

(e − 2)

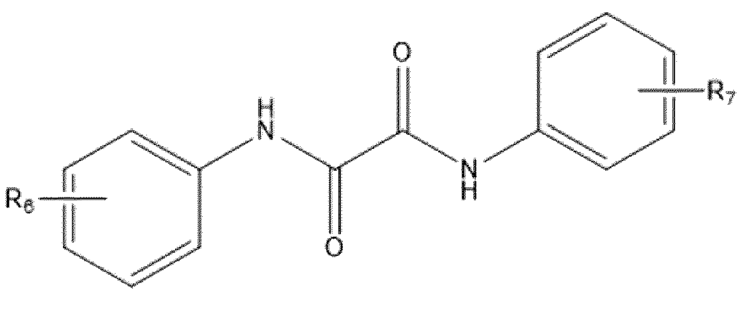

(e − 3)

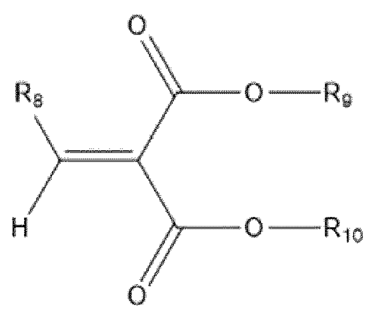

(e − 4)

wherein, in Formula (e-1), $R_1$ represents a hydrogen atom or a chlorine atom, and each of $R_2$ and $R_3$ independently represents a substituted or unsubstituted, linear or branched alkyl group having from 1 to 12 carbon atoms, or an aromatic group or heteroaromatic group having from 4 to 12 carbon atoms,

wherein, in Formula (e-2), $A_1$ represents a structure represented by the following Formula (e-2a), and each of $R_4$ and $R_5$ independently represents a structure represented by the following Formula (e-2b),
wherein, in Formula (e-3), each of $R_6$ and $R_7$ independently represents a linear or branched alkyl group having from 1 to 6 carbon atoms, or a linear or branched alkoxy group having from 1 to 6 carbon atoms,
wherein, in Formula (e-4), $R_8$ represents an optionally substituted aromatic group having from 6 to 20 carbon atoms, or an optionally substituted alicyclic group having from 5 to 20 carbon atoms, and
each of $R_9$ and $R_{10}$ independently represents a linear or branched alkyl group having from 1 to 6 carbon atoms:

A1=

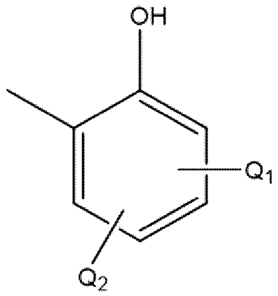

R4, R5 =

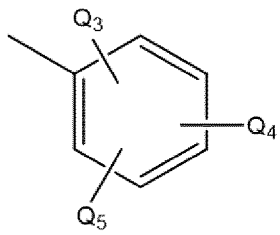

(e – 2 a) (e – 2 b)

wherein, in Formula (e-2a), each of $Q_1$ and $Q_2$ independently represents a linear or branched alkyl group having from 1 to 12 carbon atoms, a linear or branched alkoxy group having from 1 to 18 carbon atoms, halogen, or an aromatic group or heteroaromatic group having from 4 to 12 carbon atoms, and
wherein, in Formula (e-2b), each of $Q_3$, $Q_4$ and $Q_5$ independently represents a linear or branched alkyl group having from 1 to 12 carbon atoms, a linear or branched alkoxy group having from 1 to 18 carbon atoms, halogen, or an aromatic group or heteroaromatic group having from 4 to 12 carbon atoms.

**6.** A photocurable composition, comprising:

a base generator (a);
a polyiso(thio)cyanate compound (b);
a polythiol compound (c); and
a polyether-modified silicone compound (d).

**7.** The photocurable composition according to claim 6, wherein the polyether-modified silicone compound (d) comprises at least one selected from the group consisting of a polyether-modified silicone compound (d1) represented by the following Formula (1) and a polyether-modified silicone compound (d2) represented by the following Formula (2):

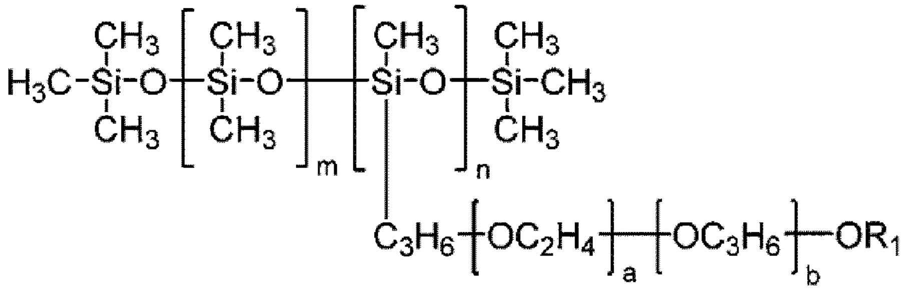

(1)

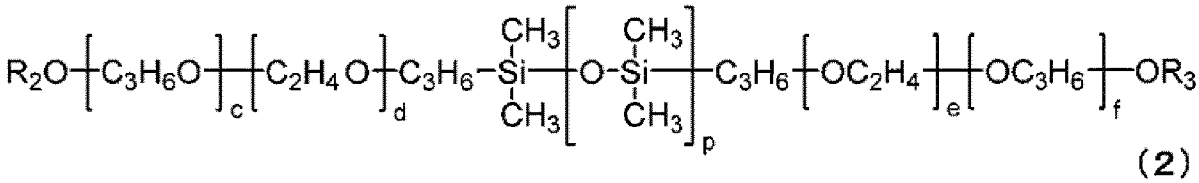

(2)

wherein, in Formula (1), each of m and n independently represents an integer of 1 or more, each of a and b independently represents an integer of 0 or more, barring a case in which both a and b represent 0, and $R_1$ represents a linear or branched alkyl group having from 1 to 6 carbon atoms, a linear or branched alkenyl group having from 2 to 10 carbon atoms, an acryloyl group, a methacryloyl group, or a hydrogen atom, and wherein, in Formula (2), p represents an integer of 1 or more, each of c, d, e, and f independently represents an integer of 0 or more, barring a case in which all of c, d, e and f represent 0, and each of $R_2$ and $R_3$ independently represents a linear or branched alkyl group having from 1 to 6 carbon atoms, a linear or branched alkenyl group having from 2 to 10 carbon atoms, an acryloyl group, a methacryloyl group, or a hydrogen atom.

**8.** The photocurable composition according to claim 6, wherein the base generator (a) comprises at least one selected from the group consisting of compounds represented by the following Formulae (a1) to (a4):

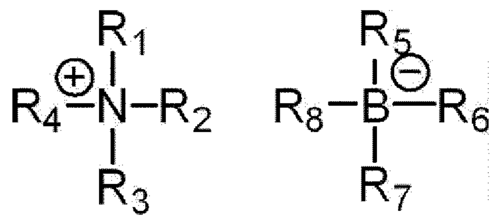

(a1)

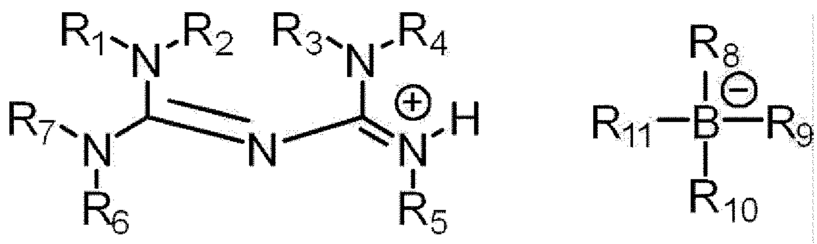

(a2)

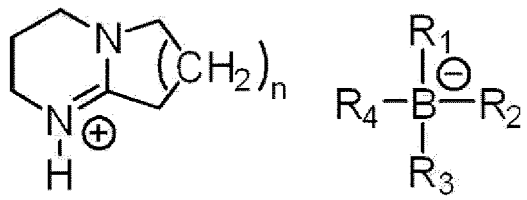

(a3)

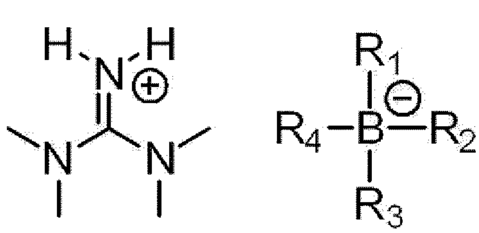

(a4)

wherein, in Formula (a1), each of $R_1$ to $R_4$ independently represents an alkyl group having from 1 to 8 carbon

atoms, each of $R_5$ to $R_8$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group,
wherein, in Formula (a2), each of $R_1$ to $R_7$ independently represents an alkyl group having from 1 to 8 carbon atoms or a cycloalkyl group having from 3 to 8 carbon atoms, each of $R_8$ to Rn independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group,
wherein, in Formula (a3), n represents an integer from 1 to 3, each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group, and
wherein, in Formula (a4), each of $R_1$ to $R_4$ independently represents an alkyl group having from 1 to 8 carbon atoms, a phenyl group, a naphthyl group, an anthracenyl group, or a phenanthryl group, and the phenyl group, the naphthyl group, the anthracenyl group, and the phenanthryl group are each optionally substituted with a halogen atom, an alkyl group, an aryl group, an alkenyl group, a cycloalkyl group, or a heterocyclic group.

**9.** The photocurable composition according to claim 6, further comprising an ultraviolet absorbent (e) which is at least one selected from the group consisting of compounds represented by the following Formulae (e-1) to (e-4):

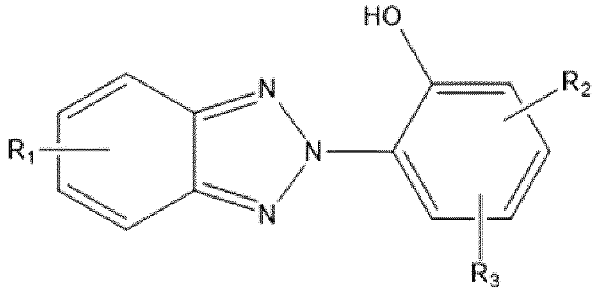

(e − 1)

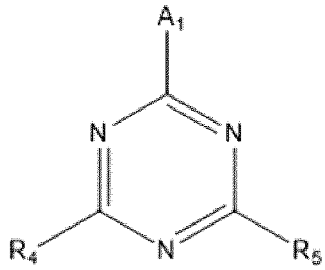

(e − 2)

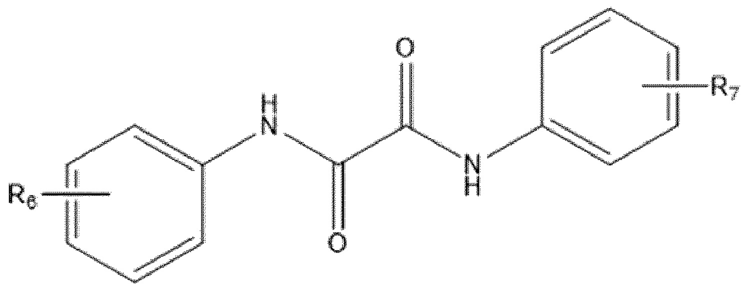

(e − 3)

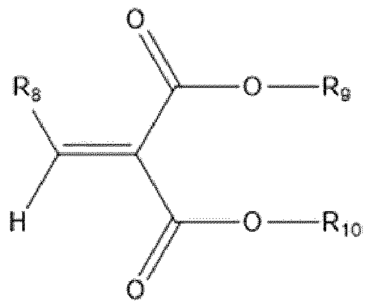

(e − 4)

wherein, in Formula (e-1), $R_1$ represents a hydrogen atom or a chlorine atom, and each of $R_2$ and $R_3$ independently represents a substituted or unsubstituted, linear or branched alkyl group having from 1 to 12 carbon atoms, or an aromatic group or heteroaromatic group having from 4 to 12 carbon atoms,
wherein, in Formula (e-2), $A_1$ represents a structure represented by the following Formula (e-2a), and each of $R_4$ and $R_5$ independently represents a structure represented by the following Formula (e-2b),

wherein, in Formula (e-3), each of $R_6$ and $R_7$ independently represents a linear or branched alkyl group having from 1 to 6 carbon atoms, or a linear or branched alkoxy group having from 1 to 6 carbon atoms,
wherein, in Formula (e-4), $R_8$ represents an optionally substituted aromatic group having from 6 to 20 carbon atoms, or an optionally substituted alicyclic group having from 5 to 20 carbon atoms, and
each of $R_9$ and $R_{10}$ independently represents a linear or branched alkyl group having from 1 to 6 carbon atoms:

A1=

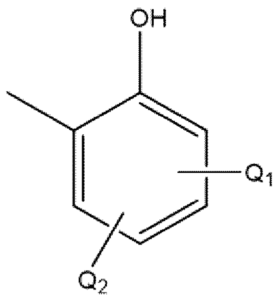

(e－2 a)

R4, R5 =

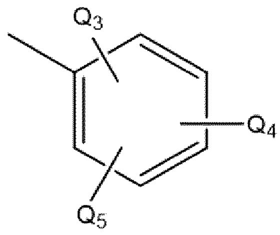

(e－2 b)

wherein, in Formula (e-2a), each of $Q_1$ and $Q_2$ independently represents a linear or branched alkyl group having from 1 to 12 carbon atoms, a linear or branched alkoxy group having from 1 to 18 carbon atoms, halogen, or an aromatic group or heteroaromatic group having from 4 to 12 carbon atoms, and
wherein, in Formula (e-2b), each of $Q_3$, $Q_4$ and $Q_5$ independently represents a linear or branched alkyl group having from 1 to 12 carbon atoms, a linear or branched alkoxy group having from 1 to 18 carbon atoms, halogen, or an aromatic group or heteroaromatic group having from 4 to 12 carbon atoms.

**10.** The photocurable composition according to claim 6, wherein the polyiso(thio)cyanate compound (b) comprises at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

**11.** The photocurable composition according to claim 1, wherein the polythiol compound (c) comprises at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, and tris(mercaptomethylthio)methane.

**12.** The photocurable composition according to claim 1, further comprising a photosensitizer.

**13.** The photocurable composition according to claim 1, further comprising a metal catalyst.

**14.** A cured product of the photocurable composition according to any one of claim 1 to claim 13.

**15.** A laminated body, comprising the cured product according to claim 14.

**16.** The laminated body according to claim 15, wherein the cured product is an adhesion layer.

**17.** The laminated body according to claim 15, wherein the cured product is a coating layer.

**18.** A method of producing a cured product, the method comprising a step of curing the photocurable composition according to any one of claim 1 to claim 13, by irradiation with ultraviolet light or visible light.

**19.** The method of producing a cured product according to claim 18, further comprising a step of curing the photocurable composition by placing the photocurable composition in a room temperature or heating environment after the irradiation.

**20.** A method of producing a lens having a laminated body structure, the method comprising a step of contacting the photocurable composition according to any one of claim 1 to claim 13 with a lens substrate and then curing the photocurable composition.

**21.** A method of producing a lens having a laminated body structure, the method comprising an in-mold molding step of producing a molded article using a mold, and the mold comprising, on a surface, a cured product of the photocurable composition according to any one of claim 1 to claim 13.

## INTERNATIONAL SEARCH REPORT

International application No.
**PCT/JP2022/038275**

**A. CLASSIFICATION OF SUBJECT MATTER**

***C08G 18/16***(2006.01)i; ***B29C 59/02***(2006.01)i; ***B32B 27/18***(2006.01)i; ***C08G 18/38***(2006.01)i; ***C08G 75/08***(2006.01)i; ***C08L 75/04***(2006.01)i; ***C08L 83/12***(2006.01)i; ***C09D 175/04***(2006.01)i; ***C09J 175/04***(2006.01)i; ***G02B 1/04***(2006.01)i; ***G02B 1/10***(2015.01)i; ***G02B 3/10***(2006.01)i; ***G02C 7/00***(2006.01)i; ***G02C 7/06***(2006.01)i
FI: C08G18/16; B29C59/02 Z; B32B27/18 Z; C08G18/38 076; C08G75/08; C08L75/04; C08L83/12; C09D175/04; C09J175/04; G02B1/04; G02B1/10; G02B3/10; G02C7/00; G02C7/06

According to International Patent Classification (IPC) or to both national classification and IPC

**B. FIELDS SEARCHED**

Minimum documentation searched (classification system followed by classification symbols)

C08G18/00-18/87; C08G75/00-75/32; C08L1/00-101/16; C08K3/00-13/08; C09D1/00-201/10; C09J1/00-201/10; B29C31/00-73/34; B32B1/00-43/00; G02B1/00-3/14; G02C7/00-7/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2003-535197 A (AKZO NOBEL N.V.) 25 November 2003 (2003-11-25)<br>claims, column "examples" (e.g., example 2 of the present invention), etc. | 1-5, 11-21<br>6–10 |
| X<br>A | US 2019/0127596 A1 (BOARD OF REGENTS, THE UNIVERSITY OF TEXAS SYSTEM) 02 May 2019 (2019-05-02)<br>claims, examples column, etc. | 1-5, 11-21<br>6–10 |
| X<br>A | US 2019/0300641 A1 (BOARD OF REGENTS, THE UNIVERSITY OF TEXAS SYSTEM) 03 October 2019 (2019-10-03)<br>claims, drawings, etc. | 1-5, 11-21<br>6–10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 December 2022** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**

International application No.
**PCT/JP2022/038275**

**C. DOCUMENTS CONSIDERED TO BE RELEVANT**

| Category* | Citation of document, with indication, where appropriate, of the relevant passages | Relevant to claim No. |
|---|---|---|
| X<br>A | SHIN, Junghwan et al., Properties of polythiourethanes prepared by thiol-isocyanate click reaction, Journal of Applied Polymer Science, 2018, vol. 135, no. 14, p. 46070 (1 of 8) to p. 46070 (8 of 8), ISSN: 0021-8995<br>Scheme 1., etc. | 1-5, 11-21<br>6–10 |
| X<br>A | SHIN, Junghwan et al., Thiol-Isocyanate-Ene Ternary Networks by Sequential and Simultaneous Thiol Click Reactions, Chemistry of Materials, 2010, vol. 22, no. 8, pp. 2616-2625, ISSN: 0897-4756<br>schemes 1-4, etc. | 1-5, 11-21<br>6–10 |
| A | JP 2014-62246 A (SANYO CHEMICAL INDUSTRIES, LTD.) 10 April 2014 (2014-04-10) | 1-21 |
| A | WO 2012/147709 A1 (MITSUBISHI GAS CHEMICAL COMPANY, INC.) 01 November 2012 (2012-11-01) | 1-21 |
| A | WO 03/089478 A1 (UNIVERSITY OF GEORGIA RESEARCH FOUNDATION, INC.) 30 October 2003 (2003-10-30) | 1-21 |
| A | WO 2020/230882 A1 (MITSUI CHEMICALS, INC.) 19 November 2020 (2020-11-19) | 1-21 |
| A | JP 2012-46711 A (SANYO CHEMICAL INDUSTRIES, LTD.) 08 March 2012 (2012-03-08) | 1-21 |
| A | JP 9-38998 A (MITSUI TOATSU CHEM INC.) 10 February 1997 (1997-02-10) | 1-21 |
| A | CN 106947057 A (INSIGHT HIGH TECHNOLOGY (BEIJING) CO., LTD.) 14 July 2017 (2017-07-14) | 1-21 |

Form PCT/ISA/210 (second sheet) (January 2015)

**INTERNATIONAL SEARCH REPORT**

International application No.
**PCT/JP2022/038275**

**Box No. III Observations where unity of invention is lacking (Continuation of item 3 of first sheet)**

This International Searching Authority found multiple inventions in this international application, as follows:

The inventions in claims 1-5, 11-21 (first invention) and the inventions in claims 6-10 (second invention) share the following features.
<1> The feature of being a "photocurable composition"
<2> The feature of the "composition" containing a "base generator"
<3> The feature of the "composition" containing a "polyiso(thio) cyanate compound"
<4> The feature of the "composition" containing a "polythiol compound"

However, these features <1> to <4> are already well known (*). Thus, such shared features cannot be said to be special technical features, and therefore the first invention and the second invention do not have identical or corresponding special technical features.

Furthermore, the second invention is not an invention in the same category that includes all matters specifying the invention of claim 1.

The second invention has the effect of "mold release characteristics", for example, whereas the first invention is unrelated to such effects. Based on this finding, it cannot be said that the two inventions are substantially identical to or similarly related to each other.

[*] The following document has been referred to with regard to this matter, for example.
Reference document: CN 106947057 A (INSIGHT HIGH TECHNOLOGY (BEIJING) CO., LTD.)
14 July 2017 (2017-07-14), claims, etc. (Family: none)

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

**INTERNATIONAL SEARCH REPORT**
**Information on patent family members**

International application No.
**PCT/JP2022/038275**

| Patent document cited in search report | Publication date (day/month/year) | Patent family member(s) | Publication date (day/month/year) |
|---|---|---|---|
| JP 2003-535197 A | 25 November 2003 | US 2002/0032248 A1<br>claims, examples column (e.g., example 2)<br>WO 2001/092362 A1 | |
| US 2019/0127596 A1 | 02 May 2019 | US 2022/0243078 A1 | |
| US 2019/0300641 A1 | 03 October 2019 | WO 2018/038869 A1 | |
| JP 2014-62246 A | 10 April 2014 | (Family: none) | |
| WO 2012/147709 A1 | 01 November 2012 | CN 103562272 A<br>TW 201305249 A | |
| WO 03/089478 A1 | 30 October 2003 | US 2005/0203200 A1 | |
| WO 2020/230882 A1 | 19 November 2020 | US 2022/0213256 A1<br>EP 3971225 A1 | |
| JP 2012-46711 A | 08 March 2012 | (Family: none) | |
| JP 9-38998 A | 10 February 1997 | JP 64-45611 A<br>US 5753730 A<br>EP 271839 A2 | |
| CN 106947057 A | 14 July 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014208656 A
- JP 2017528394 A
- WO 2020070253 A
- WO 2020095575 A
- WO 2005014696 A
- WO 2018164194 A
- WO 2011055540 A
- WO 2016125736 A
- US 20170131567 A
- WO 2019166653 A
- WO 2020078964 A
- JP 2021169814 A
- JP 2022125863 A